(19) Europäisches Patentamt
European Patent Office
Office européen des brevets

(11) **EP 4 331 710 A1**

(12) **EUROPEAN PATENT APPLICATION**
published in accordance with Art. 153(4) EPC

(43) Date of publication:
**06.03.2024   Bulletin 2024/10**

(21) Application number: **22795911.1**

(22) Date of filing: **28.04.2022**

(51) International Patent Classification (IPC):
**B01D 61/46** (2006.01)      **C08J 5/22** (2006.01)
**B01J 39/04** (2017.01)      **B01J 39/05** (2017.01)
**B01J 39/19** (2017.01)      **B01J 39/20** (2006.01)
**B01J 41/04** (2017.01)      **B01J 41/05** (2017.01)
**B01J 41/13** (2017.01)      **B01J 41/14** (2006.01)
**B01J 47/12** (2017.01)      **C25B 13/02** (2006.01)
**C25B 13/08** (2006.01)

(52) Cooperative Patent Classification (CPC):
**B01D 61/46; B01J 39/04; B01J 39/05; B01J 39/19;
B01J 39/20; B01J 41/04; B01J 41/05; B01J 41/13;
B01J 41/14; B01J 47/12; C08J 5/22; C25B 13/02;
C25B 13/08**

(86) International application number:
**PCT/JP2022/019415**

(87) International publication number:
**WO 2022/230998 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2021   JP 2021078122
30.04.2021   JP 2021078148**

(71) Applicant: **Yamaguchi University
Yamaguchi 753-8511 (JP)**

(72) Inventor: **HIGA, Mitsuru
Ube-shi, Yamaguchi 755-8611 (JP)**

(74) Representative: **Hamer, Christopher K. et al
Mathys & Squire
The Shard
32 London Bridge Street
London SE1 9SG (GB)**

(54) **ION EXCHANGE MEMBRANE, METHOD FOR MANUFACTURING ION EXCHANGE MEMBRANE, AND ION EXCHANGE MEMBRANE CELL**

(57)    A problem to be solved by the present invention is to provide an ion exchange membrane that can increase the surface area of a membrane effective for ion permeation, properly decreases the electric resistance of a flow passage between membranes and the attachment of a contaminating substance thereto, also enhances the mechanical strength of the membrane itself, and further, is less deformed or damaged due to swelling over a wide range of salt concentrations and even if there is a large difference in salt concentration between two solutions contacted with the membrane. The present invention provides an ion exchange membrane having a concavo-convex shape, wherein the ion exchange membrane has a flat portion in the vicinity of ends, and a convex curve and a concave curve resulting from curvatures of the ion exchange membrane itself form a convex part and a concave parts, respectively, in the concavo-convex shape of the ion exchange membrane, wherein the convex part extends linearly or curvedly, the concave part between the convex parts is flat, the concave part includes a first concave part adjacent to the convex part in the lateral direction of the convex part, along the longitudinal direction of the convex part, the convex part has an apex and a side face in the longitudinal direction, and the side face is inclined from the apex toward the first concave part.

[Fig. 44]

(a)

(b)

**Description**

**Technical Field**

The present invention relates to an ion exchange membrane having a concavo-convex shape, a method for manufacturing the ion exchange membrane, and an ion exchange membrane cell using the ion exchange membrane.

**Background Art**

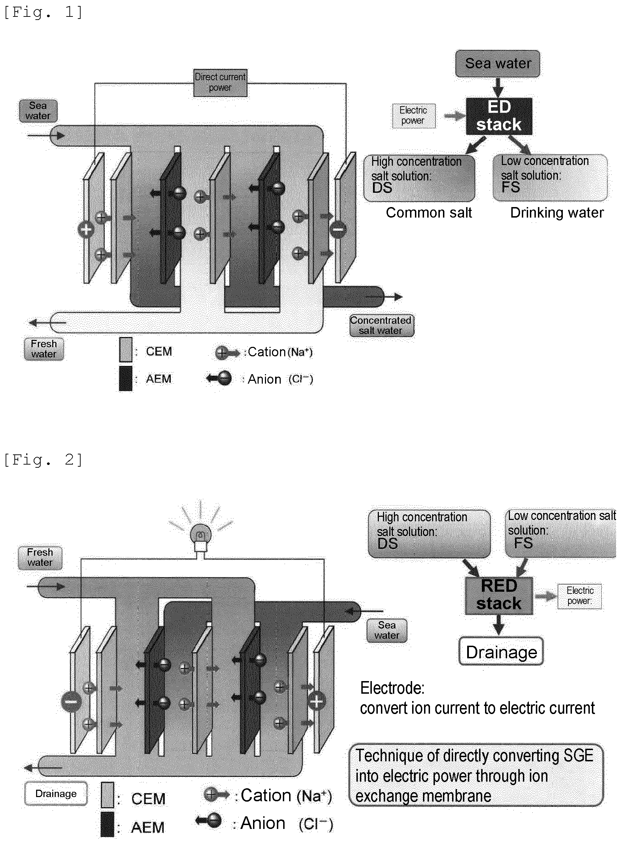

The promotion of utilization of renewable energies has been demanded in recent years. There is a technique of converting salinity gradient energy (SGE) present between two salt waters differing in salinity, such as sea water and river water, as one of the renewable energies to electric power. This SGE has the advantages of a high operating rate and a small footprint as compared with solar power generation or wind power generation, and may be utilized as a baseload power supply. Power generation that exploits SGE includes pressure retarded osmosis (PRO) using semipermeable membranes, and reverse electro-dialysis (RED) power generation using ion exchange membranes. The RED power generation is reportedly superior to PRO when salt water of a sea water level is used. The RED power generation employs a cation exchange membrane (CEM) and an anion exchange membrane (AEM). CEM is characterized by being selectively permeated by cations, while AEM is characterized by being selectively permeated by anions. First, electro-dialysis (ED), an original technique of RED, will be described. In this ED, a pair of cells constituted by CEM, a flow passage on the high concentration side, AEM, and a flow passage on the low concentration side are provided, and a stack is used in which hundreds of such pairs of cells are laminated between two electrodes. When salt water such as sea water is supplied to this stack and direct current voltage is applied to the electrodes, cations move to the negative electrode side while anions move to the positive electrode side. The cations pass through CEM and cannot pass through AEM, and the anions pass through AEM and cannot pass through CEM. Therefore, concentrated salt water and desalted water are obtained in this apparatus. This is the principle of ED (Figure 1). On the other hand, the RED power generation has a reverse process of this ED. When water with a high salt concentration and water with a low salt concentration are supplied to this stack, electric power is obtained (Figure 2). In short, the RED power generation is a technique of directly converting SGE to direct current power. Voltage generated in the RED power generation is proportional to the natural logarithm of a concentration ratio between the high concentration side to which water with a high salt concentration is supplied and the low concentration side to which water with a low salt concentration is supplied. Also in the RED power generation, a pair of cells constituted by CEM, a flow passage on the high concentration side, AEM, and a flow passage on the low concentration side are provided, and a stack is used in which hundreds of such pairs of cells are laminated between two electrodes. The resistance of the cell is the total resistance of the CEM, the flow passage on the high concentration side, the AEM, and the flow passage on the low concentration side. Among them, the flow passage on the low concentration side which has a low salt concentration has the highest electric resistance. The electric resistance of the flow passage on the low concentration side is decreased by narrowing the height of the flow passage on the low concentration side, i.e., the interval between the CEM and the AEM. However, the narrowing of this interval presents the following problems: membrane pollutants contained in salt water on the low concentration side block the flow passage, drastically decreasing power output; and net generated electric power which is determined by subtracting pump dynamic electric power from RED power output is decreased because a pressure for supplying salt water on the low concentration side to the stack is elevated to increase pump energy.

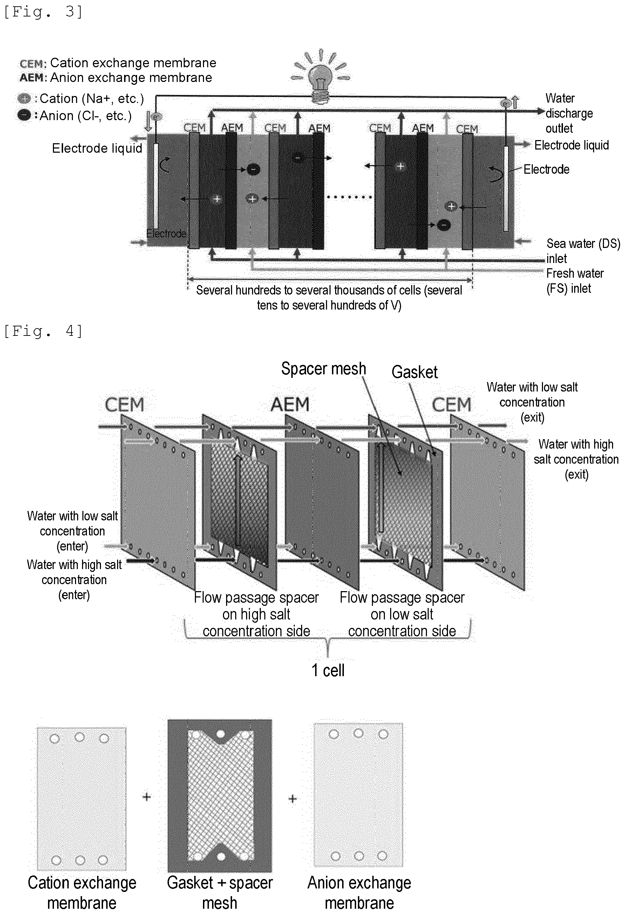

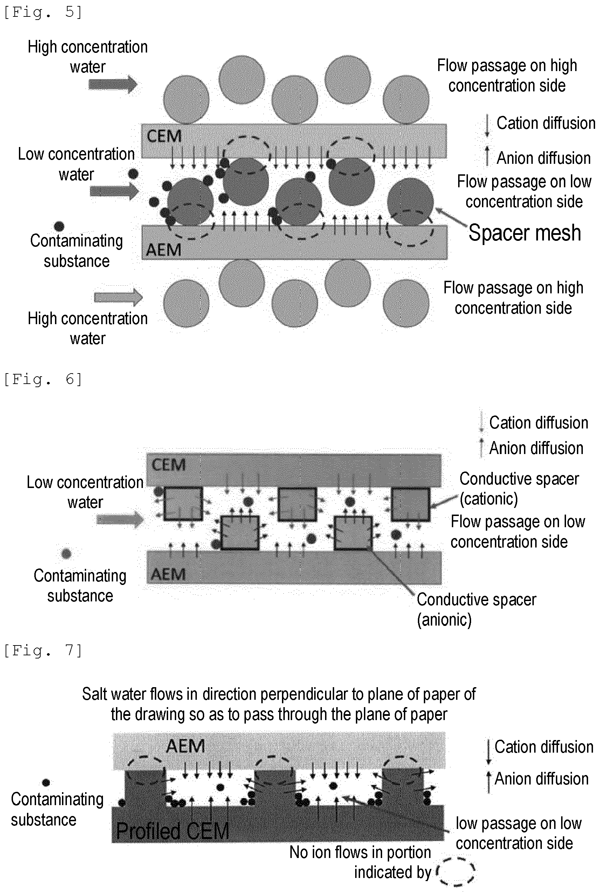

In ED and RED power generation apparatuses, as shown in Figure 3, a pair of cells constituted by CEM, a flow passage on the high concentration side, AEM, and a flow passage on the low concentration side are provided, and a stack serves as a major constituent in which hundreds of such pairs are laminated between two electrodes. This cell is conventionally provided, as shown in Figure 4, with a flow passage spacer on the high concentration side and a flow passage spacer on the low concentration side between CEM and AEM. Each spacer is constituted by a rubber gasket and a spacer mesh. Water with a high salt concentration and water with a low salt concentration flow from the upstream side through a water feed hole made in each membrane. In the meantime, a portion thereof flows from a cutout (flow distribution hole) made in a gasket to a predetermined spacer mesh and flows to a downstream water feed hole. Owing to this a structure, high concentration salt water and low concentration salt water are uniformly supplied to their respective flow passages even in thousands of pairs. Figure 5 shows a lateral view of flow in a cell. Here, the case of RED will be described. In this drawing, high concentration salt water and low concentration salt water flow in a left-to-right direction. Cations and anions are diffused from the high concentration side to the low concentration side through a concentration gradient. As shown in Figure 5, since the spacer mesh is nonconductive and impervious to ions, the diffusion is inhibited in the neighborhood of portions in contact with the membranes (portions of dotted circles) to decrease an effective membrane area in which ions are diffused. Therefore, the electric resistance of the flow passage on the low concentration side becomes higher than that of a salt solution alone. The spacer mesh is prepared from a hydrophobic polymeric material such as polyethylene (PE) or polypropylene (PP) and therefore facilitates the attachment and aggregation of humin, inorganic particles, and the like contained in water with a low salt concentration (sewage treatment water, river water, etc.). Hence, as the interval between CEM and AEM, particularly, in this flow passage, is narrowed, these substances are aggregated and hinder water flow, leading to drastic decrease in power output. Thus, it has been difficult for conventional cells to narrow the interval between CEM and AEM in the flow passage on the low concentration side (see patent document 1).

Accordingly, a method using a conductive spacer has been proposed as a method for solving the problem described above (Figure 6). The conductive spacer refers to a spacer having cation exchange ability and anion exchange ability imparted to the spacer itself. As shown in Figure 6, the electric resistance of the flow passage on the low concentration side is reduced because of an increased effective membrane area in which ions are diffused. Since the spacer has ionicity and is hydrophilic, the attachment of a contaminating substance is unlikely to occur. A method for preparing the conductive spacer includes a method of cutting an ion exchange membrane, and a method of conferring ion exchange ability by performing electron beam irradiation or the like to a nonconductive spacer such as PE, and thereby grafting charged monomers. However, both the methods find difficulty in increasing an area due to low mechanical strength of the spacer portion and high cost of preparation (see patent document 2).

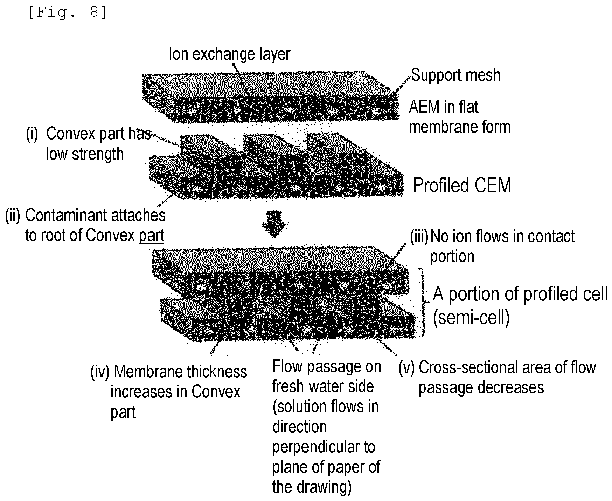

A method using a profiled membrane has been proposed as another method for solving the problem described above (see non-patent documents 1 to 3). The profiled membrane and the conductive spacer differ in that an ion exchange membrane and a spacer are separated for the conductive spacer, whereas a spacer and a membrane are integrated and both made of the same material for the profiled membrane. Figures 7 and 8 each show a schematic view of the profiled membrane. In the case of the profiled membrane, an effective membrane area may be larger than that of a conventional cell. Nonetheless, electric resistance does not become smaller than that of the conductive spacer because ions do not flow in portions indicated by dotted circles in Figure 7 (cations cannot pass through the AEM portion, and anions cannot pass through the CEM portion). A structure having the same material and different thicknesses (a structure where convex parts and other portions differ in thickness) differs in change in dimension due to swelling between portions having different thicknesses, and is therefore easily deformed or ruptured when the ion exchange membrane is immersed in salt water. Thus, increase in area is difficult, and cost is high. Figure 8 shows an example in which a profiled membrane is prepared with an inhomogeneous ion exchange membrane formed by kneading a powder of an ion exchange resin into a binder resin (PVC, etc.). As described above, the first problem of the conventional profiled membrane is as follows: between a convex cation exchange membrane (CEM) and an anion exchange membrane (AEM) opposed to each other, the planes of apexes having almost the same cross-sectional area as that of root portions of convex parts (columnar portions, etc.) of CEM cover the membrane surface of AEM opposed thereto; thus, an effective membrane area to be passed by ion current is apparently decreased, leading to increase in resistance which results in reduction in treatment efficiency in ED or generated electric power in RED. The second problem is as follows: due to a structure where convex parts disposed in a flat ion exchange membrane increase the thickness of the membrane and bulge in a columnar shape, the average thickness of the membrane is larger than that of an ion exchange membrane in a flat membrane form, elevating the average electric resistance of the whole membrane. The third problem is as follows: upper faces of convex parts cover the membrane surface, and solution flow is slow in the upper face portions and root portions of the convex parts, easily causing attachment of contaminants to these portions. The fourth problem is as follows: this membrane has, as mentioned above, a structure that bulges in a columnar shape from a planate membrane; thus, in this structure, a difference in degree of swelling occurs between convex portions and flat membrane portions when the whole membrane swells, and furthermore, since the convex portions have no structure reinforced by a support, the convex portions are easily deteriorated (cracked), are susceptible to stress concentration, particularly, at their roots, are easily damaged, and also cause difficulties in the mechanical strength of the membrane itself. Besides, deformation or damage occurs due to swelling over a wide range of salt concentrations, and when there is a large difference in salt concentration between two solutions contacted with the membrane. The fifth problem is as follows: the presence of columnar convex parts disposed in CEM decreases the cross-sectional area of a flow passage between CEM and AEM membranes opposed to each other, leading to a loss of dynamic power because a higher pressure is required for supplying the same amount of a solution as that in the case where both of these ion exchange membranes are flat membranes.

From another point of view, the first problem is as follows: due to a structure where convex parts disposed in a flat ion exchange membrane increase the thickness of the membrane and bulge in a columnar shape, a difference in degree of swelling occurs between convex portions and flat membrane portions when the whole membrane swells, and furthermore, since the convex portions have no structure reinforced by a support, the convex portions in this structure are easily deteriorated (cracked), are susceptible to stress concentration, particularly, at their roots, are easily damaged, and also cause difficulties in physical strength. The second problem is as follows: the planes of apexes of convex parts (columnar portions, etc.) in one ion exchange membrane cover the membrane surface of the other ion exchange membrane that is opposed thereto and differs in polarity therefrom; thus, an effective membrane area to be passed by ion current is apparently decreased, leading to increase in resistance which results in reduction in treatment efficiency in ED or generated electric power in RED. The third problem is as follows: this membrane has, as mentioned above, a structure that bulges in a columnar shape from a planate membrane; thus, the average thickness of the membrane is larger than that of an ion exchange membrane in a flat membrane form, elevating the average electric resistance of the whole membrane. The fourth problem is as follows: the presence of columnar convex parts disposed in one ion exchange membrane decreases the cross-sectional area of a flow passage between this membrane and the other ion exchange membrane opposed to each other, leading to a loss of dynamic power because a higher pressure is required for supplying the same amount of a solution as that in the case where both of these ion exchange membranes are flat membranes. The fifth problem is as follows: upper faces of convex parts cover the membrane surface, and columnar portions become obstacles that decrease an effective membrane surface area in which water flows on the low salt concentration side, easily causing attachment of contaminants, particularly, to their root portions.

**Prior Art Documents**

**Patent Documents**

Patent document 1: Japanese unexamined Patent Application Publication No. 2014-14776
Patent document 2: Japanese unexamined Patent Application Publication No. 2006-175408

**Non-patent Documents**

Non-patent document 1: Vermaas et al. J. Membr. Sci., 385-386 (2011) 234-242
Non-patent document 2: Pawlowski et al. J. Membr. Sci., 531 (2017) 111-121
Non-patent document 3: Pawlowski et al. Int. J. Mol. Sci., 2019, 20, 165

**Summary of the Invention**

**Object to be Solved by the Invention**

An object to be solved by the present invention is to provide an ion exchange membrane that can increase the surface area of a membrane effective for ion permeation, properly decreases average electric resistance of the membrane and the attachment of a contaminating substance, and in addition, is less deformed or damaged due to swelling over a wide range of salt concentrations and even if there is a large difference in salt concentration between two solutions contacted with the membrane. A further object to be solved by the present invention is to provide an ion exchange membrane that enhances the mechanical strength of the membrane itself. A further object to be solved by the present invention is to provide an ion exchange membrane cell that can properly decrease electric resistance and the attachment of an adhering substance in a solution flow passage between a cation exchange membrane and an anion exchange membrane opposed to each other.

**Means to Solve the Object**

The present inventor had started to study an ion exchange membrane that can increase an effective membrane area to be permeated by ions, for example, when an ED or RED power generation apparatus is used, and can also suppress the attachment of a contaminant in a salt solution. The present inventor had initially studied a structure with an increased membrane thickness of convex parts, as in previous reports. However, in general, an ion exchange membrane swells in a salt solution having a low salinity and shrinks in salt water having a high salinity. This causes a difference in degree of swelling between convex parts and portions other than the convex parts, and causes deformation such as the bending of the whole membrane. The operation of an ED or RED apparatus using this membrane might be disrupted. Most of the previously reported ion exchange membranes having a corrugated structure are prevented from being deformed due to membrane swelling, by placing a mesh, a woven fabric, or a nonwoven fabric serving as a support material, or a support such as a porous film in a membrane body portion, as shown in Figure 8. Convex parts present on a partial surface of the membrane body have no such support structure. This causes a difference in degree of swelling between the membrane body and the convex parts. This might damage joints between the convex parts and the membrane body portion.

The present inventor has pursued studies by focusing on the shape of an ion exchange membrane and a manufacturing process thereof, and consequently found that an ion exchange membrane having intended characteristics can be obtained by curving the ion exchange membrane itself to form irregularities. Specifically, the ion exchange membrane itself was curved, for example, curved so as to form ridges and grooves, and these curves were used as convex parts and concave parts. As a result, unexpectedly, an ion exchange membrane having a concavo-convex shape was obtained which had an almost constant membrane thickness and was suitable for increasing an effective membrane area and suppressing the attachment of a contaminant. This ion exchange membrane having such a shape can be obtained by a simple method of pressing a planate ion exchange membrane or a precursor membrane of the ion exchange membrane using a mold. In the case of forming convex parts in a planate ion exchange membrane, a conventionally performed method involves stacking a material on the planate membrane to increase the thickness of a site where the convex parts are to be formed so that the convex parts have a bulging shape. It has heretofore been totally unknown that the characteristics described above can be obtained by curving the membrane itself to form irregularities. Furthermore, according to this method, a material for use in conventional ion exchange membranes can be used because the characteristics are obtained from the shape of irregularities. The present inventor has further found that in order to enhance the physical strength and shape stability of an ion exchange membrane, the ion exchange membrane is prepared by curving a nonporous base material or a porous base material to form irregularities, followed by graft polymerization or thermal polymerization to thereby introduce a charged group. The ion exchange membrane thus obtained is suitable for use in ED or RED power generation, though the use purpose is not limited thereto. In this way, the present invention has been completed.

Specifically, the present invention is defined by the following items.

(1) An ion exchange membrane having a concavo-convex shape, wherein the ion exchange membrane has a flat portion in the vicinity of ends, and a convex curve and a concave curve resulting from curvatures of the ion exchange membrane itself form a convex part and a concave part, respectively, in the concavo-convex shape of the ion exchange membrane, wherein the convex part extends linearly or curvedly, the concave parts between the convex parts is flat, and the concave part includes a first concave part adjacent to the convex part in the lateral direction of the convex part, along the longitudinal direction of the convex part, the convex part has an apex and a side face in the longitudinal direction, and the side face is inclined from the apex toward the first concave part.

(2) The ion exchange membrane according to the above (1), wherein an end face in the longitudinal direction of the convex part adjacent to the vicinity of ends form a face inclined from the apex toward the flat portion in the vicinity of the ends adjacent thereto.

(3) The ion exchange membrane according to the above (1) or (2), wherein the concave part further includes a second concave part between an end face in the longitudinal direction of each convex part and an end face in the longitudinal direction of another opposite convex part, and the convex part and the second concave part are alternately arranged side by side in the longitudinal direction from the vicinity of one end to the vicinity of the other end of the ion exchange membrane.

(4) The ion exchange membrane according to the above (3), wherein the end face in the longitudinal direction of the convex part forms a face inclined from the apex toward the second concave part.

(5) The ion exchange membrane according to the above (3), wherein the concavo-convex shape is formed such that as between the neighboring convex parts in the lateral direction of the convex parts, an end portion of one of the convex parts is not arranged in the lateral direction of at least one end portion in the longitudinal direction of the other convex part.

(6) The ion exchange membrane according to any one of the above (1) to (5), wherein a membrane thickness of the flat portions in the vicinity of ends or the concave part is different from at least a partial membrane thickness of the convex part.

(7) The ion exchange membrane according to any one of the above (1) to (6), wherein the ion exchange membrane is constituted by at least a support and an ion exchange layer disposed on both sides or on one side of the support, and is an ion exchange membrane in which a convex part and a concave part of the ion exchange membrane are formed in convex curves and concave curves, respectively, resulting from a curvature of the support itself.

(8) The ion exchange membrane according to any one of the above (1) to (6), wherein the ion exchange membrane is a graft polymer.

(9) An ion exchange membrane cell comprising a cation exchange membrane and an anion exchange membrane located in a manner opposed to each other, at least one of the cation exchange membrane and the anion exchange membrane being an ion exchange membrane having a concavo-convex shape, wherein the ion exchange membrane having a concavo-convex shape has a flat portion in the vicinity of ends, and convex curves and concave curves resulting from a curvature of the ion exchange membrane itself form a convex part and a concave part, respectively, in the concavo-convex shape of the ion exchange membrane, wherein the convex part extends linearly or curvedly, the concave part between the convex parts is flat, the concave part include a first concave part adjacent to the convex part in the lateral direction of the convex part, along the longitudinal direction of the convex part, the convex part has an apex and a side face in the longitudinal direction, the side face is inclined from the apex toward the first concave part, and the convex part is located so as to be opposite to the other ion exchange membrane.

(10) The ion exchange membrane cell according to the above (9), wherein both the cation exchange membrane and the anion exchange membrane are ion exchange membranes having a concavo-convex shape, and the convex part of one of the ion exchange membranes is located in no contact with the other ion exchange membrane.

(11) The ion exchange membrane cell according to the above (9) or (10), wherein the ion exchange membrane cell is of integrated type in which the cation exchange membrane and the anion exchange membrane are joined to a gasket so as to sandwich the gasket.

(12) The ion exchange membrane cell according to the above (9) to (11), wherein each of the ion exchange membranes is a graft polymer.

(13) A method for manufacturing the ion exchange membrane having a concavo-convex shape according to any one of the above (1) to (6), the method comprising any one of the following steps (i) to (iii):

(i) curving a membrane of a plastic polymer having a charged group by pressing against a mold provided with irregularities with a concave portion being flat to thereby form irregularities in the membrane;

(ii) curving a membrane of a plastic polymer having a charged group by pressing against a mold provided with irregularities with a concave portion being flat to thereby form irregularities in the membrane, followed by cross-linking of the polymer; and

(iii) curving a membrane of a plastic polymer having no charged group by pressing against a mold provided with irregularities with a concave portion being flat to thereby form irregularities in the membrane, followed by introduction of a charged group.

(14) A method for manufacturing the ion exchange membrane having a concavo-convex shape according to the above (7), the method comprising any one of the following steps (A) to (D):

(A) disposing a polymer layer having no charged group on both sides or on one side of a plastic support, introducing a charged group to the polymer layer to thereby form a plastic support in which a plastic polymer layer having the charged group is disposed on both sides or on one side, and curving the support by pressing against a mold provided with irregularities with a concave portion being flat to thereby form irregularities in the support;

(B) curving a plastic support by pressing against a mold provided with irregularities with a concave portion being flat to thereby form irregularities in the support, disposing a polymer layer having no charged group on both sides or on one side of the support thus provided with the irregularities, and introducing a charged group to the polymer layer to thereby dispose the polymer layer having the charged group on both sides or on one side of the support;

(C) curving a plastic support in which a plastic polymer layer having a charged group is disposed on both sides or on one side by pressing against a mold provided with irregularities with a concave portion being flat to thereby form irregularities in the support; or curving a plastic support in which a plastic polymer layer having no charged group is disposed on both sides or one side by pressing against a mold provided with irregularities to thereby form irregularities in the support, followed by introduction of a charged group; and

(D) curving a plastic support by pressing against a mold provided with irregularities with a concave portion being flat to thereby form irregularities in the support, and disposing a polymer layer having a charged group on both sides or on one side of the support thus provided with the irregularities; or disposing a plastic polymer layer having no charged group on one side or on both sides of a plastic support, introducing a charged group, followed by formation of irregularities; or disposing a plastic polymer layer having no charged group on one side or on both sides of a plastic support, and forming irregularities, followed by introduction of a charged group.

(15) A method for manufacturing the ion exchange membrane according to the above (7), comprising disposing a plastic polymer layer having a charged group on both sides or on one side of a plastic support, while cross-linking the polymer layer, and then curving the support by pressing against a mold provided with irregularities with flat concave parts to thereby form irregularities in the support.

(16) A method for manufacturing the ion exchange membrane having a concavo-convex shape according to the above (8), comprising curving a polymeric film by pressing against a mold form provided with irregularities to thereby form irregularities in the polymeric film, followed by graft polymerization to thereby convert the polymeric film into an ion exchange membrane.

(17) A method for manufacturing the ion exchange membrane having a concavo-convex shape according to the above (8), comprising graft-polymerizing a polymeric film, and then curving the polymeric film by pressing against a mold form provided with irregularities to thereby convert the polymeric film into an ion exchange membrane.

Alternatively, the present invention is defined by the following items.

(18) An ion exchange membrane having a concavo-convex shape, wherein the ion exchange membrane has a flat portion in the vicinity of ends, and a convex curve and a concave curve resulting from curvatures of the ion exchange membrane itself form a convex part and a concave part, respectively, in the concavo-convex shape of the ion exchange membrane, wherein the convex part extends linearly or curvedly, the concave part between the convex parts is flat, and the concave part includes a first concave part or the first concave parts and a second concave part, wherein the first concave part is a concave part adjacent to the convex part in the longitudinal direction of the convex part, along the longitudinal direction of the convex part, and the second concave part is a concave part between an end face in the longitudinal direction of each convex part and an end face in the longitudinal direction of another opposite convex part, and

the side face in the longitudinal direction of the convex part is inclined from an upper end toward the first concave parts, the end faces in the longitudinal direction of the convex parts form faces inclined from an upper end toward the flat portions in the vicinity of ends, or the end faces in the longitudinal direction of the convex parts form faces inclined from an upper end toward the second concave parts.

(19) The ion exchange membrane according to the above (18), wherein the convex part extends linearly or curvedly from the vicinity of one end to the vicinity of the other end of the ion exchange membrane, and both end faces in the longitudinal direction of the convex part form faces inclined from an upper end toward the flat portions in the vicinity of the ends adjacent thereto.

(20) The ion exchange membrane according to the above (18), wherein a plurality of convex parts is arranged side by side in the longitudinal direction from the vicinity of one end to the vicinity of the other end of the ion exchange membrane.

(21) The ion exchange membrane according to the above (20), wherein the concavo-convex shape is formed such that as for the convex parts lying next to each other in the lateral direction of the convex parts, an end portion of one of the convex parts is not located in the lateral direction of at least one end portion in the longitudinal direction of the other convex part.

(22) The ion exchange membrane according to any one of the above (18) to (21), wherein a membrane thickness of the flat portions in the vicinity of ends or the concave parts is different from at least a partial membrane thickness of the convex parts.

(23) The ion exchange membrane according to any one of the above (18) to (22), wherein the ion exchange membrane is constituted by at least a support and an ion exchange layer disposed on both sides or on one side of the support, and is an ion exchange membrane in which a convex part and a concave part of the ion exchange membrane are formed in convex curves and concave curves, respectively, resulting from curvatures of the support.

(24) An ion exchange membrane cell comprising a cation exchange membrane and an anion exchange membrane located in a manner opposed to each other, at least one of the cation exchange membrane and the anion exchange membrane being an ion exchange membrane having a concavo-convex shape, wherein the ion exchange membrane having a concavo-convex shape has flat portions in the vicinity of ends, and convex curves and concave curves resulting from curvatures of the ion exchange membrane itself form convex parts and concave parts, respectively, in the concavo-convex shape of the ion exchange membrane, wherein the concave parts are flat, and the convex parts are located so as to be opposed to the other ion exchange membrane.

(25) The ion exchange membrane cell according to the above (24), wherein a distance between the cation exchange membrane and the anion exchange membrane satisfies the following (i), (ii), or (iii):

(i) when any one of the cation exchange membrane and the anion exchange membrane is an ion exchange membrane having a concavo-convex shape, and the other is a flat membrane, the distance is longer than a height of the convex parts of the ion exchange membrane having a concavo-convex shape;
(ii) when both the cation exchange membrane and the anion exchange membrane are ion exchange membranes having a concavo-convex shape and are located such that each other's convex parts are opposed to each other's concave parts without the convex parts overlapping therebetween, the distance is longer than a height of the convex parts of one of the ion exchange membrane; and
(iii) both the cation exchange membrane and the anion exchange membrane are ion exchange membranes having a concavo-convex shape, and the distance is longer than a combined height of the convex parts of both the ion exchange membranes.

(26) The ion exchange membrane cell according to the above (24) or (25), wherein the convex parts of the ion exchange membrane having a concavo-convex shape are located in contact with the other ion exchange membrane.

(27) The ion exchange membrane cell according to any one of the above (24) to (26), wherein at least one ion exchange membrane having a concavo-convex shape is constituted by at least a support and an ion exchange layer disposed on both sides or on one side of the support, and is an ion exchange membrane in which convex parts and concave parts of the ion exchange membrane are formed in convex curves and concave curves, respectively, resulting from curvatures of the support.

(28) A method for manufacturing the ion exchange membrane having a concavo-convex shape, the method comprising any one of the following steps (A) to (C):

(A) curving a membrane of a plastic polymer having no charged group by pressing against a mold provided with irregularities with flat concave parts to thereby form irregularities in the membrane, followed by introduction of a charged group;
(B) disposing a polymer layer having no charged group on both sides or on one side of a plastic support, introducing a charged group to the polymer layer to thereby form a plastic support in which a plastic polymer layer having the charged group is disposed on both sides or one side, and curving the support by pressing against a mold provided with irregularities with flat concave parts to thereby form irregularities in the support; and
(C) curving a plastic support by pressing against a mold provided with irregularities with flat concave parts to thereby form irregularities in the support, disposing a polymer layer having no charged group on both sides or on one side of the support thus provided with the irregularities, and introducing a charged group to the polymer layer to thereby dispose the polymer layer having the charged group on both sides or on one side of the support.

(29) A method for manufacturing the ion exchange membrane having a concavo-convex shape according to any one of the above (18) to (22), the method comprising any one of the following steps (i) to (iii):

(i) curving a membrane of a plastic polymer having a charged group by pressing against a mold provided with irregularities with flat concave parts to thereby form irregularities in the membrane;
(ii) curving a membrane of a plastic polymer having a charged group by pressing against a mold provided with irregularities with flat concave parts to thereby form irregularities in the membrane, followed by cross-linking of the polymer; and
(iii) curving a membrane of a plastic polymer having no charged group by pressing against a mold provided with irregularities with flat concave parts to thereby form irregularities in the membrane, followed by introduction of a charged group.

(30) A method for manufacturing the ion exchange membrane having a concavo-convex shape constituted by at least a support and an ion exchange layer according to the above (23), the method comprising the following step (a) or (b):

(a) curving a plastic support in which a plastic polymer layer having a charged group is disposed on both sides or one side by pressing against a mold provided with irregularities to thereby form irregularities in the support, or curving a plastic support in which a plastic polymer layer having no charged group is disposed on both sides or one side by pressing against a mold provided with irregularities with flat concave parts to thereby form irregularities in the support, followed by introduction of a charged group; and
(b) curving a plastic support by pressing against a mold provided with irregularities with flat concave parts to thereby form irregularities in the support, and disposing a polymer layer having a charged group on both sides or one side of the support thus provided with the irregularities, or disposing a plastic polymer layer having no charged group on one side or on both sides of a plastic support, and introducing a charged group, followed by formation of irregularities, or disposing a plastic polymer layer having no charged group on one side or on both sides of a plastic support, and forming irregularities, followed by introduction of a charged group.

Alternatively, the present invention is defined by the following items.

(31) An ion exchange membrane having a concavo-convex shape, wherein the ion exchange membrane is a graft polymer, the ion exchange membrane itself has a curved shape, and convex curves and concave curves of the ion exchange membrane form convex parts and concave parts, respectively, in the concavo-convex shape of the ion exchange membrane.

(32) The ion exchange membrane according to the above (31), wherein a width at upper ends of the convex parts is 50% or less of a width at lower ends.

(33) The ion exchange membrane according to the above (31) or (32), wherein the convex parts and the concave parts extend linearly or curvedly, and the concave parts are flat.

(34) A method for manufacturing the ion exchange membrane having a concavo-convex shape, comprising curving a polymeric film by pressing against a mold form provided with irregularities to thereby form irregularities in the polymeric film, followed by graft polymerization to thereby convert the polymeric film into an ion exchange membrane.

(35) An ion exchange membrane cell comprising a cation exchange membrane and an anion exchange membrane located in a manner opposed to each other, at least one of the cation exchange membrane and the anion exchange membrane being an ion exchange membrane having a concavo-convex shape, wherein the ion exchange membrane having a concavo-convex shape is a graft polymer, the ion exchange membrane itself has a curved shape, convex curves and concave curves of the ion exchange membrane form convex parts and concave parts, respectively, in the concavo-convex shape of the ion exchange membrane, and the convex parts of the ion exchange membrane having a concavo-convex shape are located so as to be opposed to the other ion exchange membrane.

(36) The ion exchange membrane cell according to the above (35), wherein the concave parts of the ion exchange membrane having a concavo-convex shape are flat.

(37) The ion exchange membrane cell according to the above (35) or (36), wherein both the cation exchange membrane and the anion exchange membrane are ion exchange membranes having a concavo-convex shape and are located such that a portion of the convex parts of the cation exchange membrane is in contact with a portion of the convex parts of the anion exchange membrane, any one of the cation exchange membrane and the anion exchange membrane is an ion exchange membrane having a concavo-convex shape and is located such that at least a portion of the convex parts of the ion exchange membrane having a concavo-convex shape is in contact with the other ion exchange membrane.

**Effect of the Invention**

The ion exchange membrane of the present invention can increase the surface area of a membrane effective for ion permeation, and can properly decrease average electric resistance of the membrane and the attachment of a contaminating substance. In addition, the ion exchange membrane of the present invention can reduce deformation or damage due to swelling over a wide range of salt concentrations, and even if there is a large difference in salt concentration between two solutions contacted with the membrane. Furthermore, the ion exchange membrane of the present invention can enhance the mechanical strength of the membrane itself. Moreover, use of the ion exchange membrane of the present invention can properly decrease electric resistance and the attachment of an adhering substance in a solution flow passage between a cation exchange membrane and an anion exchange membrane opposed to each other.

**Brief Description of Drawings**

[Figure 1] Figure 1 is a diagram illustrating the principle of electro-dialysis (ED).
[Figure 2] Figure 2 is a diagram illustrating the principle of reverse electro-dialysis (RED).
[Figure 3] Figure 3 is a diagram showing the states of a cell and a stack in ED and RED power generation apparatuses.
[Figure 4] Figure 4 is a diagram showing a conventional cell for RED.
[Figure 5] Figure 5 is a schematic view showing water flow, ion diffusion, and the state of attachment of a contaminating substance in the case of using the cell shown in Figure 4.
[Figure 6] Figure 6 is a schematic view showing water flow, ion diffusion, and the state of attachment of a contaminating substance in the case of using a conventional conductive spacer in a cell for RED.
[Figure 7] Figure 7 is a schematic view showing water flow, ion diffusion, and the state of attachment of a contaminating substance in the case of using a conventional profiled membrane in a cell for RED.
[Figure 8] Figure 8 is a schematic view showing the structure of a conventional profiled membrane.
[Figure 9] Each of Figures 9(A)(a) and 9(A)(c) is a schematic view showing the cross section of one embodiment of convex parts or convex curves and concave parts or concave curves of the ion exchange membrane of the present invention or the support according to the present invention.
Figure 9(A)(b) shows exemplary convex parts or convex curves and concave parts or concave curves different from those of the present invention. Each of Figures 9(B)(a) to 9(B)(c) is a schematic view showing the cross section of one embodiment of the convex parts and the concave parts of the ion exchange membrane of the present invention.
Each of Figure 9(A)(d) and Figure 9(B)(d) is a diagram showing the position of an angle regarding the convex parts.
[Figure 10] Figure 10 is a diagram showing one embodiment of a convex part shape in the ion exchange membrane of the present invention. Each of Figures 10(a) and 10(c) is a diagram showing the shape of a convex part, and each of Figures 10(b) and 10(d) is a diagram showing a state where convex parts are formed in the ion exchange membrane.
[Figure 11] Figure 11 is a diagram showing one embodiment of the concavo-convex shape of the present invention.
[Figure 12] Figure 12 is a diagram showing one embodiment of the concavo-convex shape of the present invention.
[Figure 13] Figure 13 is a diagram showing one embodiment of the concavo-convex shape of the present invention.
[Figure 14] Figure 14 is a diagram showing one embodiment of the concavo-convex shape of the present invention.
[Figure 15] Figure 15 is a diagram showing one embodiment of the concavo-convex shape of the present invention.
[Figure 16] Figure 16 is a diagram showing one embodiment of the concavo-convex shape of the present invention.
[Figure 17] Figure 17 is a diagram showing one embodiment of a corrugation formation method in the manufacturing method of the present invention.

[Figure 18] Figure 18 is a schematic view showing one embodiment of the structure of the ion exchange membrane cell of the present invention.

[Figure 19] Figure 19 is a diagram showing one embodiment of the location of a cation exchange membrane and an anion exchange membrane when both the exchange membranes are in no contact with each other.

[Figure 20] Figure 20 is a diagram showing the cross section of a cell in one embodiment when a cation exchange membrane and an anion exchange membrane are in no contact with each other.

[Figure 21] Figure 21 is a schematic view showing one embodiment of the structure of the ion exchange membrane cell of the present invention.

[Figure 22] Figure 22 is a schematic view showing one embodiment of the structure of the ion exchange membrane cell of the present invention.

[Figure 23] Figure 23 is a photograph of a model showing one embodiment of the concavo-convex shape of the ion exchange membrane of the present invention.

[Figure 24] Figure 24 is a schematic view showing water flow, ion diffusion, and the state of attachment of a contaminating substance in an ion exchange membrane cell in one embodiment of the present invention.

[Figure 25] Figure 25 is a schematic view showing one embodiment of the structure of the ion exchange membrane cell of the present invention. The upper diagram is a diagram showing each ion exchange membrane and a gasket, the intermediate diagram is a diagram showing an integrated state thereof, and the lower diagram is a diagram showing a manner in which each ion exchange membrane is incorporated to the gasket.

[Figure 26] Figure 26 shows the reaction formula of PVA-b-PSSS.

[Figure 27] Figure 27 is a photograph of an aluminum mold used in Examples.

[Figure 28] Figure 28 is a diagram showing the measurement positions of the height of a convex part, the width of a lower end portion of the convex part, and a membrane thickness.

[Figure 29] Figure 29 is a cross-sectional photograph of each membrane obtained in Examples 1 to 3. Figure 29(a) is the photograph of Example 1, Figure 29(b) is the photograph of Example 2, and Figure 29(c) is the photograph of Example 3.

[Figure 30] Figure 30 is a photograph of a membrane obtained in Example 4. Figure 30(a) is the photograph of the cross section, Figure 30(b) is the photograph of the surface, and Figure 30(c) is the photograph of the back.

[Figure 31] Figure 31 is a cross-sectional photograph of a membrane obtained in Example 5. Figure 31(a) is the photograph of the cross section, Figure 31(b) is the photograph of the surface, and Figure 31(c) is the photograph of the back.

[Figure 32] Figure 32 is a photograph of a membrane obtained in Example 6. Figure 32(a) is the photograph of the cross section, Figure 32(b) is the photograph of the surface, and Figure 32(c) is the photograph of the back.

[Figure 33] Figure 33 is a diagram showing a membrane potential measurement apparatus used in Examples and Comparative Examples.

[Figure 34] Figure 34 is a photograph of the membrane obtained in Example 2 taken from its front face (the side where convex parts are formed).

[Figure 35] Figure 35 is a photograph of the membrane obtained in Example 5 taken from its front face (the side where convex parts are formed).

[Figure 36] Figure 36 is a diagram showing a membrane potential measurement apparatus used in Example 7 and Comparative Example 8.

[Figure 37] Figure 37 is a diagram showing a membrane resistance measurement apparatus and experimental conditions used in Example 7 and Comparative Example 8.

[Figure 38] Figure 38 is a diagram showing an apparatus and experimental conditions used for calculating a dynamic transference number in Example 7 and Comparative Example 8.

[Figure 39] Figure 39 is a diagram showing measurement results about the characteristics of ion exchange membranes used in Example 7 and Comparative Example 8.

[Figure 40] Figure 40 is a photograph of an aluminum mold used in Example 7.

[Figure 41] Figure 41 is a diagram showing the concavo-convex shape of an ion exchange membrane of Example 7 (in the drawing, one side of a grid represents 10 mm, and these grids are described for illustration).

[Figure 42] Figure 42 is photographs of AEM-1 and CEM-1 used in Comparative Example 8.

[Figure 43] Figure 43 is photographs of PF-A and PF-C used in Example 7.

[Figure 44] Figure 44 is partial cross-sectional photographs of PF-A and PF-C used in Example 7. Figure 44 (a) is the partial cross-sectional photograph of PF-A, and Figure 44(b) is the partial cross-sectional photograph of PF-C.

[Figure 45] Figure 45 is a diagram showing dimensional measurement sites and measurement results of PF-A and PF-C used in Example 7.

[Figure 46] The left side of Figure 46 is a diagram showing the structure of a RED stack of Example 7, and the right side thereof is a diagram showing the structure of a RED stack of Comparative Example 8.

[Figure 47] The left side of Figure 47 is a photograph of a spacer (S) on the sea water side, the center thereof is a photograph of a spacer (R) on the river water side for Comparative Example, and the right side thereof is a photograph of a spacer (R') on the river water side for Example.

[Figure 48] Figure 48 is a diagram showing the specification of a RED stack.

[Figure 49] Figure 49 is a diagram showing an apparatus with which power generation characteristics were evaluated in Example 7 and Comparative Example 8.

[Figure 50] Figure 50 is a diagram showing an equivalent circuit and a theoretical voltage-current power output curve of the apparatus of Figure 49.

[Figure 51] Figure 51 is a graph showing the relationship between voltage and current and the relationship between the current and power generation output of Comparative Example 8.

[Figure 52] Figure 52 shows measurement results of evaluating power generation characteristics in Comparative Example 8.

[Figure 53] Figure 53 is a graph showing the relationship between voltage and current and the relationship between the current and power generation output of Example 7.

[Figure 54] Figure 54 shows measurement results of evaluating power generation characteristics in Example 7.

[Figure 55] Figure 55 is a diagram showing the internal resistance, maximum power output, and maximum power density of a stack calculated in Example 7 and Comparative Example 8.

[Figure 56] Figure 56 is photographs of PF-Cg and PF-Ag used in Example 8.

[Figure 57] Figure 57 is photographs of Flat-C and Flat-A used in Comparative Example 9.

[Figure 58] Figure 58 is a partial surface photograph of PF-Ag used in Example 8.

[Figure 59] Figure 59(a) is a cross-sectional photograph of PF-Cg used in Example 8, and Figure 59 (b) is a cross-sectional photograph of PF-Ag used in Example 8.

[Figure 60] Figure 60 is a diagram showing dimensional measurement sites of Example 8 and Comparative Example 9.

[Figure 61] The left side of Figure 61 is a diagram showing the structure of a RED stack of Example 8, and the right side thereof is a diagram showing the structure of a RED stack of Comparative Example 9.

[Figure 62] The left side of Figure 62 is a diagram showing a spacer (R) on the river water side for Comparative Example 9, and the right side thereof is a diagram showing a spacer (R') on the river water side for Example 8.

[Figure 63] Figure 63 is a graph showing the relationship between voltage and current and the relationship between the current and power generation output of Example 8.

[Figure 64] Figure 64 is a graph showing the relationship between voltage and current and the relationship between the current and power generation output of Comparative Example 9.

[Figure 65] Figure 65 is a diagram showing a die used in Example 9.

[Figure 66] Figure 66 is a diagram showing a die used in Example 9.

[Figure 67] Figure 67 is a photograph of a CT-2 membrane provided with irregularities using the die shown in Figure 65 in Example 9.

[Figure 68] Figure 68 is a photograph of an AT-2 membrane provided with irregularities using the die shown in Figure 65 in Example 9.

[Figure 69] Figure 69 is a photograph of a CT-2 membrane provided with irregularities using the die shown in Figure 66 in Example 9.

[Figure 70] Figure 70 is a photograph of an AT-2 membrane provided with irregularities using the die shown in Figure 66 in Example 9.

[Figure 71] Figure 71 is a diagram showing the specification of RED stacks of Example 9 and Comparative Example 10.

[Figure 72] Figure 72 is a diagram showing the relationship between the electric conductivity of a solution on the low concentration side and open circuit voltage in Example 9 and Comparative Example 10.

[Figure 73] Figure 73 is a diagram showing the relationship between the electric conductivity of a solution on the low concentration side and RED internal resistance when maximum power output was obtained at each conductivity in Example 9 and Comparative Example 10.

[Figure 74] Figure 74 is a diagram showing the relationship between the electric conductivity of a solution on the low concentration side and a total power density at each conductivity.

**Mode of Carrying Out the Invention**

The ion exchange membrane of the present invention is an ion exchange membrane having a concavo-convex shape, wherein the ion exchange membrane has flat portions in the vicinity of ends, and convex curves and concave curves resulting from curvatures of the ion exchange membrane itself form convex parts and concave parts, respectively, in the concavo-convex shape of the ion exchange membrane, wherein the convex parts and the concave parts extend linearly or curvedly, and the concave parts between the convex parts are flat. The ion exchange membrane of the present invention is suitable for use in a solution with a high salt concentration and can be suitably used in, particularly, a solution having an electric conductivity of 0.05 mS/cm or more. Thus, the ion exchange membrane of the present invention can be used as an ion exchange membrane that can be applied to a solution having an electric conductivity of 0.05 mS/cm or more. Hence, the ion exchange membrane of the present invention can be used as an ion exchange membrane for use in the ion exchange of a solution having an electric conductivity of 0.05 mS/cm or more. The ion exchange membrane according to the present invention is not particularly limited as long as the membrane has ion exchange ability. The ion exchange membrane of the present invention may be a cation (cationic) exchange membrane or may be an anion (anionic) exchange membrane.

In the present invention, the ion exchange membrane itself is curved, and the curvatures form irregularities in the ion exchange membrane. In the specification of the present application, expressions regarding curving, such as "curvature", "curved", and "curve", used in the present invention include bending (i.e., a folded state) and bowing (i.e., a curved state without forming an obvious angle). The convex curves of the ion exchange membrane refer to portions provided with a convex shape by the curvatures of the ion exchange membrane. The concave curves of the ion exchange membrane refer to portions provided with a flat concave shape by the curvatures of the ion exchange membrane. The shape of the convex curves is not particularly limited as long as a convex shape or a flat concave shape is formed by the curvatures of the ion exchange membrane. An embodiment of the ion exchange membrane of the present invention includes an ion exchange membrane having a concavo-convex shape, the ion exchange membrane having no support, and an ion exchange membrane having a concavo-convex shape, wherein the ion exchange membrane is constituted by at least a support and an ion exchange layer disposed on both sides or on one side of the support, has flat portions in the vicinity of ends, and is an ion exchange membrane in which convex parts and concave parts of the ion exchange membrane are formed in convex curves and concave curves, respectively, resulting from curvatures of the support. In this context, the "ion exchange layer disposed on both sides or on one side of the support" refers to a state where the whole or a portion of the support is embedded in the ion exchange layer, and means that the ion exchange layer is disposed on both sides when the whole of the support is embedded therein, and the ion exchange layer is disposed on one side when a portion of the support is embedded therein.

The ion exchange layer according to the present invention is not particularly limited as long as the layer has ion exchange ability. The ion exchange layer may be a cation (cationic) exchange layer or may be an anion (anionic) exchange layer. In the present invention, the support has a function of improving the shape retention characteristics and/or strength of the ion exchange membrane as compared with the case where the ion exchange membrane consists of the ion exchange layer alone. The support according to the present invention is not particularly limited as long as ions can pass through the support when the ion exchange layer is formed. Examples thereof can include a porous body. The porous body also includes a form such as a woven fabric and a nonwoven fabric. Suitable examples of the material for the support can include a polymeric material. The support needs to have higher mechanical strength than that of a polymer layer having a charged group, and is preferably excellent in tensile or shear strength. In the present invention, the support itself constituting the ion exchange membrane is curved, and the curvatures form irregularities in the ion exchange membrane. Specifically, convex curves and concave curves resulting from curvatures of the ion exchange membrane itself having the support form convex parts and concave parts, respectively, in the concavo-convex shape of the ion exchange membrane. The convex curves of the support refer to portions provided with a convex shape by the curvatures of the support. The concave curves of the support refer to portions provided with a flat concave shape by the curvatures of the support. The shape of the convex curves is not particularly limited as long as a convex shape or a flat concave shape is formed by the curvatures of the support.

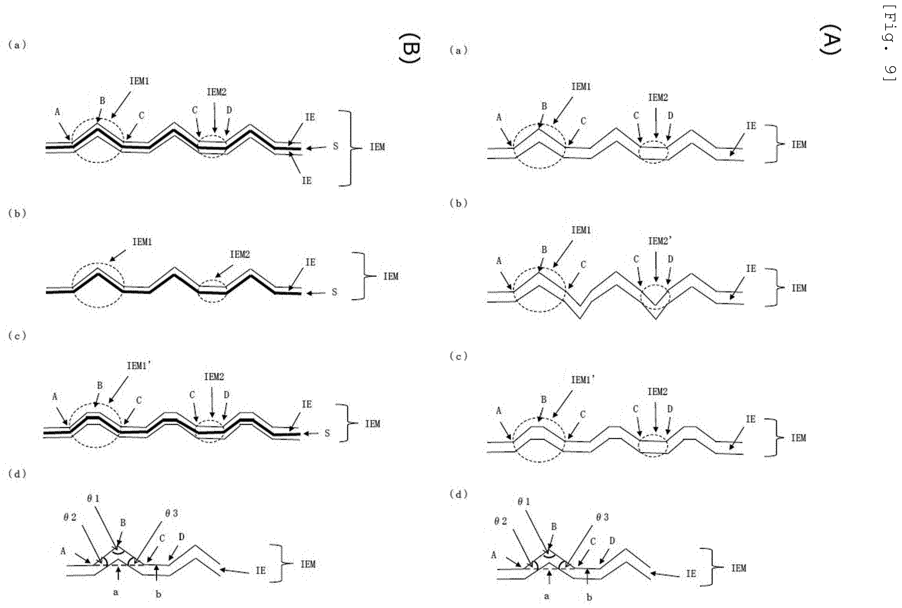

Description will be made with reference to the drawings. For example, each of Figures 9(A)(a) and 9(A)(c) is a schematic view of ion exchange membrane IEM which is one embodiment of the ion exchange membrane of the present invention viewed from the side (in the thickness direction), and is a schematic view of a cross section perpendicular to the direction of extension of the convex curves (hereinafter, the "direction of extension" is also referred to as the "longitudinal direction" or the "extending direction"). The upper side corresponds to the front face of the ion exchange membrane IEM, and the lower side corresponds to the back of the ion exchange membrane IEM. In Figure 9(A)(a), the ion exchange membrane IEM turns at curve A from a flat portion to the front face side, turns at curve B to the back side, turns at curve C in the flatness direction, and turns at curve D to the front face side. By repeating this, convex curves IEM1 formed from the curves A to C and concave curves IEM2 formed from the curves C to D between the convex curves are alternately formed so that the convex curves IEM1 form convex parts of the ion exchange membrane while the concave curves IEM2 form concave parts of the ion exchange membrane. The shape of the concave curves (concave parts) in Figure 9(A)(a) is a flat shape. Figure 9(A) (c) shows an example in which the convex curves (convex parts) have a trapezoidal shape (convex curves IEM1'). In Figures 9(A)(a) and 9(A)(c), the curves of the ion exchange membrane IEM are bent. However, as mentioned above, the curves of the ion exchange membrane IEM may be bowed, or portions between the curves may be bowed.

The support in the ion exchange membrane having the support will be described with reference to Figure 9(A).

For example, Figure 9(A) is a schematic view of support S (IE is read as S) viewed from the side (in the thickness direction), and is a schematic view of a cross section perpendicular to the longitudinal direction which is the direction of extension of the convex curves. The upper side corresponds to the front face of the support, and the lower side corresponds to the back of the support. In Figure 9(A)(a), the support turns at curve a (A is read as a) from a flat portion to the front face side, turns at curve b (B is read as b) to the back side, turns at curve c (C is read as c) in the flatness direction, and turns at curve d (D is read as d) to the front face side. By repeating this, convex curves S1 (IEM1 is read as S1) formed from the curves a to c and concave curves S2 (IEM2 is read as S2) formed from the curves c to d between the convex curves are alternately formed. The shape of the concave curves in Figure 9(A)(a) is a flat shape. Figure 9(A)(c) shows an example in which the convex curves have a trapezoidal shape (convex curves S1' (IEM1' is read as S1')). In Figures 9(A)(a) and 9(A)(c), the curves of the support S are bent. However, as mentioned above, the curves of the support S may be bowed, or portions between the curves may be bowed. In this context, the term "flat" regarding the concave curves (concave parts) also includes, irrespective of the presence or absence of the support, the case where bowing occurs due to deformation unintended for membrane formation at the time of membrane formation, in a membrane storage state, or under conditions during use of the membrane. The same holds true for flat portions in the vicinity of ends mentioned later. The ion exchange membrane of the present invention may be a graft polymer. The graft polymer according to the present invention refers to a graft polymer that has a charged group and acts as an ion exchange membrane. Examples thereof can include a polymer in which a charged group is introduced to a polymeric membrane by graft polymerization, and a polymer in which a graft polymerization is performed to a polymeric membrane, followed by the introduction of a charged group. The polymeric membrane serving as a base material is not particularly limited as long as graft polymerization can be performed. Examples thereof can include polyethylene terephthalate (PET), polyether ether ketone (PEEK), polyamide, polyimide, an ethylene-tetrafluoroethylene copolymer (ETFE), polyethylene (PE), polypropylene (PP), polyvinyl alcohol (PVA), Eval (ethylene-vinyl alcohol copolymer), and nylon.

The ion exchange membrane having the support of the present invention has a concavo-convex shape that reflects the convex shape and the concave shape of the support because an ion exchange layer is disposed on both sides or on one side of the support having convex curves and concave curves. Description will be made with reference to the drawings. For example, Figure 9(B) is a schematic view of ion exchange membrane IEM viewed from the side (in the thickness direction), and is a schematic view of a cross section perpendicular to the longitudinal direction which is the direction of extension of the convex parts. The upper side corresponds to the front face of the ion exchange membrane IEM, and the lower side corresponds to the back of the ion exchange membrane IEM. The ion exchange membrane IEM of Figure 9(B)(a) is constituted by curved support S and ion exchange layers IE disposed on both sides of the support S. In the ion exchange membrane IEM of Figure 9(B)(a), the ion exchange membrane IEM turns at curve A from a flat portion to the front face side, turns at curve B to the back side, turns at curve C in the flatness direction, and turns at curve D to the front face side. By repeating this, convex parts IEM1 of the ion exchange membrane IEM formed from the curves A to C and flat concave parts IEM2 of the ion exchange membrane IEM formed from the curves C to D between the convex parts are alternately formed. The curves A to D of the ion exchange membrane IEM correspond to curves a to d, respectively, of the support S. Therefore, the convex curves and the concave curves of the support S correspond to the convex parts and the concave parts, respectively, of the ion exchange membrane IEM, and the convex curve and concave curve sites of the support S form the convex parts and the concave parts, respectively, of the ion exchange membrane IEM. Thus, in the ion exchange membrane IEM, the convex parts and the concave parts of the ion exchange membrane IEM are formed in the convex curves and the concave curves, respectively, of the support S. Hence, the convex parts and the concave parts of the ion exchange membrane IEM have the same shapes as those of the convex curves and the concave curves, respectively, of the support S. Figure 9(B)(b) shows an example of ion exchange membrane IEM in which ion exchange layer IE is disposed on one side of curved support S.

Figure 9(B)(c) shows an example in which the convex parts have a trapezoidal shape. In Figure 9(B), the curves of the ion exchange membrane IEM are bent. However, as mentioned above, the curves of the ion exchange membrane IEM may be bowed, or portions between the curves may be bowed. In the ion exchange membrane of the present invention, the concave parts between the convex parts are flat. Therefore, the concave parts are unlikely to cause stagnation, are unlikely to cause an adhering substance, and are unlikely to cause decrease in power output. Figure 9(A)(b) shows an example in which the shape of the concave curves (concave parts) is a shape that protrudes toward the side opposite to the convex curves (convex parts) (concave curves IEM2'). In this case, unlike the ion exchange membrane of the present invention having the flat concave parts, stagnation easily occurs between the convex parts (in the concave parts), and an adhering substance easily occurs. Furthermore, the resistance of a flow passage might be increased, or the ion exchange membrane might be difficult to install in a cell. In the case of RED power generation, the ion concentration of a solution on the low concentration side is elevated, and the electric resistance of the solution is lowered. On the other hand, generated voltage is decreased due to a reduced difference in concentration between a solution on the high concentration side and a solution on the low concentration side, and is therefore responsible for decrease in power output. In the case of ED, stagnation locally desalts the portion and decreases a salt concentration. As a result, electric resistance is increased, and the membrane is burned due to Joule heat. This is responsible for the breakage of the membrane in some cases. When the support will be described with reference to Figure 9(A), Figure 9(A)(b) shows an example in which the shape of the concave curves of the support is a shape that protrudes toward the side opposite to the convex curves (concave curves S2' (IEM2' is read as S2')). In the case of forming an ion exchange layer on such a support, the problems described above also arise, unlike the ion exchange membrane of the present invention having the flat concave parts. The same holds true for the case where only the convex parts are arranged. It is preferred that the concave parts should be flat (i.e., as shown in, for example, Figure 9(A)(a), the concave parts have no curve at sites other than their boundaries with the convex parts) .

The ion exchange membrane of the present invention has a concavo-convex shape. Therefore, the membrane has a large surface area. Hence, the surface area of a membrane effective for ion permeation can be increased. In the case of using the ion exchange membrane of the present invention in an ion exchange membrane cell comprising a cation exchange membrane and an anion exchange membrane located in a manner opposed to each other, the interval between both the ion exchange membranes can be fixed without the use of a spacer by locating upper ends of the convex parts in contact with convex parts, concave parts, or flat portions of the other ion exchange membrane. Thus, a flow passage between both the ion exchange membranes can be secured. In this case, it is preferred that an area in which both the ion exchange membranes are in contact with each other should be small because ions do not flow in the portion where the cation exchange membrane and the anion exchange membrane are in contact with each other. In short, it is preferred that the upper ends of the convex parts should have a small area. When the ion exchange membrane of the present invention has a support, the corners of the curved support can be used as the upper ends of the convex parts. Therefore, a width at the upper ends of the convex parts is easily narrowed, irrespective of the case where the corners are bent, the case where the corners are bowed, or the case where planar portions are disposed at the upper ends. Hence, for use in an ion exchange membrane cell, an effective membrane area to be permeated by ions can be increased because the area of a contact portion between both the ion exchange membranes where ions do not flow can be narrowed.

The width at the upper ends of the convex parts is preferably 50% or less, more preferably 30% or less, further preferably 20% or less, of a width at lower ends. The width at the upper ends of the convex parts refers to a width at upper ends in a cross section perpendicular to the direction of extension of the convex parts. The width at the lower ends of the convex parts refers to width a at the positions of boundaries between the convex parts and the concave parts in a cross section perpendicular to the direction of extension of the convex parts. In this context, for example, in the ion exchange membranes of Figures 9(A) and 9(B), the distance between curve A and curve C in the drawings corresponds to width a at the lower ends of the convex parts. When the upper ends of the convex parts are bowed, the width at the upper ends refers to a width at which the upper ends are contacted with the other ion exchange membrane, a spacer, or the like. As mentioned above, the ion exchange membrane of the present invention for use in a cell can increase an effective cross-sectional area of a flow passage portion in which a solution flows because the width at the upper ends of the convex parts is easily narrowed. Furthermore, in the ion exchange membrane having a concavo-convex shape, a contaminant such as organic matter or inorganic particles in a fluid easily attaches to the roots of the convex parts when the convex parts bulge in a columnar manner. This attachment narrows a flow passage and interferes with the flow of a fluid. When the ion exchange membrane of the present invention has a support, slopes of the convex parts are formed by curving the support. Therefore, gently inclined convex parts are easily formed. Hence, the attachment of a contaminant in a fluid can be prevented. The ion exchange membrane of the present invention can therefore widen a flow passage and can provide even the advantages of a cell having less pressure loss of a flow passage and less clogging of a flow passage by a contaminant. The angle formed by both slopes at the upper ends of the convex parts of the ion exchange membrane of the present invention is preferably 10 to 176°, more preferably 30 to 150°, further preferably 60 to 120°. In the specification of the present application, the phrase "P to Q" refers to P or more and Q or less and includes P and Q. The angle formed by both slopes at the upper ends refers to an angle formed by right and left faces (side faces) at the upper ends in a cross section perpendicular to the longitudinal direction of the convex parts. Specifically, this angle is an angle at which the right and left faces respectively pass through line segments that indicate the start to turn toward the front face side with respect to the flat portions or faces in the vicinity of ends in the ion exchange membrane (these line segments are in the longitudinal direction of the convex parts), and intersect with each other at the line segments (crests) of the apexes of the convex parts. In this context, the start to turn may be defined as a start site of rising of the convex parts and refers to the positions of boundaries between the convex parts and the concave parts arranged in parallel in the longitudinal direction. The line segments that indicate the start to turn are line segments at which the upper faces of the flat portions in the vicinity of ends or the concave parts in the ion exchange membrane switch to the convex part slopes. The positions of the line segments (indicated by dots in the drawings) in the cross section in the longitudinal direction of the concavo-convex shape are determined by drawing a straight line that extends in parallel with and from the upper faces of the flat portions in the vicinity of ends or the concave parts. When the upper end portions are bowed without forming an obvious angle or have a width, for example, as in the case where the convex parts have a trapezoidal shape, the angle formed by both slopes at the upper ends refers to an angle at a position where the right and left faces intersect with each other at a convex part apex. When the apex has a flat portion, this angle refers to an angle at the central position of a line segment that indicates the flatness viewed from the side.

The angles of rising (the angles of inclination) of both slopes at the lower ends of the convex parts are preferably 2 to 85°, 15 to 75°, or 30 to 60°, and the difference between the angles of inclination of both slopes is preferably 0 to 15°. The angles of rising (the angles of inclination) of both slopes at the lower ends of the convex parts refer to angles formed by a lower end line segment connecting both lower ends of the convex parts and the side faces (slopes) of the convex parts in a cross section perpendicular to the longitudinal direction of the convex parts. When the positions of the lower ends of the convex parts are unclear, for example, as in the case where the membrane is bowed, the positions of the lower ends may be regarded as positions that are in the middle of gradual rising of the rising portions of slopes and have a height higher by 10% than the membrane thickness of the flat portions defined as 100%. The thickness of the ion exchange membrane of the present invention is preferably 5 to 1000 pm, more preferably 10 to 200 $\mu$m, from the viewpoint of suppressing increase in resistance while maintaining strength suitable for use. Description will be made with reference to Figure 9(A)(d) or 9(B)(d). $\theta1$ represents the angle formed by both slopes at the upper ends, and $\theta2$ and $\theta3$ represent the angles of rising (the angles of inclination) of both slopes at the lower ends of the convex parts. In Figure 9(B)(d), the description of the support embedded inside the ion exchange layer is omitted for easy understanding of the representation of the angles.

The convex parts and the concave parts of the ion exchange membrane of the present invention extend linearly or curvedly. In another aspect, at least the convex parts among the convex parts and the concave parts may extend linearly or curvedly. When the convex parts and the concave parts extend linearly, in a bowed manner, or curvedly (e.g., in an arched manner), the ion exchange membrane of the present invention used in the ion exchange membrane cell can decrease the liquid sending resistance of a flow passage while increasing the contact area between a flowing fluid and the ion exchange membrane. The linear or curved extending can mean that the convex parts and the concave parts are disposed so as to run linearly or curvedly. The convex parts and the concave parts may or may not continue from the vicinity of one end to the vicinity of the other end of the ion exchange membrane. For example, a plurality of convex parts having a predetermined length may be arranged from the vicinity of one end to the vicinity of the other end. The ion exchange membrane of the present invention is flat in the vicinity of ends of the membrane in order to mount the membrane to a cell. The vicinity of ends refers to regions necessary for mounting the ion exchange membrane to a cell from the ends of the ion exchange membrane, and is, for example, regions with which a frame such as a gasket can come into contact when the membrane is fixed using the frame. Such regions are referred to as flat portions in the vicinity of ends. Irregularities are formed on the inner side with respect to the flat portions. In other words, the vicinity of ends may be defined as a region that is located on the outer side (on the end side of the ion exchange membrane) with respect to a portion, closest to each end of the ion exchange membrane, of a convex part closest to the end, and located along the end of the ion exchange membrane. In the present invention, this region is flat. When a convex part site or a convex part distant from the vicinity of an end has no other convex part between a side face in the longitudinal direction of the convex part and the vicinity of the end or has no other convex part between an end face in the longitudinal direction and the vicinity of the end, this portion between the side face or the end face and the vicinity of the end is also flat. When there is no other convex part between a side face in the longitudinal direction of the convex part and the vicinity of the end, this side face of the convex part is also referred to as a side face adjacent to the vicinity of the end. When there is no other convex part between an end face in the longitudinal direction of the convex part and the vicinity of the end, this end face of the convex part is also referred to as an end face adjacent to the vicinity of the end.

In the present invention, concave parts that extend along side faces in the longitudinal direction of the convex parts and are adjacent to the convex parts in the lateral direction of the convex parts are referred to as first concave parts. In the present invention, when there exists a concave part between an end face in the longitudinal direction of one convex part and an end face in the longitudinal direction of the other convex part facing it, such concave parts are referred to as second concave parts. In this context, the terms "opposite, facing" include not only the case where the end faces directly face each other in the longitudinal direction, but the case where the end faces diagonally face each other, and the case where the end faces face each other in the lateral direction of the convex parts. In the ion exchange membrane of the present invention, it is preferred that end faces in the longitudinal direction of the convex parts adjacent to the flat portions in the vicinity of ends should form faces inclined from an upper end toward the flat portions adjacent thereto. Such a shape can disperse membrane strains and keep convex structures leading to the flat portions in the vicinity of ends of the membrane, by forming relatively gently inclined faces even if there is a large difference between a surface area and a projected area in the irregularities and the flat portions. The end faces in the longitudinal direction of the convex parts may be flat, may be hollow in a direction opposite to the longitudinal direction of the convex parts, or may bulge in the longitudinal direction of the convex parts. Curves at boundaries between an end face and side faces in the longitudinal direction flanking the end face may be bent or may be bowed. The shape of end faces of the convex parts other than the convex parts adjacent to the flat portions in the vicinity of ends is not particularly limited. It is preferred that the convex parts and the concave parts should extend linearly, wherein the concave parts are flat, and both end faces in the longitudinal direction of the convex parts form faces inclined from an upper end toward the flat portions in the vicinity of ends of the ion exchange membrane. Distortions or strains ascribable to the difference between a projected area and a surface area of the ion exchange membrane can thereby be averaged. Furthermore, stagnation is unlikely to occur in the portions (concave parts) between the convex parts, and an adhering substance is therefore unlikely to occur. Moreover, the problems of reduction in power generation output or treatment efficiency and insufficient strength are unlikely to arise. In the ion exchange membrane of the present invention, it is preferred that the vicinity of ends of the membrane should be flat in order to mount the membrane to a cell such that no solution leaks out.

In the ion exchange membrane of the present invention, the ion exchange membrane itself is curved to form irregularities. Therefore, the membrane thickness of the convex parts does not have to be larger than that of the concave parts so as to bulge, and the ion exchange membrane can have an almost constant membrane thickness. Hence, change in dimension due to swelling can be prevented from differing due to a difference in membrane thickness, and the ion exchange membrane can be prevented from being deformed or damaged. Particularly, the roots of the convex parts can be prevented from being cracked or damaged due to a difference in swelling. Since a range in which the convex parts and the concave parts extend has a difference between a projected area and a surface area, a large strain occurs at its boundary with a range of the flat portions in the vicinity of ends of the membrane which correspond to outer edges of the membrane. The almost constant membrane thickness brought about by the curvatures of the ion exchange membrane itself is helpful in solving this strain, and the presence of faces inclined from ends of the convex parts constituting irregularities toward the flat portions also contributes to solving this strain.

In the ion exchange membrane of the present invention, right and left side faces in the longitudinal direction of the convex parts are inclined from an upper end toward the flat concave parts (first concave parts) parallelly adjacent to the convex parts, or end faces in the longitudinal direction of the convex parts form faces inclined from an upper end toward the flat portions in the vicinity of ends adjacent to the end faces or the flat concave parts (second concave parts) between the end faces in the longitudinal direction of the convex parts and end faces in the longitudinal direction of the other convex parts facing them. When the concave parts between the convex parts are flat, and in addition, the side faces of the convex parts are inclined from an upper end toward the concave parts adjacent thereto, the ion exchange membrane of the present invention used in a cell can increase a membrane surface area, promote ion flow while also facilitating a liquid going beyond the convex parts into the flat concave parts which may be regarded as next lanes, and reduce ion stagnation to thereby attenuate local increase in concentration of a solution responsible for decrease in generated voltage in RED power generation or local decrease in salinity responsible for membrane burning or membrane breakage in ED. Such reduction in stagnation can also prevent the attachment of a contaminating substance. Besides, the ion exchange membrane of the present invention is less likely to strain than an ion exchange membrane provided with rectangular (U-shaped) convex parts. This is because such a rectangular membrane has a large strain due to a large difference between its surface area and projected area. It is preferred that side faces, adjacent to the vicinity of ends of the ion exchange membrane, of the convex parts should also be inclined toward the vicinity of the ends. Alternatively, when the concave parts between the convex parts are flat, and in addition, the end faces in the longitudinal direction of the convex parts form faces inclined from their upper ends toward the flat portions in the vicinity of ends or the second concave parts adjacent to the end faces, the ion exchange membrane of the present invention used in a cell can increase a membrane surface area, promote ion flow while also facilitating a liquid going beyond the convex parts into the flat concave parts which may be regarded as next lanes, and reduce ion stagnation to thereby attenuate the aforementioned local increase in concentration of a solution in RED power generation or local decrease in salinity in ED, as described above. Such reduction in stagnation can also prevent the attachment of a contaminating substance. Besides, the ion exchange membrane of the present invention is less likely to strain than an ion exchange membrane provided with rectangular (U-shaped) convex parts, as mentioned above. In the ion exchange membrane of the present invention, it is preferred that the concave parts between the convex parts should be flat, and in addition, the side faces of the convex parts should be inclined from an upper end toward the first concave parts adjacent thereto, and the end faces in the longitudinal direction of the convex parts should form faces inclined from their upper ends toward the flat portions in the vicinity of ends or the second concave parts adjacent to the end faces.

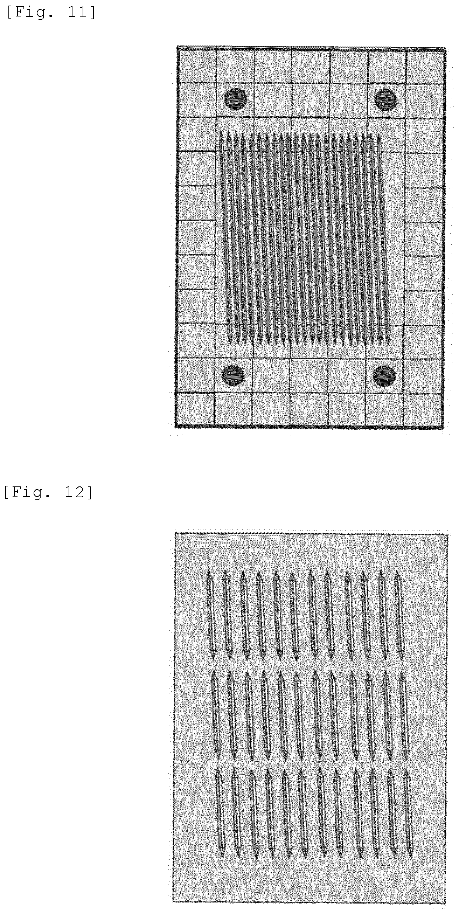

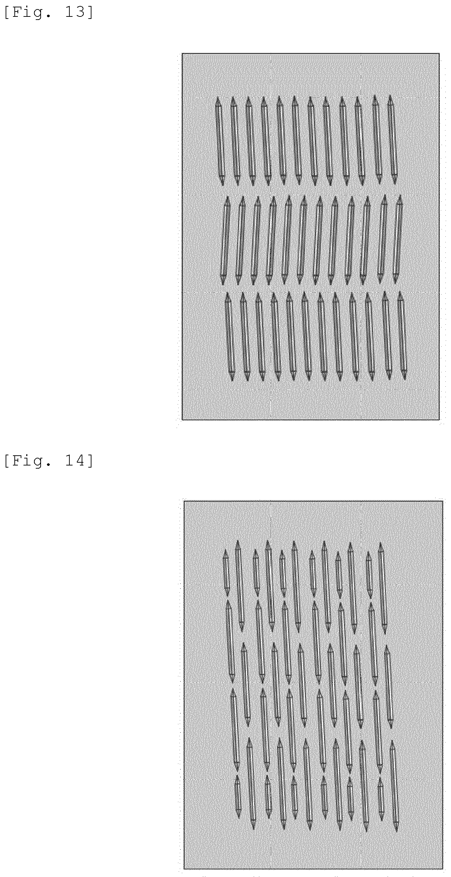

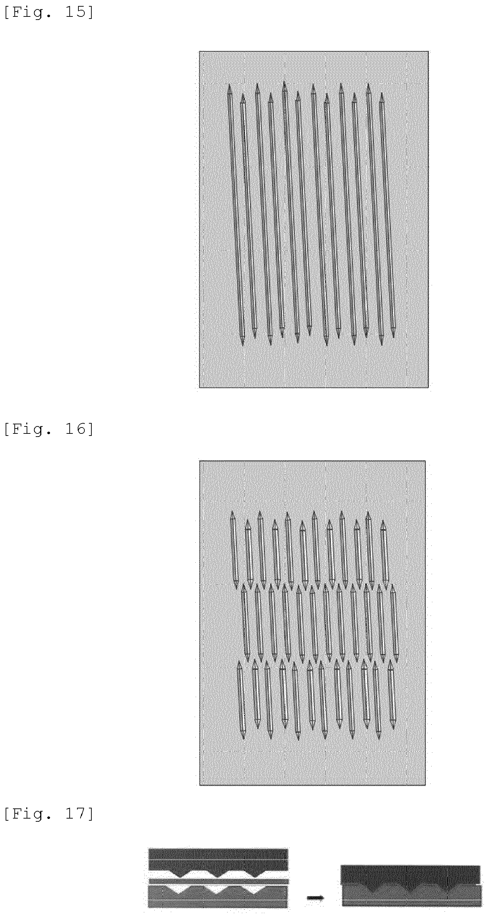

Figures 11 to 16 show embodiments of the concavo-convex shape of the ion exchange membrane of the present invention. Figure 11 shows an example in which the convex parts extend linearly from the vicinity of one end to the vicinity of the other end of the ion exchange membrane, and both end faces in the longitudinal direction of the convex parts form faces inclined from an upper end toward the flat portions in the vicinity of the ends adjacent thereto. Each of Figures 12 to 14 and 16 shows an example in which a plurality of convex parts is arranged side by side in the longitudinal direction from the vicinity of one end to the vicinity of the other end of the ion exchange membrane. Figure 15 shows an example in which the convex parts extend linearly from the vicinity of one end to the vicinity of the other end of the ion exchange membrane. In these examples, end portions in the longitudinal direction of the convex parts, when adjacent to the flat portions in the vicinity of ends of the ion exchange membrane, form faces inclined toward these flat portions; and the end portions, when adjacent to the concave parts between the convex parts lying next to each other in the longitudinal direction, form faces inclined toward these concave parts. A plurality of convex parts disposed in the longitudinal direction can enhance the strength of the membrane. In addition, the inclined face of the end portion of each convex part can more enhance the strength of the membrane. Also, pressure loss is reduced because a portion of a solution flows in a short distance without crossing the ridges of the convex parts. Figure 12 shows an example in which the individual convex parts are arranged in a line with the same angle in the longitudinal direction. Figure 13 shows an example in which the individual convex parts are arranged with varying angles in the longitudinal direction. Figure 14 shows an example in which the concavo-convex shape is formed such that as for the convex parts lying next to each other in the lateral direction of the convex parts, an end portion of one of the convex parts is not arranged in the lateral direction of an end portion in the longitudinal direction of the other convex part, i.e., in a direction perpendicular to the longitudinal direction of the end portion. In this drawing, a form in which an end portion, on the side of the flat portion in the vicinity of an end, of one of the convex parts lying next to each other in the lateral direction juts into the end side of the membrane, and a form in which the end portion is retracted to the inner side of the membrane surface with respect to the flat portion in the vicinity of the end are alternately shown. The concave parts between the convex parts lying next to each other in the longitudinal direction are staggered in the lateral direction and are not put in a line, i.e., the concave parts and the convex parts are alternately arranged. This more enhances membrane strength and more reduces a difference between a surface area and a projected area in the flat portions and the convex parts, and can therefore reduce a strain. In a modification of Figure 14, the above-described effect of reducing a strain is obtained even if the lateral direction of any one end portion among an end portion in the longitudinal direction of the convex part nearest to the flat portion in the vicinity of one end of the membrane, and an end portion in the longitudinal direction of the convex part nearest to flat portion in the vicinity of the other end arranged on an opposite side of the flat portion in the vicinity of the one end is arranged at the same position as that of some or all of the end portions of the convex parts in the other lanes. Figure 15 shows an example in which the convex parts extend linearly from the vicinity of one end to the vicinity of the other end of the ion exchange membrane. In this example, the convex parts have varying lengths, end portions in the longitudinal direction of the convex parts are arranged at varying distances from ends of the ion exchange membrane, and the convex parts with the distance that is short and the convex parts with the distance that is larger are alternately arranged. In this case as well, a strain can be reduced because a difference between a surface area and a projected area in the flat portions in the vicinity of ends and the convex parts is more reduced. Figure 16 shows an example in which the individual convex parts are not arranged in a line in the longitudinal direction, and instead, the position of one of the convex parts lying next to each other in the longitudinal direction is displaced in the lateral direction, and further, end portions of the convex parts lying next to each other in the longitudinal direction lie next to each other in the lateral direction. In the pattern of the convex parts of this drawing, as in Figures 13 and 14, end portions, on the side of the flat portion in the vicinity of an end, of the convex parts lying next to each other in the lateral direction are alternately provided in a form that juts into the end side of the membrane and in a form that is retracted to the inner side of the membrane.

In the ion exchange membrane of the present invention, the ion exchange membrane itself is curved to form irregularities. Therefore, the membrane thickness of the convex parts does not have to be larger than that of the concave parts, and the ion exchange membrane can have an almost constant membrane thickness. Hence, change in dimension due to swelling can be prevented from differing due to a difference in membrane thickness, without elevating average electric resistance of the membrane, and the ion exchange membrane can be prevented from being deformed or damaged. Particularly, the roots of the convex parts can be prevented from being cracked or damaged due to a difference in swelling. In this context, the almost constant membrane thickness does not exclude the case where the membrane thickness of the ion exchange membrane differs to some extent between any one or more of the following three combinations of sites: between the flat portions in the vicinity of ends and the convex parts, between the convex parts and the flat concave parts, and between the flat portions in the vicinity of ends and the flat concave parts. It is rather preferred that the membrane thickness should differ between these sites. In this context, the flat concave parts include not only the aforementioned first concave parts serving as flat concave parts between the convex parts when the transverse section of the membrane is viewed in the longitudinal direction of linear or curved convex parts, but the aforementioned second concave parts serving as flat concave parts that may be disposed between the convex parts in the longitudinal direction when a plurality of certain convex parts extend at predetermined intervals in the longitudinal direction. The membrane is not merely curved with an almost completely uniform membrane thickness, and, for example, the membrane thickness of both slopes in the lateral direction at the upper ends of the convex parts and both inclined faces of end portions in the longitudinal direction, or any of both the slopes or the inclined faces (hereinafter, this membrane thickness is referred to as the "the membrane thickness of the convex parts") may have a thinner portion or a thicker portion than the membrane thickness of the flat portions of the ion exchange membrane, i.e., the flat portions in the vicinity of ends and the concave parts of the membrane. The membrane thickness of the convex parts may be continuously decreased or increased from the start site of rising of the convex parts toward both slopes at the upper ends of the convex parts in the ion exchange membrane. When the membrane thickness of the convex parts is increased, the concave parts may be thinned to some extent to the contrary.

When the membrane thickness of one of the sites in the three combinations described above is defined as 100%, the ratio of the thickness of the other site is preferably 30 to 95%, more preferably 50 to 95%, further preferably 80 to 95%. The lower limit value of the membrane thickness of the thinner site is determined from the mechanical strength of the membrane. Since the membrane thickness of the ion exchange membrane differs depending on a site, the ion exchange membrane of the present invention is characterized in that, as compared with a membrane, the whole surface of which is flat, a strain is decreased and a surface area can be increased even if their projected areas are almost the same. It is preferred that a difference in membrane thickness should be provided such that the flat portions of the ion exchange membrane are (partially) thinner at the ratio mentioned above than the membrane thickness of both slopes at the upper ends of the convex parts or inclined faces of end portions in the longitudinal direction at the time of corrugation formation in the ion exchange membrane mentioned later. This is because the membrane has a stable structure as a whole, and average electric resistance of the membrane tends to be decreased. If the membrane thickness of the convex parts partially has a thicker portion in addition to a thinner portion than the membrane thickness of the flat portions in the vicinity of ends or the concave parts, the resulting ion exchange membrane also falls within the scope of this technical brief. When a support has plasticity mentioned later and the membrane is formed after corrugation formation, a difference in membrane thickness of the support itself may be provided at the ratio mentioned above between the three combinations of sites described above. As a result, the membrane thickness may differ between any one or more of the three combinations of sites after membrane formation. In this case as well, the same characteristics as above are obtained.

In general, an ion exchange membrane swells in a salt solution having a low salinity and shrinks in salt water having a high salinity. By contrast, the ion exchange membrane of the present invention can prevent a difference in swelling ascribable to a difference in membrane thickness, and as such, can be used over a wide range of salt concentrations and is less deformed or damaged due to swelling even if there is a large difference in salt concentration between two types of solutions contacted with the membrane, for example, as in the case of use in an ED or RED apparatus. Thus, the ion exchange membrane of the present invention can not only be used in a solution with a low salt concentration (ion concentration) but can be used in, for example, a solution having an electric conductivity of 0.05 mS/cm or more or 0.1 mS/cm or more. The ion exchange membrane of the present invention can be used in a solution within a range in which the dissolution of saline matter does not reach a saturated state. Therefore, the electric conductivity of the solution that can be used is less than an electric conductivity in the saturated state of the dissolution of saline matter. The ion exchange membrane of the present invention can also be used when, between two types of solutions differing in salt concentration contacted with the membrane, for example, the solution on the low concentration side has an electric conductivity of 0.05 to 50 mS/cm and the solution on the high concentration side has twice or more, 20 or more times, 50 or more times, or 600 or more times the electric conductivity on the low concentration side. The upper limit of the electric conductivity of the solution on the high concentration side is not particularly limited as long as the dissolution of saline matter does not reach a saturated state. Examples of the upper limit can include 4000 or less times, 1000 or less times, and 700 or less times the electric conductivity on the low concentration side. The ion exchange membrane of the present invention can also be used in, for example, a solution having TDS (total dissolved solid) of 10 ppm (0.001%) or more or 20 ppm (0.002%) or more, and can also be used when, between two types of solutions differing in salt concentration contacted with the membrane, for example, the solution on the low concentration side has TDS of 10 ppm (0.001%) to 35,000 ppm (3.5%) and the solution on the high concentration side has twice or more, 20 or more times, 50 or more times, or 100 or more times the TDS on the low concentration side. The solution on the high concentration side can have an electric conductivity of, for example, 10 to 200 mS/cm, and can have TDS of, for example, 7000 ppm (0.7%) to 200000 ppm (20%).

In the case of using the ion exchange membrane of the present invention in an ion exchange membrane cell comprising a cation exchange membrane and an anion exchange membrane located in a manner opposed to each other, the interval between both the ion exchange membranes can be fixed without the use of a spacer by locating the convex parts in contact with convex parts, concave parts, or flat portions of the other ion exchange membrane. Thus, a flow passage between both the ion exchange membranes can be secured. In this case, it is preferred that an area in which both the ion exchange membranes are in contact with each other should be small because ions do not flow in the portion where the cation exchange membrane and the anion exchange membrane are in contact with each other. The ion exchange membrane of the present invention can narrow a width at the upper ends of the convex parts and can decrease an area at the upper ends. Therefore, even in the case of contacting both the ion exchange membranes with each other, the area of a contact portion between both the ion exchange membranes where ions do not flow can be narrowed, and the surface area of a membrane effective for ion permeation can be increased. In the case of locating a cation exchange membrane and an anion exchange membrane in a manner opposed to each other, and inserting a spacer (e.g., a mesh spacer) between both the ion exchange membranes, it is also preferred that areas in which the ion exchange membranes are in contact with the spacer should be small because ions do not flow in the portions where the ion exchange membranes are in contact with the spacer. The ion exchange membrane of the present invention is in contact with a spacer via the convex parts, further narrows a width at the upper ends of the convex parts, and can decrease an area at the upper ends. Therefore, the area of a contact portion where ions do not flow can be narrowed, and the surface area of a membrane effective for ion permeation can be increased.

In the case of locating a cation exchange membrane and an anion exchange membrane in a manner opposed to each other without contacting both the ion exchange membranes with each other and without inserting a spacer between both the ion exchange membranes, an effective cross-sectional area of a flow passage portion where a solution flows between both the ion exchange membranes can be increased. The surface areas of both the ion exchange membranes contacted with a solution can also be increased. In this case as well, the ion exchange membrane of the present invention is less deformed or damaged and can therefore secure the interval between both the ion exchange membranes. Even if the ion exchange membrane undergoes a slight deflection, the interval between both the ion exchange membranes can be more properly secured by the convex parts whose upper ends are in contact with the other ion exchange membrane. When the ion exchange membrane of the present invention has a support, membrane strength is much better because the support is located along the shapes of the convex parts and the concave parts. Hence, the ion exchange membrane can be prevented from being deformed or damaged when the convex parts are used in contact with the other ion exchange membrane so as to also function as a spacer or when both the ion exchange membranes are in no contact without the use of a spacer. Particularly, root cracks of the convex parts or upper end damage which easily occurs due to a narrow width at the upper ends of the convex parts can be prevented.

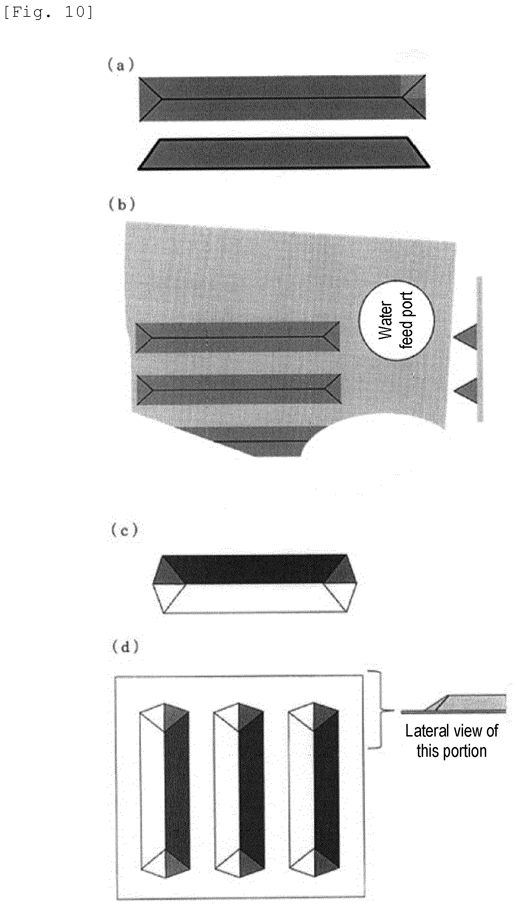

Each of Figures 10(a) to 10(d) is a diagram showing one embodiment of the convex part shape according to the present invention. Both end faces in the longitudinal direction form faces inclined from an upper end toward the flat portions. The upper diagram of Figure 10(a) is a top view of a convex part, and the lower diagram thereof is a lateral view of the convex part. In the convex part of Figure 10(a), the end faces in the longitudinal direction are flat. Figure 10(b) is a diagram showing a portion of an ion exchange membrane provided with the convex parts of Figure 10(a), and shows the surroundings of a water feed port to which a solution is introduced. The left diagram of Figure 10(b) is a top view of convex parts, and the right diagram thereof is a view of the convex part in the longitudinal direction. Figure 10(c) shows an example in which a convex part bulges in the longitudinal direction, and the neighborhood of the center of end faces enlarges so as to jut into the vicinity of ends of the membrane. Figure 10(d) is a diagram showing a portion of an ion exchange membrane provided with the convex parts of Figure 10(c), and the right diagram is a lateral (a direction perpendicular to the longitudinal direction) view of the convex part. The convex parts having one of these shapes may extend from the vicinity of one end to the vicinity of the other end of the ion exchange membrane, or the convex parts having two or more of these shapes may be arranged from the vicinity of an end to the vicinity of the other end. When the width of the concave parts is smaller than that at the lower ends of the convex parts, the number of contact sites of the convex parts for use in an ion exchange membrane cell is increased. Therefore, structural strength brought about by the combination of membranes is enhanced against a difference in pressure between a flow passage on the high salt concentration side and a flow passage on the low salt concentration side, whereas the cross-sectional areas of the flow passages are decreased. From these points of view, when the width of the concave parts is represented by b, the width b of the concave parts is preferably more than 0 and $3 \times a$ or less, more preferably more than 0 and $2 \times a$ or less, further preferably more than 0 and $1 \times a$ or less. The width a at the lower ends of the convex parts is as defined above. The width of the concave parts refers to the width at the positions of boundaries between the convex parts and the concave parts in a cross section perpendicular to the longitudinal direction of the concave parts, and is the width of flat portions. For example, in the ion exchange membrane of Figure 9, the distance between curve C and curve D corresponds to b. The case where b is 0 refers to the case where convex parts continue and the concave parts form an angle between slopes of the convex parts lying next to each other. The ion exchange membrane having the support of the present invention is excellent in membrane strength because the support is located along the shapes of the convex parts and the concave parts. Hence, the ion exchange membrane can be prevented from being deformed or damaged even when used so as to also function as a spacer. Particularly, root cracks of the convex parts or upper end damage which easily occurs due to a narrow width at the upper ends of the convex parts can be prevented.

One embodiment of the manufacturing method of the present invention comprises any one of the steps of: (i) curving a membrane of a plastic polymer having a charged group by pressing against a mold provided with irregularities with flat concave parts to thereby form irregularities in the membrane; (ii) curving a membrane of a plastic polymer having a charged group by pressing against a mold provided with irregularities with flat concave parts to thereby form irregularities in the membrane, followed by cross-linking of the polymer; and (iii) curving a membrane of a plastic polymer having no charged group by pressing against a mold provided with irregularities with flat concave parts to thereby form irregularities in the membrane, followed by introduction of a charged group. The manufacturing method employs a corrugated mold having flat portions that correspond to the vicinity of ends and the concave parts of the ion exchange membrane, and can thereby manufacture an ion exchange membrane having a concavo-convex shape, wherein the ion exchange membrane has flat portions in the vicinity of ends, and convex curves and concave curves resulting from curvatures of the ion exchange membrane itself form convex parts and flat concave parts, respectively, in the concavo-convex shape of the ion exchange membrane. The manufacturing method is suitable as a method for manufacturing an ion exchange membrane for use in the ion exchange of a solution having an electric conductivity of 0.05 mS/cm or more.

A method for manufacturing the ion exchange membrane of the present invention is not particularly limited. The manufacturing method described above is suitable as the method for manufacturing the ion exchange membrane of the present invention. A corrugation formation method in the membrane in the manufacturing method is not particularly limited as long as the method involves curving the membrane by pressing against a mold provided with irregularities.

Examples thereof can include a press method and can include a heat press method of applying heat at the time of press. Figure 17 is a diagram showing one embodiment of the corrugation formation method. The membrane is sandwiched between a lower mold and an upper mold and heat-pressed and thereby curved to form irregularities. Then, the membrane is taken out of the molds to thereby obtain a membrane provided with the irregularities. In the step described above, an ion exchange membrane in which convex curves and concave curves form convex parts and concave parts can be manufactured by curving a membrane of a plastic polymer having a charged group which serves as an ion exchange layer by pressing against a mold provided with irregularities. Also, irregularities may be formed in a membrane of a plastic polymer having a charged group, followed by cross-linking, if necessary, to obtain an ion exchange membrane. Alternatively, irregularities may be formed in an already cross-linked plastic polymer having a charged group to obtain an ion exchange membrane. In the step (iii), the membrane of a plastic polymer having no charged group refers to a membrane that cannot be substantially directly used as an ion exchange membrane, and does not mean only a membrane totally free from a charged group. In the step (iii), irregularities are formed in such a membrane of a plastic polymer having no charged group, followed by the introduction of a charged group to thereby confer ion exchange action to prepare an ion exchange membrane. Before introduction of a charged group or after introduction of a charged group, cross-linking may be performed, if necessary. The step of forming irregularities in a layer of a cross-linked polymer, i.e., a cross-linked membrane, has the following three advantages: firstly, a commercially available cross-linked ion exchange membrane can be directly used. Secondly, little change is made in an existing manufacturing line, and production efficiency is good, because a corrugation formation step is inserted after the step of manufacturing a conventional ion exchange membrane as a flat membrane. Thirdly, a non-cross-linked polymer layer may be immersed in water when irregularities are formed in the polymer layer. In this case, the dimension of irregularities formed with a mold may be difficult to adjust to a designed value, depending on the swelling state of the polymer layer. On the other hand, since the cross-linked membrane rarely swells, a difference between the designed dimension and an actual dimension is small. This step also forms convex parts and concave parts in a membrane of a cross-linked plastic planate polymer having a charged group through convex curves and concave curves resulting from curvatures to obtain an ion exchange membrane.

The plasticity refers to a property of a solid to not return to its original shape after removing external force causing a deformation applied to the solid. The plastic polymer according to the present invention includes a polymer having plasticity at ordinary temperature and a polymer having thermoplasticity by which the polymer is softened and easily moldable by heating and hardened again by cooling. Specifically, the plastic polymer (including the case where the plastic polymer is a support and the case where the plastic polymer has a support) according to the present invention has a property to not return to its original shape after removing external force causing a deformation applied to the plastic polymer (the plastic polymer, when having a support, has the characteristics together with the support), and includes a polymer having plasticity at ordinary temperature and a polymer having thermoplasticity by which the polymer is softened and easily moldable by heating and hardened again by cooling.

When a polymeric molecule having a site where chemical cross-linking can be performed is used as the plastic polymer having a charged group, the polymeric molecule may be cross-linked by heat or light irradiation after formation of the concavo-convex shape. Alternatively, a polymeric molecule having a hydroxy group, such as polyvinyl alcohol, may be chemically cross-linked by being immersed in a solution containing a cross-linking agent such as glutaraldehyde (GA) or ethylene glycol diglycidyl ether. Membrane resistance is low in the absence of cross-linking, and tends to be elevated, as compared with the absence of cross-linking, by performing cross-linking after corrugation formation, which however decreases a membrane water content ratio, enhances ion selectivity, and also improves mechanical strength. Examples of the method for preparing the membrane of a plastic polymer having a charged group in the step described above can include, but are not particularly limited to, a method of casting a plastic polymer having a charged group to prepare a film, and a method of applying a plastic polymer having a charged group onto a base material, drying a coating, and then peeling the coating from the base material to prepare a film.

One embodiment of the manufacturing method of the present invention comprises the step of: (a) curving a plastic support in which a plastic polymer layer having a charged group is disposed on both sides or on one side by pressing against a mold provided with irregularities with flat concave parts to thereby form irregularities in the support, or curving a plastic support in which a plastic polymer layer having no charged group is disposed on both sides or on one side by pressing against a mold provided with irregularities with flat concave parts to thereby form irregularities in the support, followed by introduction of a charged group; or (b) curving a plastic support by pressing against a mold provided with irregularities with flat concave parts to thereby form irregularities in the support, and disposing a polymer layer having a charged group on both sides or one side of the support thus provided with the irregularities, or disposing a plastic polymer layer having no charged group on one side or on both sides of a plastic support, and introducing a charged group, followed by formation of irregularities, or disposing a plastic polymer layer having no charged group on one side or on both sides of a plastic support, and forming irregularities, followed by introduction of a charged group. The manufacturing method employs a corrugated mold having flat portions that correspond to the vicinity of ends and the concave parts of the ion exchange membrane, and can thereby manufacture an ion exchange membrane having a concavo-convex shape, wherein the ion exchange membrane is constituted by at least a support and an ion exchange layer disposed on both sides or one side of the support, and is an ion exchange membrane in which convex parts and flat concave parts of the ion exchange membrane are formed in convex curves and concave curves, respectively, resulting from curvatures of the support.

The manufacturing method is suitable as a method for manufacturing an ion exchange membrane for use in the ion exchange of a solution having an electric conductivity of 0.05 mS/cm or more. A method for manufacturing the ion exchange membrane having the support of the present invention is not particularly limited. The manufacturing method described above is suitable as the method for manufacturing the ion exchange membrane having the support of the present invention. A corrugation formation method in the support in the above step (a) or (b) is not particularly limited as long as the method involves curving the support by pressing against a mold provided with irregularities. Examples thereof can include a press method and can include a heat press method of applying heat at the time of press. Figure 17 is a diagram showing one example of the corrugation formation method. The support in the step (a) or (b) is sandwiched between a lower mold and an upper mold and heat-pressed and thereby curved to form irregularities. Then, the support is taken out of the molds to thereby obtain a support provided with the irregularities. The plasticity refers to a property of a solid to not return to its original shape after removing external force causing a deformation applied to the solid. The plastic support and the plastic polymer according to the present invention include a support and a polymer having plasticity at ordinary temperature and a support and a polymer having thermoplasticity by which the support or the polymer is softened and easily moldable by heating and hardened again by cooling. Hereinafter, each of the steps (a) and (b) will be further described.

[Case of comprising step (a)]

A plastic support in which a plastic polymer layer having a charged group is disposed on both sides or on one side in advance is curved by pressing against a mold provided with irregularities with flat concave parts to thereby form irregularities in the support; or a plastic support in which a plastic polymer layer having no charged group is disposed on both sides or one side is curved by pressing against a mold provided with irregularities with flat concave parts to thereby form irregularities in the support, followed by the introduction of a charged group. According to this method, the polymer layer serving as an ion exchange layer and the support can be curved together to thereby manufacture an ion exchange membrane in which convex parts and concave parts are formed in convex curves and concave curves of the support. The polymer layer may be cross-linked, if necessary, after formation of irregularities in the support or after introduction of a charged group to obtain the ion exchange membrane of the present invention. The advantages of the step of forming irregularities after cross-linking the polymer layer are the same as the three advantages mentioned above. This step also forms convex parts and concave parts in a planate support in which a cross-linked plastic polymer layer having a charged group is disposed on both sides or on one side through convex curves and concave curves resulting from curvatures to obtain an ion exchange membrane.

[Case of comprising step (b)]

A provided plastic support is curved by pressing against a mold provided with irregularities with flat concave parts to thereby form irregularities in the support, and a polymer layer having a charged group is disposed on both sides or on one side of the support thus provided with the irregularities; or a plastic polymer layer having no charged group is disposed on one side or on both sides of a plastic support, and a charged group is introduced, followed by the formation of irregularities; or a plastic polymer layer having no charged group is disposed on one side or on both sides of a plastic support, and irregularities are formed, followed by the introduction of a charged group. According to this method, the polymer layer can be disposed on a support provided with irregularities according to the shape of the support to thereby manufacture an ion exchange membrane in which convex parts and concave parts are formed in convex curves and concave curves of the support. In the step (b), a polymer layer having a charged group is formed after formation of irregularities in a support, and this polymer layer may be cross-linked, if necessary, to obtain the ion exchange membrane of the present invention.

In the case of disposing ion exchange layers on both sides of a support for the ion exchange membrane having the support, the resulting ion exchange membrane can have higher membrane strength. In the case of disposing an ion exchange layer on one side of a support, the resulting ion exchange layer can be thin (e.g., 5 to 50 $\mu$m) and can have low membrane resistance. The support is not particularly limited as long as the support does not interfere with the passage of ions that have permeated the ion exchange layer. Examples thereof can include a thermoplastic porous film, a mesh, a woven fabric, and a nonwoven fabric. The case of disposing ion exchange layers on both sides of a support also includes the case of forming the ion exchange layers in the support, for example, as in the case of impregnating the support with a polymer, and a state in which the support is embedded in the ion exchange layers.

A method for preparing the support in which a polymer layer having a charged group is disposed in the step (a) is not particularly limited, and the support can be prepared, for example, by impregnating a thermoplastic support with a polymer having a charged group or applying a polymer having a charged group to a thermoplastic support. Examples of the preparation method can include a transfer method of casting a polymer to a cast plate (e.g., PET) to prepare a polymer layer, placing a support on the polymer layer in a semidried state, completely drying the polymer layer, and then peeling the resultant from the cast plate. Other examples thereof can include a method of applying a monomer having a charged group to a support or impregnating a support with a monomer having a charged group, and polymerizing the monomer, and a method of applying a polymer having no charged group to a support or impregnating a support with a polymer having no charged group, followed by the introduction of a charged group. The polymer may be cross-linked before or after introduction of a charged group or after corrugation formation. A method for preparing the support in which a polymer layer having no charged group is disposed is not particularly limited, and the support can be prepared, for example, by impregnating a thermoplastic support with a polymer having no charged group or applying a polymer having no charged group to a thermoplastic support.

Examples of the method for disposing a polymer layer having a charged group to the support provided with the irregularities in the step (b) can include, but are not particularly limited to, impregnating the support provided with the irregularities with a polymer having a charged group, and applying a polymer having a charged group to the support provided with the irregularities. Other examples thereof can include a method of forming irregularities in a support in which a plastic polymer layer capable of receiving a charged group is disposed, followed by the introduction of a charged group, a method of applying a polymer having no charged group to the support provided with the irregularities or impregnating the support provided with the irregularities with a polymer having no charged group, followed by the introduction of a charged group, and a method of applying a polymer having no charged group to a support before corrugation formation or impregnating a support before corrugation formation with a polymer having no charged group, and forming irregularities, followed by the introduction of a charged group to the polymer. Examples of the method for disposing a plastic polymer layer having no charged group on one side or on both sides of a plastic support can include, but are not particularly limited to, a method of impregnating a thermoplastic support with a polymer having no charged group or applying a polymer having no charged group to a thermoplastic support. The polymer may be cross-linked before or after introduction of a charged group. The polymer having no charged group in the steps (a) and (b) refers to a polymer that cannot be substantially directly used as an ion exchange membrane, and does not mean only a polymer totally free from a charged group. Some examples of the steps (a) and (b) in the manufacturing method of the present invention are shown in Table 1. The charged layer in Table 1 refers to a polymer layer having a charged group, and the uncharged polymer layer refers to a polymer layer having no charged group. However, the specific steps (a) and (b) are not limited thereto.

[Table 1]

| Step | | Process |
|---|---|---|
| (a) | 1 | Charged sheet (having support)→Concavo-convex formation |
| | 2 | Charged sheet (having support)→Concavo-convex formation->Cross-linking |
| | 3 | Uncharged sheet (having support)→Concavo-convex formation→Charged group introduction |
| | 4 | Uncharged sheet (having support)→Concavo-convex formation->Cross-linking->Charged group introduction |
| | 5 | Uncharged sheet (having support)→Concavo-convex formation→Charged group introduction->Cross-linking |

(continued)

| Step | | Process |
|---|---|---|
| (b) | 1 | Support→Concavo-convex formation→Charged group layer formation |
| | 2 | Support→Concavo-convex formation→Charged group layer formation->Cross-linking |
| | 3 | Support→Charged group layer formation→Concavo-convex formation |
| | 4 | Support→Charged group layer formation→Concavo-convex formation→Cross-linking |
| | 5 | Support→Concavo-convex formation→Uncharged polymer layer application→Charged group introduction |
| | 6 | Support→Concavo-convex formation→Uncharged polymer layer application→Cross-linking→Charged group introduction |
| | 7 | Support→Concavo-convex formation→Uncharged polymer layer application→Charged group introduction→Cross-linking |
| | 8 | Support→Uncharged polymer layer application→Charged group introduction→Concavo-convex formation |
| | 9 | Support→Uncharged polymer layer application→Charged group introduction→Concavo-convex formation→Cross-linking |
| | 10 | Support→Uncharged polymer layer application→Concavo-convex formation→Charged group introduction |
| | 11 | Support→Uncharged polymer layer application→Concavo-convex formation→Cross-linking→Charged group introduction |
| (c) | 1 | Charged sheet (having support and having cross-link)→Concavo-convex formation |
| (d) | 1 | Support→Concavo-convex formation→Radical generation→Polymerization |
| | 2 | Support→Concavo-convex formation→Radical generation→Polymerization→Charged group introduction |
| | 3 | Support→Concavo-convex formation→Radical generation→Polymerization→Cross-linking |
| | 4 | Support→Concavo-convex formation→Radical generation→Polymerization (charged group introduction/cross-linking) |
| | 5 | Support→Radical generation→Polymerization→Charged group introduction→Concavo-convex formation |
| | 6 | Support→Radical generation→Polymerization (Cross-linking)→Charged group introduction→Concavo-convex formation |
| | 7 | Support→Radical generation→Polymerization (charged group introduction/cross-linking)→Concavo-convex formation |
| Remarks | | The support in (d)-1 to (d)-7 may be porous or nonporous. |

One embodiment of the manufacturing method of the present invention comprises any one of the steps of: (A) curving a membrane of a plastic polymer having no charged group by pressing against a mold provided with irregularities with flat concave parts to thereby form irregularities in the membrane, followed by the introduction of a charged group; (B) disposing a polymer layer having no charged group on both sides or on one side of a plastic support, introducing a charged group to the polymer layer to thereby form a plastic support in which a plastic polymer layer having the charged group is disposed on both sides or on one side, and curving the support by pressing against a mold provided with irregularities with flat concave parts to thereby form irregularities in the support; and (C) curving a plastic support by pressing against a mold provided with irregularities with flat concave parts to thereby form irregularities in the support, disposing a polymer layer having no charged group on both sides or on one side of the support thus provided with the irregularities, and introducing a charged group to the polymer layer to thereby dispose the polymer layer having the charged group on both sides or on one side of the support. The step (A) corresponds to the above step (iii), the step (B) corresponds to the case of introducing a charged group in the above step (a), and the step (C) corresponds to the case of introducing a charged group in the above step (b). The manufacturing method can manufacture an ion exchange membrane having a concavo-convex shape, wherein the ion exchange membrane has flat portions in the vicinity of ends, and convex curves and concave curves resulting from curvatures of the ion exchange membrane itself form convex parts and concave parts, respectively, in the concavo-convex shape of the ion exchange membrane, or wherein the ion exchange membrane is constituted by at least a support and an ion exchange layer disposed on both sides or on one side of the support, and is an ion exchange membrane in which convex parts and concave parts of the ion exchange membrane are formed in convex curves and concave curves, respectively, resulting from curvatures of the support (hereinafter, these ion exchange membranes are also collectively referred to as an "ion exchange membrane having a concavo-convex shape"). The manufacturing method is suitable as a method for manufacturing an ion exchange membrane having a concavo-convex shape.

In the present invention, a method for manufacturing an ion exchange membrane when the ion exchange membrane is a graft polymer is not particularly limited. Suitable examples of the method can include a method of curving a plastic polymeric film by pressing against a mold form provided with irregularities to thereby form irregularities in the polymeric film, followed by graft polymerization to thereby convert the polymeric film into an ion exchange membrane. A corrugation formation method in the polymeric film is not particularly limited as long as the method involves curving the polymeric film by pressing against a mold form provided with irregularities. Examples thereof can include a press method and can include a heat press method of applying heat at the time of press.

Figure 17 is a diagram showing one example of the corrugation formation method. The polymeric film is sandwiched between a lower mold and an upper mold and heat-pressed and thereby curved to form irregularities. Then, the polymeric film is taken out of the molds to thereby obtain a polymeric film provided with the irregularities. The plasticity refers to a property of a solid to not return to its original shape after removing external force causing a deformation applied to the solid. The plastic polymeric molecule according to the present invention includes a molecule having plasticity at ordinary temperature and a molecule having thermoplasticity by which the molecule is softened and easily moldable by heating and hardened again by cooling. The taken-out polymeric film is graft-polymerized to thereby convert the polymeric film into an ion exchange membrane. Examples of the method for forming the ion exchange membrane by graft polymerization can include a method of generating radicals in the polymeric film provided with the irregularities, and graft-polymerizing a monomer having a charged group (positively charged group or negatively charged group), and a method of generating radicals in the polymeric film provided with the irregularities, and graft-polymerizing a monomer having a reactive group capable of receiving a charged group through chemical reaction, followed by the introduction of a charged group. Cross-linking may be performed at the time of polymerization, or charged group introduction and cross-linking may be performed at the same time. A method for generating the radicals is not particularly limited and is preferably a method using radiation, more preferably a method using electron beam, $\gamma$ ray, or heavy ion beam. The polymer may be cross-linked, if necessary, after graft polymerization. Further, a corrugated structure may be formed after cross-linking. Some examples of the manufacturing method of the present invention are shown in Table 1, though the manufacturing method is not limited thereto. The advantages of the step of performing graft polymerization as well as cross-linking are the same as the three advantages of the step of forming irregularities after cross-linking a polymer layer as mentioned above. This step can also form convex parts and concave parts in a planate graft polymer through convex curves and concave curves resulting from curvatures to obtain an ion exchange membrane.

In the present invention, irregularities are formed beforehand in a support material such as a polymeric film, and the ion exchange membrane is prepared using the resultant. Therefore, as compared with an ion exchange membrane with a corrugated structure having a support in other preparation methods, the corrugated structure can be more easily formed, and the formed corrugated structure is less deformed. In the present invention, a porous body is not necessarily required to be used as a support material because graft polymerization is utilized for the introduction of a charged group. Hence, the corrugated structure can be easily formed, and the formed corrugated structure is less deformed. The support material is not particularly limited as long as a charged group can be introduced by use of graft polymerization. Examples thereof can include a polymeric base material such as a polymeric film mentioned later. Also, a porous body may be used as the support material according to the present invention. Specifically, the ion exchange membrane of the present invention is an ion exchange membrane obtained by introducing a charged group by graft polymerization, and therefore has a low degree of swelling, has high dimensional stability and physical strength, is easily manufactured, and has high swelling-shrinking resistance because the charged group is bonded to a base material via a covalent bond.

One embodiment of a method for manufacturing the cation exchange membrane having a concavo-convex shape of the present invention can include a method of forming a corrugated structure in a polymeric film such as an ultra-high molecular weight polyethylene film by heat press or the like, then irradiating this film with ionizing radiation to thereby generate radicals in the polymeric film such as an ultra-high molecular weight polyethylene, then performing graft polymerization using a polymerizable monomer alone having a functional group capable of receiving a cation exchange group, or a polymerizable mixture of the polymerizable monomer and a cross-linkable monomer, and, if necessary, introducing a sulfonic acid group using chlorosulfonic acid or the like. One embodiment of a method for manufacturing the anion exchange membrane having a concavo-convex shape of the present invention can include a method of forming a corrugated structure in a polymeric film such as an ultra-high molecular weight polyethylene film by heat press or the like, then irradiating this film with ionizing radiation to thereby generate radicals in the polymeric film such as an ultra-high molecular weight polyethylene, then performing graft polymerization in a polymerizable monomer having a functional group capable of receiving an anion exchange group and a swelling solvent, or a polymerizable mixture containing the polymerizable monomer, a cross-linkable monomer, and a swelling solvent, and introducing an anion exchange group to the functional group of the polymerizable monomer using trimethylamine or the like.

Use of ultra-high molecular weight polyethylene improves the durability of the resulting ion exchange membrane and also suppresses swellability. The ultra-high molecular weight polyethylene preferably has a molecular weight of 300,000 or higher, more preferably a molecular weight of 1,000,000 to 6,300,000. It is particularly preferred to use ultra-high molecular weight polyethylene having a thickness of 20 to 100 pm. This improves the durability of the resulting ion exchange membrane and also suppresses swellability. For the form of the polymeric base material, size and thickness can be appropriately determined. The type of the ultra-high molecular weight polyethylene film based on a manufacturing method is not particularly limited, and any film such as an inflated film or a skived film may be used. Examples of the inflated film include Saxin NewLight Film Innovate (product name) manufactured by Saxin Corp. Examples of the skived film include Saxin NewLight Film (product name) manufactured by Saxin Corp. In addition, examples of the commercially available ultra-high molecular weight polyethylene film include Ultra-High Molecular Weight Polyethylene Film No. 440 manufactured by Nitto Denko Corp.

In addition to those described above, the following film base materials may be used. The polymeric film base material that can be used in the present invention can be an ethylene-tetrafluoroethylene copolymer film that improves the durability of the resulting ion exchange membrane and also suppresses swellability. It is preferred to use an ethylene-tetrafluoroethylene copolymer film having a thickness of 20 to 100 pm. For the form of the base material, size and thickness can be appropriately determined. Examples of the ethylene-tetrafluoroethylene copolymer film according to the present invention include Aflex 1250NT (product name) manufactured by AGC Inc.

In addition to the nonporous films described above, the following porous films can be further used. One embodiment of the method for manufacturing the cation exchange membrane or the anion exchange membrane of the present invention can include a method of forming a corrugated structure in a porous base material made of polyolefin by heat press or the like, then filling a polymerizable mixture containing a polymerizable monomer having a functional group capable of receiving a cation exchange group or an anion exchange group, and a cross-linkable monomer into pores of the polyolefin base material, performing thermal polymerization, and, if necessary, introducing a sulfonic acid group using chlorosulfonic acid or the like, or introducing a quaternary amino group by quaternization with trimethylamine or the like. More specific examples thereof can include a method of filling monomers such as styrene and divinylbenzene or monomers such as chloromethylstyrene and divinylbenzene into pores of a porous base material made of polyethylene or ultra-high molecular weight polyethylene, performing thermal polymerization, and introducing a sulfonic acid group in the former case or a quaternary amino group in the latter case to the obtained polymer.

In the present invention, the polyolefin refers to a polymer of a compound having a double bond in a molecule. Specific examples thereof include a polymer of aliphatic olefin such as polyethylene, polypropylene, polybutylene, and polybutadiene, a polymer of aromatic olefin such as polystyrene, poly-$\alpha$-methylstyrene, and polydivinylbenzene, a polymer of oxygen-containing olefin such as polymethyl methacrylate, polyvinyl acetate, and polyvinyl alcohol, a polymer of nitrogen-containing olefin such as polyacrylonitrile and poly-N-methylpyrrolidone, and a polymer of halogen-containing olefin such as polyvinyl chloride, polyvinylidene chloride, polyvinylidene fluoride, and polytetrafluoroethylene. One of these polyolefins may be used singly, or two or more of the polyolefins may be mixed. Also, a copolymer or a graft copolymer of two or more of the olefins may be used. A polymer having a cross-linked structure by copolymerization with a compound having two or more double bonds, electron beam irradiation, plasma irradiation, ultraviolet irradiation, chemical reaction, or the like may be used. Among them, polyethylene is preferred in terms of chemical stability, cost, etc., and ultra-high molecular weight polyethylene having a molecular weight of 1,000,000 or higher is particularly suitable.

The porous base material according to the present invention is a material in a film form having an average pore diameter of 0.001 to 50 pm, a thickness of 1 to 300 $\mu$m, and a porosity of 1 to 95%. The average pore diameter of the porous base material is preferably 0.005 to 5 pm, particularly preferably 0.01 to 2 $\mu$m. The thickness of the porous base material is preferably 5 to 200 pm, particularly preferably 10 to 150 pm. The porosity of the porous base material is preferably 10 to 90%, particularly preferably 20 to 80%. A wide range of conventionally performed methods can be used without any limitation as a method for manufacturing the porous base material according to the present invention. Examples thereof include a stretching-opening method of preparing a melted polymer into a sheet, further forming a stacked lamellar structure by heat treatment, and peeling a crystal interface by uniaxial stretching, and a phase separation method of melting a polymer and a solvent by heating, preparing a sheet for microphase separation, and performing uniaxial or biaxial stretching while removing the solvent by extraction. Examples of the porous base material according to the present invention can include Hipore (product name) manufactured by Asahi Kasei Corp. and Setela (product name) manufactured by Toray Industries, Inc.

The graft polymerization of the monomer to the polymeric base material can be performed by any of a so-called pre-irradiation method involving the irradiation of the base material with ionizing radiation followed by polymerization reaction with the monomer, and a so-called coincidence irradiation method involving the irradiation of the base material and the monomer at the same time followed by polymerization reaction. It is preferred to use a pre-irradiation method because a homopolymer which is not graft-polymerized to the polymeric base material is produced in a small amount. The pre-irradiation method includes two methods: a polymer radical method of irradiating the polymeric base material in an inert gas, and a peroxide method of irradiating the base material in an atmosphere containing oxygen, both of which can be used in the present invention.

One example of the pre-irradiation method will be described below. First, a polymeric base material is inserted into an oxygen-impermeable plastic bag. Then, this bag is purged with nitrogen to remove oxygen in the bag. Subsequently, this bag containing the base material is irradiated with electron beam, one type of ionizing radiation, at 10 to 400 kGy at -10 to 80°C, preferably around room temperature. Subsequently, the irradiated base material is taken out in atmosphere and transferred to a glass container. Then, a monomer liquid or a monomer solution (solvent dilution) is filled into the container. The monomer liquid or the monomer solution is used after oxygen gas is removed in advance by bubbling with an oxygen-free inert gas, frozen thaw, or the like. Graft polymerization for introducing a graft chain of a polymer to the irradiated base material is carried out usually at room temperature to 80°C, preferably 25 to 70°C. The graft ratio (i.e., percent by weight of the graft chain based on the polymeric base material before polymerization) of the polymer thus obtained is 5 to 300% by mass, more preferably 30 to 200% by mass. The graft ratio can be appropriately changed depending on an irradiation dose, a polymerization temperature, a polymerization time, etc. At a next stage, a cation exchange group or an anion exchange group is introduced to the polymeric base material harboring the graft chain. A conventionally performed method can be used in the introduction of a cation exchange group or an anion exchange group. For example, in the case of introducing a sulfonic acid group as a cation exchange group, a specific example of the method will be given below. The polymeric base material after graft reaction is immersed in a chlorosulfonic acid solution having a concentration of 1% by mass to 50% by mass and containing 1,2-dichloroethane as a solvent at 25 to 80°C for 1 to 72 hours. After reaction for a predetermined time, the membrane is thoroughly washed with water. Then, the membrane is immersed in an aqueous sodium hydroxide solution having a concentration of 1 to 10% by mass for 1 to 24 hours for hydrolysis, and then thoroughly washed with water. Concentrated sulfuric acid, sulfur trioxide, sodium thiosulfate, or the like may be used as a sulfonating agent necessary for sulfonation reaction, and the sulfonating agent is not particularly limited as long as such a sulfonic acid group can be introduced.

As mentioned above, the irregularities of the ion exchange membrane can be formed not only in the ion exchange membrane but in a so-called precursor during the course of manufacturing of the ion exchange membrane. In this context, the precursor refers to (I) a plastic support, (II) a membrane of a plastic polymer having no charged group, the membrane being before or after cross-linking, (III) a membrane of a plastic polymer having a charged group, the membrane being before cross-linking, and (IV) the above membrane (II) or (III), the membrane comprising a plastic support. The precursor membrane refers to the above membranes (II) to (IV). The plastic polymer having a charged group is not particularly limited as long as an ion exchange layer can be formed. Examples of the polymer having anion exchange ability can include a cationic polymer which is a polymer having a cationic group (positively charged group) in a molecular chain. The cationic group may be contained in any of a backbone, a side chain, and an end.

Examples of the cationic group include an ammonium group, an iminium group, a sulfonium group, and a phosphonium group. A polymer containing a functional group, such as an amino group or an imino group, capable of being partially converted into an ammonium group or an iminium group in water is also included in the cationic polymer according to the present invention. Among them, an ammonium group is preferred from the viewpoint of industrially easy availability. Any of a primary ammonium group (ammonium group), a secondary ammonium group (alkylammonium group, etc.), a tertiary ammonium group (dialkylammonium group, etc.), and a quaternary ammonium group (trialkylammonium group, etc.) can be used as the ammonium group. A quaternary ammonium group (trialkylammonium group, etc.) is more preferred. The cationic polymer may contain only one type of cationic group or may contain plural types of cationic groups. Examples of the counter anion of the cationic group include, but are not particularly limited to, a halide ion, a hydroxide ion, a phosphate ion, and a carboxylate ion. Among them, a halide ion is preferred in terms of the ease of obtainment, and a chloride ion is more preferred. The cationic polymer may contain only one type of counter anion or may contain plural types of counter anions. The cationic polymer used in the present invention may be a polymer consisting of only a structural unit containing the cationic group, or may be a polymer consisting of both of a structural unit containing the cationic group and a structural unit containing no cationic group. Such a polymer preferably has cross-linkability. The cationic polymer may consist of only one type of polymer or may comprise plural types of polymers. Also, the polymer may be a mixture of such a polymer containing the cationic group and a polymer containing no cationic group.

Examples of the polymer having cation exchange ability can include an anionic polymer which is a polymer having an anionic group (negatively charged group) in a molecular chain. The anionic group may be contained in any of a backbone, a side chain, and an end. Examples of the anionic group include a sulfonate group, a carboxylate group, and a phosphonate group. A polymer containing a functional group, such as a sulfonic acid group, a carboxyl group, or a phosphonic acid group, capable of being partially converted into a sulfonate group, a carboxylate group, or a phosphonate group in water is also included in the anionic polymer according to the present invention. Among them, a sulfonate group is preferred in terms of a large ion dissociation constant. The anionic polymer may contain only one type of anionic group or may contain plural types of anionic groups. Examples of the counter anion of the anionic group include, but are not particularly limited to, a hydrogen ion and an alkali metal ion. Among them, an alkali metal ion is preferred in terms of few problems with the corrosion of equipment. The anionic polymer may contain only one type of counter cation or may contain plural types of counter cations. The anionic polymer used in the present invention may be a polymer consisting of only a structural unit containing the anionic group, or may be a polymer consisting of both of a structural unit containing the anionic group and a structural unit containing no anionic group. Such a polymer preferably has cross-linkability. The anionic polymer may consist of only one type of polymer or may comprise plural types of polymers. Also, the polymer may be a mixture of such a polymer containing the anionic group and a polymer containing no anionic group.

The polymer having no charged group is not particularly limited as long as a charged group can be introduced later. For example, a polymer obtained by polymerizing styrene, vinyltoluene, or the like as a monomer having an aromatic ring facilitating the introduction of a sulfonic acid group, or a polymer obtained by polymerizing acrylic acid ester, methacrylic acid ester, acrylonitrile, or the like as a monomer having a carboxylic acid group or a nitrile group can be used as a polymer having a functional group capable of receiving a cation exchange group. Such a polymerizable monomer may be mixed with a cross-linkable monomer or a swelling solvent and used as a polymerizable mixture. Examples of the cross-linkable monomer that can be used in the present invention include a monomer listed below: a monomer to which a cross-linked structure can be introduced, i.e., a monomer having at least two vinyl groups. Specific examples thereof include divinylbenzene (DVB), trivinylbenzene, divinyltoluene, divinylnaphthalene, and ethylene glycol dimethacrylate. Chloromethylstyrene is generally used as a monomer for a polymer having a functional group capable of receiving an anion exchange group. A polymer obtained by polymerizing a monomer such as styrene, vinyltoluene, vinylxylene, $\alpha$-methylstyrene, acenaphthylene, vinylnaphthalene, $\alpha$-halogenated styrene, $\alpha,\beta,\beta'$-trihalogenated styrene, chlorostyrene, vinylpyridine, methylvinylpyridine, ethylvinylpyridine, vinylpyrrolidone, vinylcarbazole, vinylimidazole, aminostyrene, alkylaminostyrene, trialkylaminostyrene, acrylic acid amide, acrylamide, or oxime can be used. Further, polyvinyl alcohol can also be used as the polymer having no charged group.

Examples of the swelling solvent that can be used in the present invention include, but are not particularly limited to, a solvent including hydrocarbons such as benzene, xylene, toluene, and hexane, alcohols such as methanol, ethanol, and isopropyl alcohol, ketones such as acetone, methyl isopropyl ketone, and cyclohexane, ethers such as dioxane and tetrahydrofuran, esters such as ethyl acetate and butyl acetate, and a nitrogen-containing compound such as isopropylamine, diethanolamine, N-methylformamide, and N,N-dimethylformamide. At least one or more of these solvents can be appropriately selected and used. In the present invention, together with the above-described polymerizable monomer having a functional group capable of receiving an ion exchange group, or the polymerizable monomer and the cross-linkable monomer, a monomer copolymerizable with these monomers may be used, if necessary. For example, styrene, acrylonitrile, methylstyrene, vinyl chloride, acrolein, methyl vinyl ketone, maleic anhydride, maleic acid, a salt or an ester thereof, itaconic acid, or a salt or an ester thereof is appropriately used as such an additional monomer. The ion exchange membrane (charged sheet) and the membrane of a plastic polymer (uncharged sheet) capable of receiving a charged group for use in the ion exchange membrane of the present invention having no support as well as the ion exchange membrane (charged sheet) in which a support is disposed and the membrane of a plastic polymer (uncharged sheet) capable of receiving a charged group in which a support is disposed for use in the ion exchange membrane of the present invention having the support may need to be cross-linked in advance depending on the type of a monomer for use in membrane formation. This already cross-linked membrane may also be cross-linked again.

The ion exchange membrane cell of the present invention is an ion exchange membrane cell comprising a cation exchange membrane and an anion exchange membrane located in a manner opposed to each other, at least one of the cation exchange membrane and the anion exchange membrane being an ion exchange membrane having a concavo-convex shape, wherein the ion exchange membrane having a concavo-convex shape has flat portions in the vicinity of ends, and convex curves and concave curves resulting from curvatures of the ion exchange membrane itself form convex parts and concave parts, respectively, in the concavo-convex shape of the ion exchange membrane, wherein the concave parts are flat, and the convex parts are located so as to be opposed to the other ion exchange membrane. The ion exchange membrane in the ion exchange membrane cell of the present invention is preferably a graft polymer. The convex parts of the ion exchange membrane having a concavo-convex shape may be located at least partially in contact with the other ion exchange membrane, or the convex parts may be located in no contact with the other ion exchange membrane. The ion exchange membrane in the ion exchange membrane cell of the present invention is preferably the ion exchange membrane of the present invention, and the concave parts are preferably flat.

The ion exchange membrane used in the ion exchange membrane cell of the present invention is less deformed or damaged due to swelling over a wide range of salt concentrations, and even if there is a large difference in salt concentration between two types of solutions contacted with the membrane. Hence, the ion exchange membrane cell of the present invention can not only be used in a solution with a low salt concentration (ion concentration) but can be used in, for example, a solution having an electric conductivity of 0.05 mS/cm or more or 0.1 mS/cm or more. The ion exchange membrane cell of the present invention can be used in a solution within a range in which the dissolution of saline matter does not reach a saturated state. Therefore, the maximum electric conductivity of the solution that can be used is less than an electric conductivity in the saturated state of the dissolution of saline matter. The ion exchange membrane cell of the present invention can also be used when, between two types of solutions differing in salt concentration contacted with the membrane, for example, the solution on the low concentration side has an electric conductivity of 0.05 to 50 mS/cm and the solution on the high concentration side has twice or more, 20 or more times, 50 or more times, or 600 or more times the electric conductivity on the low concentration side. The upper limit of the electric conductivity of the solution on the high concentration side is not particularly limited as long as the dissolution of saline matter does not reach a saturated state. Examples of the upper limit can include 4000 or less times, 1000 or less times, and 700 or less times the electric conductivity on the low concentration side. The ion exchange membrane cell of the present invention can also be used in, for example, a solution having TDS (total dissolved solid) of 10 ppm (0.001%) or more or 20 ppm (0.002%) or more, and can also be used when, between two types of solutions differing in salt concentration contacted with the membrane, for example, the solution on the low concentration side has TDS of 10 ppm (0.001%) to 35,000 ppm (3.5%) and the solution on the high concentration side has twice or more, 20 or more times, 50 or more times, or 100 or more times the TDS on the low concentration side. The solution on the high concentration side can have an electric conductivity of, for example, 10 to 200 mS/cm, and can have TDS of, for example, 7000 ppm (0.7%) to 200000 ppm (20%).

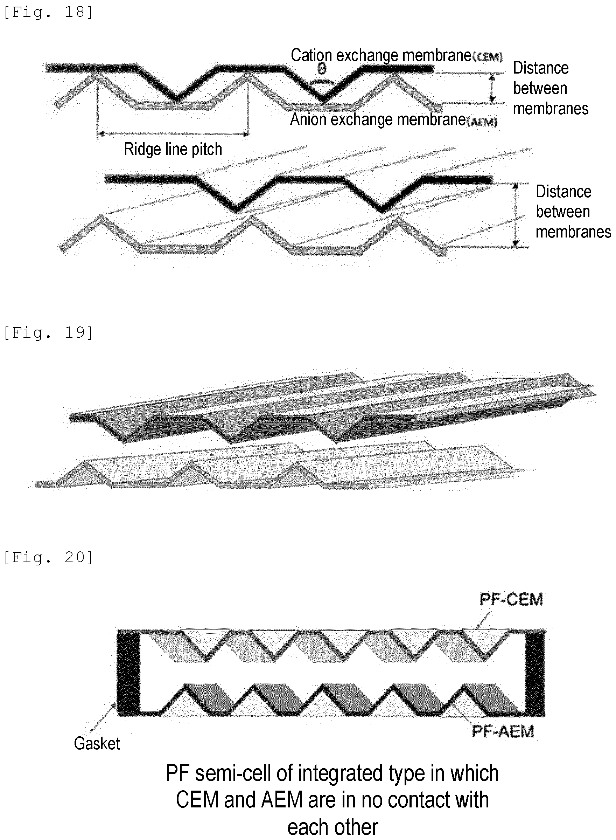

An embodiment in which the convex parts of the ion exchange membrane having a concavo-convex shape are located in no contact with the other ion exchange membrane can include embodiments given below. (i) When any one of the cation exchange membrane and the anion exchange membrane is an ion exchange membrane having a concavo-convex shape, and the other is a flat membrane, the distance between the cation exchange membrane and the anion exchange membrane is longer than a height of the convex parts of the ion exchange membrane having a concavo-convex shape. In this case, both the ion exchange membranes are in no contact with each other. (ii) When both the cation exchange membrane and the anion exchange membrane are ion exchange membranes having a concavo-convex shape and are located such that each other's convex parts are opposed to each other's concave parts without the convex parts overlapping therebetween, the distance between the cation exchange membrane and the anion exchange membrane is longer than a height of the convex parts of one of the ion exchange membranes. In this context, the height of the convex parts of one of the ion exchange membranes refers to the height of higher convex parts if both the ion exchange membranes differ in height of the convex parts. The upper diagram of Figure 18 shows an example in which the membranes are located in contact with each other such that each other's convex parts are opposed to each other's concave parts. In the case of such location, both the ion exchange membranes are in no contact with each other provided that the distance between the cation exchange membrane and the anion exchange membrane is longer than the height of the convex parts of one of the ion exchange membranes. In Figure 18, the distance between the cation exchange membrane and the anion exchange membrane is referred to as distance between membranes. (iii) Both the cation exchange membrane and the anion exchange membrane are ion exchange membranes having a concavo-convex shape, and the distance between the cation exchange membrane and the anion exchange membrane is longer than a combined height of the convex parts of both the ion exchange membranes. In this context, the combined height of the convex parts of both the ion exchange membranes refers to the height of the convex parts of the cation exchange membrane plus the height of the convex parts of the anion exchange membrane. The lower diagram of Figure 18 shows an example in which the convex parts of both the ion exchange membranes are in partial contact with each other. In the specification of the present application, the upper ends of the convex parts that run linearly or curvedly are also referred to as crests (the crests may have a width). The lower diagram of Figure 18 shows an example in which both the ion exchange membranes are put such that their crests intersect each other. (iii) is not the case shown in the lower diagram of Figure 18 where both the ion exchange membranes are in contact with each other, but the case where the ion exchange membranes are distant from each other as shown in Figures 19 and 20, irrespective of the positional relationship between the crests of both the ion exchange membranes and irrespective of the positional relationship between the convex parts or the concave parts of both the ion exchange membranes. In the above embodiments (i) to (iii), the distance between the cation exchange membrane and the anion exchange membrane may be partially changed due to membrane deflection or the like during use so that the convex parts (crests) of one of the ion exchange membranes are in partial contact with the other ion exchange membrane, and such a case is not excluded from the scope of the present invention as long as the conditions described above are satisfied at the time of manufacturing of the ion exchange membrane cell.

Particularly, from the viewpoint of the electric resistance and pressure loss of a flow passage of a solution on the low concentration side, the distance between the cation exchange membrane and the anion exchange membrane can be, for example, more than 15 $\mu$m and 3000 pm or less or more than 25 $\mu$m and 3000 pm or less in the case of the above (i) and (ii), and can be, for example, more than 30 $\mu$m and 3000 pm or less or more than 50 $\mu$m and 3000 pm or less in the case of the above (iii) where the cation exchange membrane and the anion exchange membrane are opposed to each other such that their crests intersect each other. The height of the convex parts of the ion exchange membrane having a concavo-convex shape can be, for example, 15 to 1000 μm or 25 to 300 μm. Alternatively, the distance between the cation exchange membrane and the anion exchange membrane can be, for example, more than 15 μm and 3000 pm or less, more than 25 μm and 3000 pm or less, 15 to 250 pm, or 25 to 100 μm in the case of the above (i) and (ii), and can be, for example, more than 30 μm and 3000 pm or less, more than 50 μm and 3000 pm or less, 15 to 250 pm, or 25 to 100 μm in the case of the above (iii) where the cation exchange membrane and the anion exchange membrane are opposed to each other such that their crests intersect each other. The height of the convex parts of the ion exchange membrane having a concavo-convex shape can be, for example, 15 to 1000 pm, 25 to 300 pm, 15 to 250 pm, or 25 to 100 pm.

One embodiment of the ion exchange membrane cell of the present invention in which the convex parts of the ion exchange membrane having a concavo-convex shape are located in contact with the other ion exchange membrane is an ion exchange membrane cell comprising a cation exchange membrane and an anion exchange membrane located in a manner opposed to each other, at least one of the cation exchange membrane and the anion exchange membrane being an ion exchange membrane having a concavo-convex shape, wherein the ion exchange membrane having a concavo-convex shape is a membrane in which the ion exchange membrane itself has a curved shape, and convex curves and concave curves of the ion exchange membrane form convex parts and concave parts, respectively, in the concavo-convex shape of the ion exchange membrane, wherein the convex parts of the ion exchange membrane having a concavo-convex shape are located in contact with the other ion exchange membrane. The ion exchange membrane having a concavo-convex shape may be constituted by at least a support and an ion exchange layer disposed on both sides or on one side of the support, have flat portions in the vicinity of ends, and be an ion exchange membrane in which convex parts and concave parts of the ion exchange membrane are formed in convex curves and concave curves, respectively, resulting from curvatures of the support. The ion exchange membrane in the ion exchange membrane cell of the present invention is preferably the ion exchange membrane of the present invention. In the ion exchange membrane cell of the present invention, it is preferred that both the cation exchange membrane and the anion exchange membrane should be ion exchange membranes having a concavo-convex shape, and a portion of the convex parts of the cation exchange membrane should be located in contact with a portion of the convex parts of the anion exchange membrane.

The upper diagram of Figure 18 is an example of one embodiment in which a cation exchange membrane having a concavo-convex shape and an anion exchange membrane having a concavo-convex shape are located such that their convex parts are opposed to each other. In this example, upper ends of the convex parts of one of the membranes are located in contact with the concave parts of the other membrane. Thus, (ii') when both the cation exchange membrane and the anion exchange membrane are ion exchange membranes having a concavo-convex shape, wherein each other's convex parts are opposed to each other's concave parts without the convex parts overlapping therebetween, and upper ends of the convex parts of at least one of the membranes are located in contact with the concave parts of the other membrane, and (i') when any one of the cation exchange membrane and the anion exchange membrane is an ion exchange membrane having a concavo-convex shape, and the other is a flat membrane, wherein upper ends of the convex parts of one of the ion exchange membranes are located in contact with the flat portions of the other ion exchange membrane, the distance between both the ion exchange membranes (distance between membranes) can be, for example, 15 to 1000 pm or 25 to 300 μm, particularly, from the viewpoint of the electric resistance and pressure loss of a flow passage of a solution on the low concentration side. Likewise, the height of the convex parts of the ion exchange membrane can be, for example, 15 to 1000 pm or 25 to 300 μm. Alternatively, the distance between both the ion exchange membranes (distance between membranes) can be, for example, 15 to 1000 pm, 25 to 300 pm, 15 to 250 pm, or 25 to 100 pm, particularly, from the viewpoint of the electric resistance and pressure loss of a flow passage of a solution on the low concentration side. The height of the convex parts of the ion exchange membrane can be, for example, 15 to 1000 pm, 25 to 300 pm, 15 to 250 pm, or 25 to 100 pm. In Figure 18, the convex parts of both the ion exchange membranes have the same height. The height of the convex parts of one of the membranes may be larger than that of the other membrane.

The lower diagram of Figure 18 shows an example in which a cation exchange membrane having a concavo-convex shape and an anion exchange membrane having a concavo-convex shape are located such that their convex parts are opposed to each other, and upper ends of the convex parts of both the ion exchange membranes are in contact with each other. Thus, (iii') when both the cation exchange membrane and the anion exchange membrane are ion exchange membranes having a concavo-convex shape, wherein the convex parts of both the ion exchange membranes are located at least partially in contact with each other, the distance between both the ion exchange membranes can be, for example, 15 to 1000 pm or 25 to 300 μm, and can be, for example, 15 to 1000 pm, 25 to 300 pm, 15 to 250 pm, or 25 to 100 pm, particularly, from the viewpoint of the electric resistance and pressure loss of a flow passage of a solution on the low concentration side. In the case of (iii'), the distance between membranes is twice the distance of (i') and (ii') even if a membrane having the same height of the convex parts as in (i') and (ii') is used. Therefore, the height of the convex parts of the membrane may be half the height of (i') and (ii'). Specifically, the height of the convex parts of the ion exchange membrane can be, for example, 7.5 to 500 pm or 12.5 to 150 μm, and can be, for example, 7.5 to 500 pm, 12.5 to 150 pm, 7.5 to 125 pm, or 12.5 to 50 $\mu$m. Both when upper ends of the convex parts of the ion exchange membrane having a concavo-convex shape are located in no contact with the other ion exchange membrane and when the upper ends are located in contact with the other ion exchange membrane, the convex parts of both the ion exchange membranes are not necessarily required to have the same height. The height of the convex parts of one of the ion exchange membranes may be larger than that of the other ion exchange membrane. In the specification of the present application, the upper ends of the convex parts that run linearly or curvedly are also referred to as crests (the crests may have a width). Both the ion exchange membranes may be put such that their crests match each other, or may be put such that their crests intersect each other. The lower diagram of Figure 18 shows an example in which the ion exchange membranes are put such that their crests intersect each other.

Each of Figures 19 and 20 shows an example in which the crests intersect each other in no contact. In the present invention, the phrase "crests intersect each other" means that the crests of the cation exchange membrane and the anion exchange membrane located in a manner opposed to each other differ in extending direction and are seen to intersect each other when the crests of both the ion exchange membranes are viewed from above the ion exchange membranes. This phrase includes both the case where the crests of both the ion exchange membranes are in contact with each other and the case where the crests are in no contact with each other. In (i') and (ii') among the aforementioned forms (i'), (ii'), and (iii') of the cation exchange membrane and the anion exchange membrane located, only spaces surrounded by the convex parts and the flat portions of the membranes form flow passages which are slightly narrow flow passages. By contrast, in the case of the form (iii'), flow passages of both the convex parts exist between both the ion exchange membranes. Therefore, the flow passages are wide and are unlikely cause pressure loss. In the present invention, the convex parts of the ion exchange membranes in contact with each other may be no longer in contact due to membrane deflection or the like during use, and such a case is not excluded from the scope of the present invention as long as the convex parts are in contact with each other at the time of manufacturing of the ion exchange membrane cell.

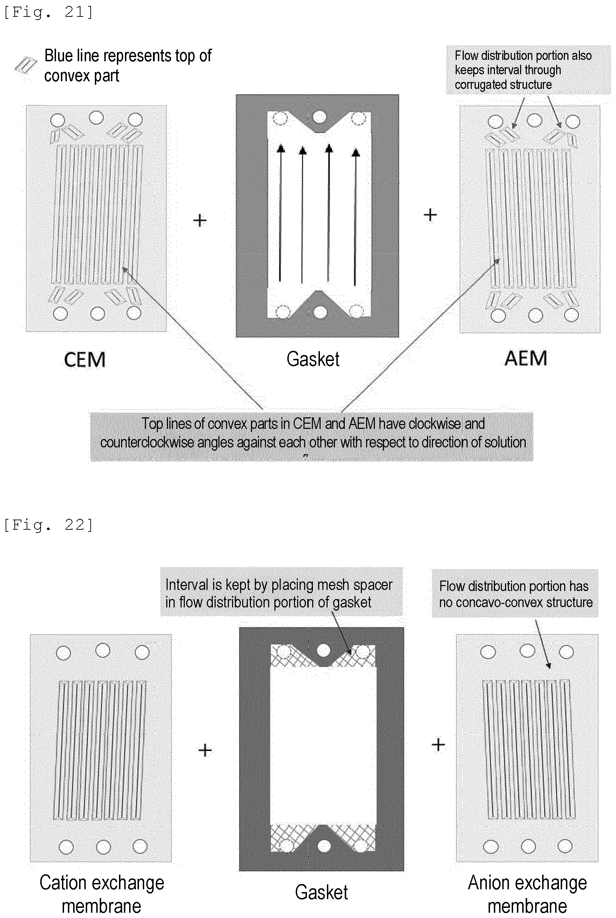

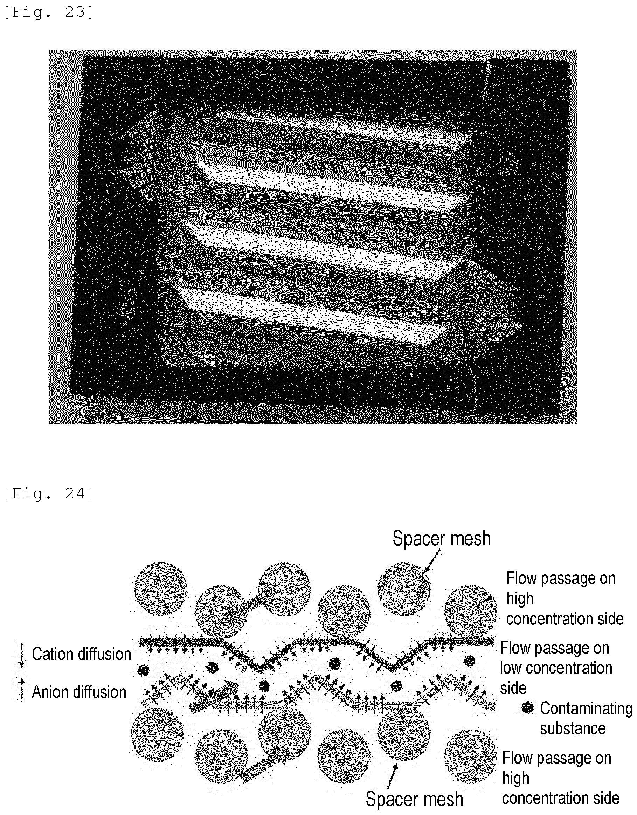

Each of Figures 21 and 22 shows an example of one embodiment in which the convex parts are formed by staggering the extending direction of the convex parts of the cation exchange membrane and the extending direction of the convex parts of the anion exchange membrane (changing the angles of the extending directions) such that their crests intersect each other when both the ion exchange membranes are put. In Figures 21 and 22, the convex parts are formed such that the direction of tilt of one of the ion exchange membranes (CEM) and the direction of tilt of the other ion exchange membrane (AEM) are opposite. In this way, the crests can be allowed to intersect each other. Figure 23 is a photograph of a model showing the concavo-convex shape of the ion exchange membrane for use in Figures 18 to 22 for easy understanding. In this model, the corrugated structure is expressed more largely than in reality for easy understanding of the structure. The actual corrugated structure is small, and the structures of many irregularities are arranged in one cell according to the size of the cell. In Figures 21 and 22, both the ion exchange membranes are fixed so as to sandwich a gasket which is a frame having a hollow portion corresponding to the concavo-convex shape portions of the ion exchange membranes. Portions that come into contact with four walls of the gasket, in each ion exchange membrane, i.e., the vicinity of ends of the ion exchange membrane according to the present invention, are flat. When the cell is assembled, a solution is supplied from openings (in the drawings, round openings in the neighborhood of an upper end and in the neighborhood of a lower end) of a flow distribution portion formed in each ion exchange membrane to between both the ion exchange membranes. Figure 21 shows the case where the flow distribution portion also keeps a constant interval through the corrugated structure of the ion exchange membrane. Figure 22 shows the case where a membrane interval is kept constant in the flow distribution portion using a conventional mesh spacer. The former case has the advantage of reducing the pressure loss of the flow distribution portion. However, a conventional mesh spacer may be used as the flow distribution portion because of complicated manufacturing.

Figure 24 is a diagram schematically showing the flow of a salt solution and ions in the cell of Figure 21. The salt solution is supplied to the cell in the extending direction (the direction of extension) of the convex parts. Both the ion exchange membranes, when put such that the crests intersect each other in contact, are fixed at each point where the crests intersect each other. Hence, an effective membrane area to be permeated by ions can be increased because the contact area between the cation exchange membrane and the anion exchange membrane is decreased. Also, the flow of the salt solution between both the ion exchange membranes is smooth owing to the absence of an unnecessary spacer or convex structure that hinders solution flow. Furthermore, a flow passage is less clogged by the attachment of a contaminating substance owing to the absence of a hydrophobic portion such as a nonconductive spacer susceptible to the attachment of a contaminating substance and the absence of a convex structure that hinders the flow of a contaminating substance. Besides, a liquid easily goes beyond the convex parts into the flat concave parts which may be regarded as next lanes. Such liquid flow occurs between both the ion exchange membranes, i.e., the cation exchange membrane and the anion exchange membrane, and can reduce ion stagnation to thereby attenuate local increase in concentration of a solution responsible for decrease in generated voltage in RED power generation or local decrease in salinity responsible for membrane burning or membrane breakage in ED. Thus, the possibility that a contaminating substance attaches is low even if the height of a flow passage (here, the interval between the cation exchange membrane and the anion exchange membrane) is narrowed. Therefore, this width can be narrowed, and synergistic effects with the increased effective membrane area enable drastic reduction in electric resistance of a flow passage to be properly performed. Particularly, when a cation exchange membrane having a concavo-convex shape and an anion exchange membrane having a concavo-convex shape are located such that their convex parts are opposed to each other and the convex parts of both the ion exchange membranes are in contact with each other, a flow passage has a larger cross-sectional area than that of a conventional profiled membrane and can also thereby reduce pump energy necessary for suppressing increase in pressure loss. This structure has high strength, easily increases an area, and enables the cell to be manufactured at low cost.

An angle formed by the crests of each ion exchange membrane with respect to the direction of solution flow is not particularly limited. In this context, the direction of solution flow is as follows. A solution flows from an inlet toward an outlet in a solution flow passage formed when an intermembrane gap between a pair of ion exchange membranes located in parallel and such that their convex parts are opposed to each other is held in a gasket (frame) for sealing the vicinity of ends of each membrane in a constituted ion exchange membrane stack (cell) mentioned later. In this respect, the solution flows the inlet side toward the outlet side along two parallel sides of the gasket opposed to each other so as to sandwich the flow passage. A direction parallel to these sides serves as the direction of solution flow. The direction of solution flow is schematically indicated by arrows in the drawing of the gasket of Figure 21. A larger angle formed by the crests of the ion exchange membrane with respect to the direction of solution flow increases the flowing distance of the solution and therefore elevates the liquid sending resistance of the flow passage. When the convex parts are in contact with each other, the number of contact portions between the cation exchange membrane and the anion exchange membrane is increased. Therefore, strength against a difference in pressure between flow passages is enhanced. From these points of view, when the convex parts of one of the ion exchange membranes are located in no contact with the other ion exchange membrane, the angle formed by the crests of the ion exchange membrane with respect to the direction of solution flow is preferably 0 to 45° (0° represents being parallel to the direction of solution flow), more preferably 0 to 30°, 0 to 15°, or 1 to 9°. When both the cation exchange membrane and the anion exchange membrane are ion exchange membranes having a concavo-convex shape, a preferred range of an angle formed by the crests of both the ion exchange membranes can be 0 to 90°, more preferably 0 to 45°, 2 to 30°, 2 to 18°, or 2 to 15°. In this context, when each other's convex parts are in no contact, i.e., when each other's crests are in no contact, the angle formed by the crests of both the ion exchange membranes refers to an intersecting angle between the crests that intersect each other on different planes.

When the convex parts of one of the ion exchange membranes are located in contact with the other ion exchange membrane, the angle formed by the crests of the ion exchange membrane with respect to the direction of solution flow is preferably 0 to 45° (0° represents being parallel to the direction of solution flow), more preferably 0 to 30° or 1 to 15°. When both the cation exchange membrane and the anion exchange membrane are ion exchange membranes having a concavo-convex shape, a preferred range of an angle formed by the crests of both the ion exchange membranes can be 1 to 90°, more preferably 1 to 45°, 2 to 30°, 2 to 18°, or 2 to 15°. It is preferred that each ion exchange membrane should be disposed such that the faces of both the ion exchange membranes facing each other are parallel to each other and a line segment that bisects an angle formed by their crests facing each other matches the direction of solution flow. A mold necessary for manufacturing the ion exchange membranes can be of one type by locating the ion exchange membranes such that their crests facing each other become line-symmetric as mentioned above. If there is a gap that permits insertion of a mesh spacer between the ion exchange membrane having a concavo-convex shape and the ion exchange membrane opposed thereto, a mesh spacer may be inserted to between both the ion exchange membranes. In this case as well, the ion exchange membrane of the present invention can increase an effective membrane area to be permeated by ions because a width at the upper ends of the convex parts is easily narrowed and a contact area with the mesh portion in which ions do not flow can be narrowed. Gently inclined convex parts are easily formed. Therefore, the attachment of a contaminant in a fluid can be prevented, and a flow passage can be widened. The thickness of the mesh spacer (the wire diameter of the mesh) can be decreased to the extent that the facing convex parts of both the ion exchange membranes are present. Therefore, the pressure loss of a flow passage and the electric resistance between flow passages can also be reduced. An angle formed by the crests of the ion exchange membrane with respect to the direction of solution flow, and an angle formed by the crests of the cation exchange membrane and the anion exchange membrane are the same as in the case where no mesh spacer is inserted.

The ion exchange membrane cell of the present invention may be an ion exchange membrane cell comprising a cation exchange membrane and an anion exchange membrane located in a manner opposed to each other, both the cation exchange membrane and the anion exchange membrane being ion exchange membranes having convex parts and concave parts that extend linearly or curvedly, wherein the convex parts of the cation exchange membrane and the convex parts of the anion exchange membrane are located so as to intersect each other. The phrase "located so as to intersect each other" includes the case where the convex parts of the cation exchange membrane and the convex parts of the anion exchange membrane are located in contact with each other and the case where the convex parts are located in no contact with each other. The ion exchange membrane in the ion exchange membrane cell is preferably an ion exchange membrane having a concavo-convex shape, wherein the ion exchange membrane itself has a curved shape, and convex curves and concave curves of the ion exchange membrane form convex parts and concave parts, respectively, in the concavo-convex shape of the ion exchange membrane. Also, the ion exchange membrane in the ion exchange membrane cell is preferably an ion exchange membrane having a concavo-convex shape, wherein the ion exchange membrane is constituted by at least a support and an ion exchange layer disposed on both sides or on one side of the support, has flat portions in the vicinity of ends, and is an ion exchange membrane in which convex parts and concave parts of the ion exchange membrane are formed in convex curves and concave curves, respectively, resulting from curvatures of the support.

The ion exchange membrane cell of the present invention is suitable as a cell for RED power generation and ED. The ion exchange membrane of the present invention can prevent a difference in swelling ascribable to a difference in place (a difference in membrane thickness) in the membrane because the convex parts and the other portions rarely differ in membrane thickness. Thus, the ion exchange membrane cell using the ion exchange membrane of the present invention can prevent the ion exchange membrane from being deformed or damaged due to swelling over a wide range of salt concentrations, and even if there is a large difference in salt concentration between two solutions contacted with the membrane. For example, a solution having an electric conductivity of 0.05 to 50 mS/cm can be allowed to flow on the low salt concentration side, and a solution having twice or more or 20 or more times the electric conductivity on the low salt concentration side can be allowed to flow as a solution on the high salt concentration side. Also, a solution having TDS of 10 ppm (0.0010) to 35,000 ppm (3.5%) can be allowed to flow on the low salt concentration side, and a solution having twice or more or 20 or more times the TDS on the low salt concentration side can be allowed to flow as a solution on the high salt concentration side. The electric conductivity of river water is in a range on the order of 0.1 to 0.25 mS/cm, and the electric conductivity of sea water is on the order of 50 mS/cm. For use in a cell for RED power generation, examples of the solution on the low salt concentration side can include a solution having an electric conductivity of 0.05 to 50 mS/cm, and examples of the solution on the high salt concentration side can include a solution having an electric conductivity of 10 to 200 mS/cm.

For use in RED power generation, it is desirable that the cell shown in Figure 24 should employ a mesh spacer of a conventional approach in a flow passage on the high concentration side to thereby sufficiently keep the strength of the cell, in terms of cost, strength, etc. In this respect, a state is preferred in which CEM and AEM are supported by the mesh spacer on the high concentration side by rendering a pressure on the low concentration side slightly higher than that on the high concentration side. This is because, in the reverse case, there is a possibility that the convex parts are partially deformed or damaged due to strong force applied to a point contact or line contact portion between CEM and AEM. However, such partial deformation of this portion does not become a large problem unless the membrane is damaged. In a conventional cell structure where a spacer is disposed between flat membranes, usually, a difference in pressure is not actively made because this leads to troubles such as liquid leakage. In the conventional cell, the disassembly and washing of the cell is performed in order to remove pollutants. However, this requires labor and cost and in addition, might lead to damages on a membrane or spacer member. The technique of the present invention enables the cell to be washed without disassembly because pollutants are unlikely to be deposited or pollutants, if deposited, can be easily removed by physical washing such as backwashing or chemical washing such as acid, alkali, or chlorine injection. In this case, the cell does not have to be disassembled and can therefore be of integrated type in which the cation exchange membrane and the anion exchange membrane are joined to a gasket so as to sandwich the gasket. The cell of integrated type produces high current efficiency for ED and produces a high energy conversion rate for RED because a liquid from a flow passage on the low salt concentration side, such as fresh water, no longer leaks out. In addition, the advantage of lower cost can be obtained because the number of components of the cell is halved.

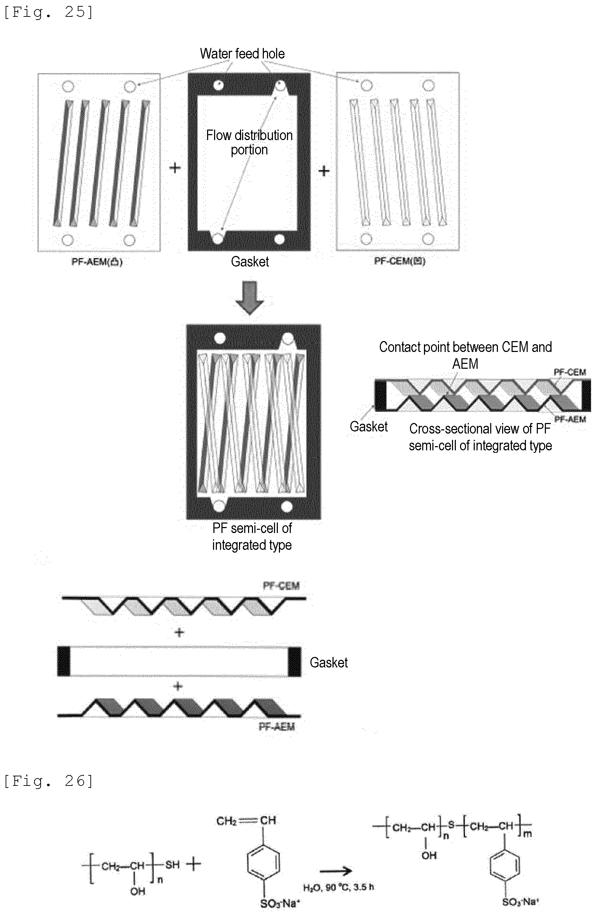

Figure 25 is a diagram showing one embodiment of the ion exchange membrane cell of the present invention and shows an example of the cell of integrated type. In this example, the cell is prepared, for example, by placing a gasket on the front face of an anion exchange membrane (PF-AEM) having a concavo-convex shape on the upper left side in the drawing, and then placing thereon a cation exchange membrane (PF-CEM) having a concavo-convex shape on the right side such that the cation exchange membrane is opposed to PF-AEM in an orientation shown in the drawing (the right diagram is a back view) . "PF" is an abbreviation of profiled. In the semi-cell (a portion of the cell is referred to as a semi-cell; the same holds true for the description below) of integrated type of Figure 25, as shown in the intermediate diagram, the cation exchange membrane and the anion exchange membrane are put such that their convex parts come into contact with each other at one or more points. Each membrane is joined to the gasket between both the ion exchange membranes. The lower diagram is a cross-sectional view of a manner in which PF-AEM and PF-CEM are incorporated to the gasket. The semi-cell of integrated type is prepared by placing the gasket on one of the ion exchange membranes, placing thereon the other ion exchange membrane, and joining them. In each of the drawings mentioned above, the magnitude relationships of some portions may be expressed in an exaggerated manner.

**Examples**

Hereinafter, the present invention will be described in more detail with reference to Examples. The present invention is not limited by these Examples.

Polymers and ion exchange membranes used in Examples and Comparative Examples were provided as follows.

1. PVA-based block copolymer (PVA-b-PSSS)
2. Commercially available cation exchange membrane C-CEM: Fumasep(R) FKS-50 (Fumatech BWT GmbH, Germany)
3. Commercially available anion exchange membrane C-AEM: Fumasep(R) FAS-50 (Fumatech BWT GmbH, Germany)
4. Polyvinyl alcohol (PVA) (manufactured by FUJIFILM Wako Pure Chemical Corp.)

(Synthesis of PVA-b-PSSS)

To a separable flask, predetermined amounts of PVA having a thiol group at one end (provided by Kuraray Co., Ltd.), a monomer having a cation exchange group (official name: Tosoh SSS), and deionized water as a solvent were added, and heating and stirring were performed at 90°C for 30 minutes under nitrogen conditions to completely dissolve the starting materials. Then, polymerization was performed at 90°C for 1.5 hours while a 0.99 wt% aqueous V-50 (2,2'-azobis(2-methylpropionamidine) dihydrochloride) solution was sequentially added dropwise to the reaction solution. After 1.5 hours, the sequential addition of the initiator was stopped, and additional polymerization was further performed at 90°C for 2 hours. After the completion of polymerization, a large amount of acetone was added to the reaction solution to deposit and precipitate a polymerization product (PVA-b-PSSS) . The deposited precipitate was recovered and dried under reduced pressure. The reaction formula of PVA-b-PSSS is shown in Figure 26.

(Preparation of membrane using PVA-b-PSSS)

PVA-b-PSSS was weighed and placed in a 500 mL Erlenmeyer flask, to which ion exchange water was then added so as to attain a polymer concentration of 3.3 wt%. The polymer was dissolved while the Erlenmeyer flask was stirred at 90°C. Then, the solution was casted onto an acrylic plate at 50°C and cast-molded to obtain a PVA-b-PSSS membrane.

[Examples 1 to 3]

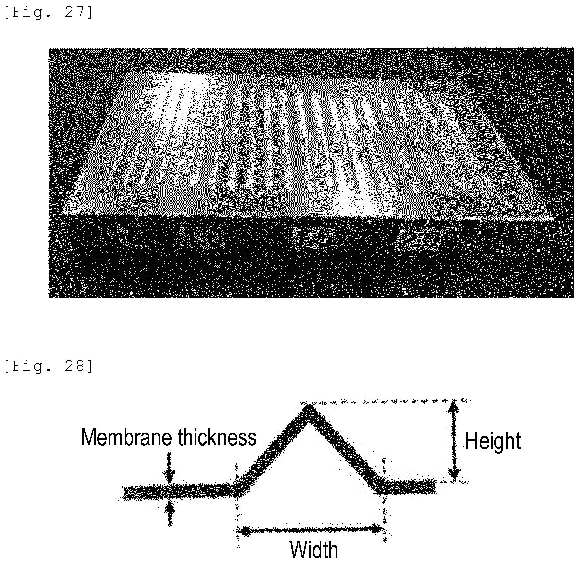

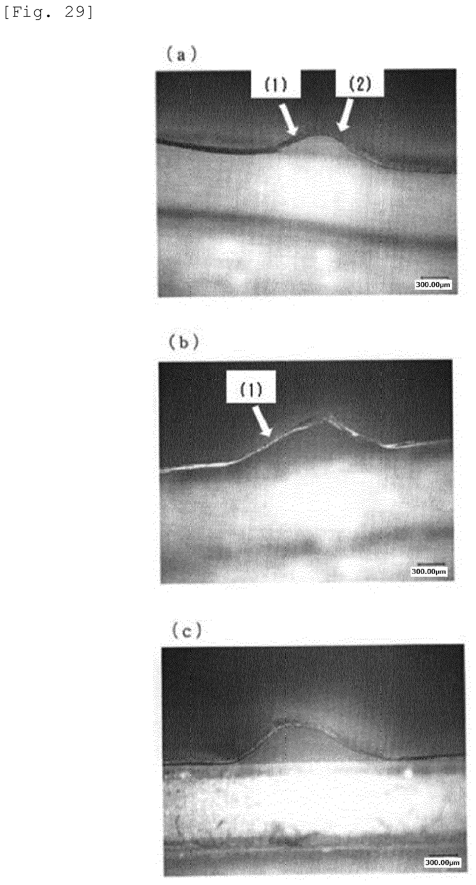

The PVA-b-PSSS membrane, C-CEM, and C-AEM were each placed on the aluminum mold shown in Figure 27, and heat-pressed with electric soldering iron set to the predetermined temperature shown in Table 2 to form a concavo-convex shape on the membranes to obtain ion exchange membranes of Examples 1 to 3. The obtained ion exchange membranes of Examples 1 to 3 are abbreviated to PVA-PFCEM, C-PFCEM, and C-PFAEM, respectively. In Example 1, the PVA-b-PSSS membrane thus provided with the concavo-convex shape was heat-treated at 140°C for 30 minutes and immersed in a 2 M aqueous $Na_2SO_4$ solution at 25°C for 2 hours. This membrane was immersed in a 0.05 vol% aqueous GA solution for 6 hours under acidic conditions, then cross-linked, and then immersed in a 0.5 M aqueous NaCl solution. In the aluminum mold, V-shaped grooves having depths of 0.5 mm, 1.0 mm, 1.5 mm, and 2.0 mm (5 grooves each) were engraved at equal intervals, and 0.5 mm was used this time. Each obtained membrane provided with the concavo-convex shape was photographed under an optical microscope (manufactured by Keyence Corp., VHX-1000), and the form of the corrugated structure was observed while the height of a convex part, the width at a lower end of the convex part portion, and the membrane thickness of a flat portion were measured. In this context, Figure 28 shows the measurement positions of the height of a convex part, the width at a lower end of the convex part portion, and the membrane thickness. Figure 29 shows cross-sectional photographs of the membranes. Table 3 shows the membrane thickness, the height of a convex part, and the width at a lower end of the convex part portion measured from this photograph. Figure 29(a) is the photograph of Example 1, Figure 29(b) is the photograph of Example 2, and Figure 29(c) is the photograph of Example 3. Not only the membrane thickness of the flat portion shown in Figure 28 but the membrane thickness of the convex part was also measured. The membrane thickness of the convex part was measured at the sites indicated by (1) and (2) in Figure 29(a) as to Example 1, and measured at the site indicated by (1) in Figure 29(b) as to Example 2. The membrane thickness of the convex part was read from the photograph using a scale. As a result, the membrane thickness was 100 in the neighborhood of the center of the side face of the convex part in Example 1 (Figure 29(a) (1)) and was 50 in the neighborhood of the top of the convex part (Figure 29(a) (2)) when the membrane thickness of the flat portion was defined as 100. Likewise, the membrane thickness was 80 in the neighborhood of the center of the side face of the convex part in Example 2 (Figure 29(b) (1)) when the membrane thickness of the flat portion was defined as 100.

[Table 2]

|  | Type of membrane | Heat press temperature (°C) |
|---|---|---|
| Example 1 | PVA-PFCEM | 220 |
| Example 2 | C-PFCEM | 160 |
| Example 3 | C-PFAEM | 160 |

[Table 3]

|  | Type of membrane | Membrane thickness ($\mu$m) | Height ($\mu$m) | Width of lower end portion ($\mu$m) |
|---|---|---|---|---|
| Example 1 | PVA-PFCEM | 69 | 300 | 1330 |
| Example 2 | C-PFCEM | 46 | 415 | 1900 |
| Example 3 | C-PFAEM | 46 | 404 | 1830 |

[Comparative Examples 1 to 4]

Table 4 shows materials of membranes used in Comparative Examples 1 to 4.

[Table 4]

|  | Type of membrane | Polymer |
|---|---|---|
| Comparative Example 1 | PVA Noncharged membrane | PVA |
| Comparative Example 2 | PVA-CEM | PVA-b-PSSS |
| Comparative Example 3 | C-CEM | C-CEM |
| Comparative Example 4 | C-AEM | C-AEM |

In Comparative Example 1, PVA was weighed and placed in a 500 mL Erlenmeyer flask, to which ion exchange water was then added so as to attain a polymer concentration of 5.0 wt%. The polymer was dissolved while the Erlenmeyer flask was stirred at 90°C. Then, the solution was casted onto an acrylic plate at 50°C and cast-molded. The obtained membrane was heat-treated at 120°C for 30 minutes and immersed in a 2 M aqueous $Na_2SO_4$ solution at 25°C for 2 hours. This membrane was immersed in a 0.05 vol% aqueous GA solution for 6 hours under acidic conditions. Then, the membrane was immersed in a 0.5 M aqueous NaCl solution to obtain a membrane of Comparative Example 1. In Comparative Example 2, the PVA-b-PSSS membrane was heat-treated at 140°C for 30 minutes and immersed in a 2 M aqueous $Na_2SO_4$ solution at 25°C for 2 hours. This membrane was immersed in a 0.05 vol% aqueous GA solution for 6 hours under acidic conditions, then cross-linked, and then immersed in a 0.5 M aqueous NaCl solution. In Comparative Example 3, the commercially available cation exchange membrane C-CEM was directly used. In Comparative Example 4, the commercially available anion exchange membrane C-AEM was directly used. All the membranes of Comparative Examples 1 to 4 were flat membranes.

(Measurement of membrane potential)

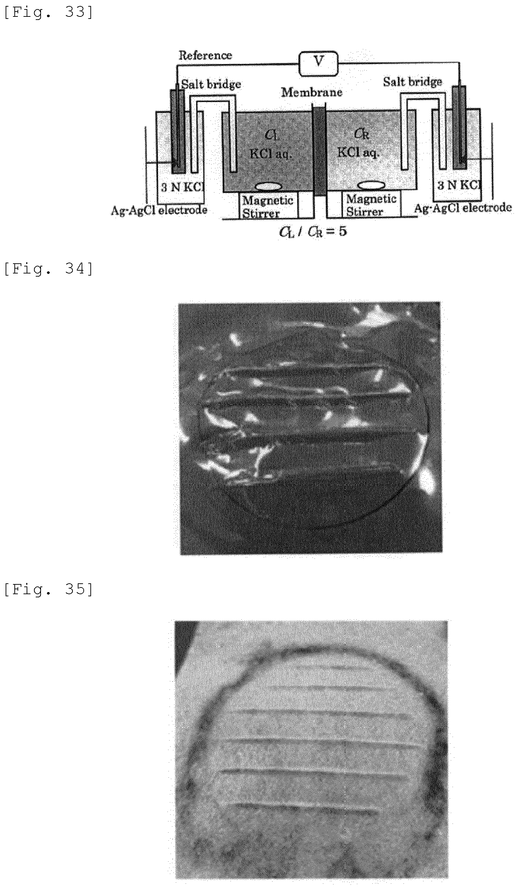

Membrane potentials were measured using the apparatus shown in Figure 33. Each prepared membrane was held in a holder and loaded between two cells. Since the portion of an effective membrane area of this holder was 30$\varphi$, a concavo-convex shape was formed so as to fit therein. As an example, the image of Example 2 is shown in Figure 34. In each of Examples 1 to 3, four convex parts as shown in this drawing were formed with a length of 22 to 26 mm at a concave part (convex part) interval of 5 mm which was equal to the distance between the centers of the grooves lying next to each other in the mold. 0.1 M and 0.5 M aqueous NaCl solutions were placed in the two cells, respectively. The measurement temperature was set to 25°C, and the potentials were measured in a potential meter (kaise, KT-2008) using a salt bridge containing 3 M KCl. Table 5 shows theoretical generated potentials under this condition (when the activity coefficient of 0.1 M NaCl was defined as 0.770 and the activity coefficient of 0.5 M NaCl was defined as 0.687). Table 6 shows the membrane potentials of Examples and Comparative Examples.

[Table 5]

| Theoretical generated potential (mV) | |
|---|---|
| Noncharged membrane | -7.97 |
| Cation exchange membrane | 38.4 |
| Anion exchange membrane | -38.4 |

[Table 6]

| | Membrane potential (mV) |
|---|---|
| Example 1 | 32.9 |
| Example 2 | 38.5 |
| Example 3 | -34.1 |
| Comparative Example 1 | -4.15 |
| Comparative Example 2 | 33.8 |
| Comparative Example 3 | 38.7 |
| Comparative Example 4 | -34.2 |

The membrane potential of Comparative Example 1 exhibited -4.15 mV, which means that the membrane of Comparative Example 1 had few charged groups because the theoretical generated potential of the noncharged membrane under this condition is -7.97 mV. The potential of Comparative Example 2 was 33.8 mV, and this membrane was therefore found to have sufficient functions as a cation exchange membrane. The PVA-based block copolymer (PVA-b-PSSS) synthesized this time had a cation exchange group. The values of the membrane potentials of Comparative Example 3 and Comparative Example 4 were 38.7 mV and -34.2 mV, respectively, and these membranes thus had very high ion selectivity. The membrane of Comparative Example 2 had high performance as a cation exchange membrane, though not to the extent of Comparative Example 3 using the commercially available ion exchange membrane. The membrane potential of Example 1 was 32.9 mV, which was rarely different from that of Comparative Example 2. Thus, the corrugated structure formation process had no influence on the performance of the PVA-based cation exchange membrane. The membrane potentials of Example 2 and Example 3 were 38.5 mV and - 34.1 mV, respectively, and these membranes therefore functioned as a cation exchange membrane and an anion exchange membrane, respectively. When these values of the membrane potentials were compared with potentials of 38.4 mV and -38.4 mV generated under this condition in an ideal cation exchange membrane and anion exchange membrane, these membranes had high counterion selectivity. Particularly, the membrane of Example 2 had high performance as a cation exchange membrane. The values were almost the same as the values 38.7 mV and -34.2 mV of the membrane potentials of Comparative Example 3 and Comparative Example 4. Thus, the corrugated structure formation process had no influence on the performance of the commercially available ion exchange membrane. Accordingly, since the concavo-convex shape does not inhibit the performance of the ion exchange membrane itself, the characteristic-improving effects based on the concavo-convex shape can be exerted when the membrane is used in an ion exchange membrane cell.

Polymers and supports used in Examples 4 to 6 and Comparative Examples 5 to 7 were provided as follows.

(Polymer)

  1. Polyvinyl alcohol (PVA) (manufactured by FUJIFILM Wako Pure Chemical Corp.)
  2. Sulfonated polyether sulfone (SPES)

(Support)

1. Polyester nonwoven fabric, thickness: 41 μm
2. Support obtained by spraying nylon nanofibers onto PET base material, thickness: 220 μm

(Synthesis of PVA-b-PSSS)

A PVA-based block copolymer used in Comparative Examples and Examples was synthesized in the same manner as in Example 1.

(Formation of concavo-convex shape in membrane)

For the formation of a concavo-convex shape in a membrane, the membrane of interest was placed on the aluminum mold shown in Figure 27, and heat-pressed with electric soldering iron set to a predetermined temperature to form a concavo-convex shape on the membrane. In the aluminum mold, V-shaped grooves having depths of 0.5 mm, 1.0 mm, 1.5 mm, and 2.0 mm (5 grooves each) were engraved at equal intervals, and 0.5 mm was used this time.

[Example 4]

In Example 4, a 16 wt% aqueous PVA-b-PSSS solution was applied onto a PET film. Then, a poly ester nonwoven fabric was immediately placed thereon and dried at 50°C, followed by the peeling of the PET film. Then, a corrugated structure was formed in this membrane at 220°C by the heat press method described above, and then heat-treated at 140°C for 30 minutes. Then, the membrane was immersed in a 2 M aqueous $Na_2SO_4$ solution at 25°C for 2 hours. This membrane was immersed in a 0.05 vol% aqueous GA solution for 6 hours under acidic conditions and chemically cross-linked. Then, the membrane was immersed in a 0.5 M aqueous NaCl solution to obtain a membrane of Example 4 (PVA-PFCEM: membrane impregnated on both sides).

[Example 5]

In Example 5, a DMSO solution containing 10 g of SPES dissolved in 47 mL of dimethyl sulfoxide (DMSO) was applied using a brush onto a support obtained by spraying nylon nanofibers onto PET base material, and dried at 75°C. Then, a corrugated structure was formed in this membrane at 140°C by the heat press method described above, and then immersed in a 0.5 M aqueous NaCl solution to obtain a membrane of Example 5 (aromatic PFCEM: membrane impregnated on both sides).

[Example 6]

In Example 6, a 16 wt% aqueous PVA-b-PSSS solution was applied onto a PET film. Then, a support obtained by spraying nylon nanofibers onto PET base material was placed thereon and dried at 50°C, followed by the peeling of the lower PET film after drying. Then, a corrugated structure was formed in this membrane at 220°C by the heat press method described above, and then heat-treated at 140°C for 30 minutes. Then, the membrane was immersed in a 2 M aqueous $Na_2SO_4$ solution at 25°C for 2 hours. This membrane was immersed in a 0.05 vol% aqueous GA solution for 6 hours under acidic conditions and chemically cross-linked. Then, the membrane was immersed in a 0.5 M aqueous NaCl solution to obtain a membrane of Example 6 (PVA-PFCEM: membrane on one side).

[Comparative Example 5]

PVA was weighed and placed in a 500 mL Erlenmeyer flask, to which ion exchange water was then added so as to attain a polymer concentration of 5.0 wt%. The polymer was dissolved while the Erlenmeyer flask was stirred at 90°C. Then, the solution was casted onto an acrylic plate at 50°C and cast-molded. The obtained membrane was heat-treated at 120°C for 30 minutes and immersed in a 2 M aqueous $Na_2SO_4$ solution at 25°C for 2 hours. This membrane was immersed in a 0.05 vol% aqueous GA solution for 6 hours under acidic conditions. Then, the membrane was immersed in a 0.5 M aqueous NaCl solution to obtain a membrane of Comparative Example 5 (PVA noncharged flat membrane).

[Comparative Example 6]

PVA-b-PSSS was weighed and placed in a 500 mL Erlenmeyer flask, to which ion exchange water was then added so as to attain a polymer concentration of 3.3 wt%. The polymer was dissolved while the Erlenmeyer flask was stirred at 90°C. Then, the solution was casted onto an acrylic plate at 50°C and cast-molded. The obtained membrane was heat-treated at 140°C for 30 minutes and immersed in a 2 M aqueous $Na_2SO_4$ solution at 25°C for 2 hours. This membrane was immersed in a 0.05 vol% aqueous GA solution for 6 hours under acidic conditions. Then, the membrane was immersed in a 0.5 M aqueous NaCl solution to obtain a membrane of Comparative Example 6 (cation exchange flat membrane using PVA-b-PSSS).

[Comparative Example 7]

10 g of SPES was dissolved in 47 mL of dimethyl sulfoxide (DMZO). Then, this solution was casted onto a PET film and then dried at 75°C for membrane formation to obtain a membrane of Comparative Example 7 (aromatic CEM flat membrane).

(Observation of membrane structure under optical microscope)

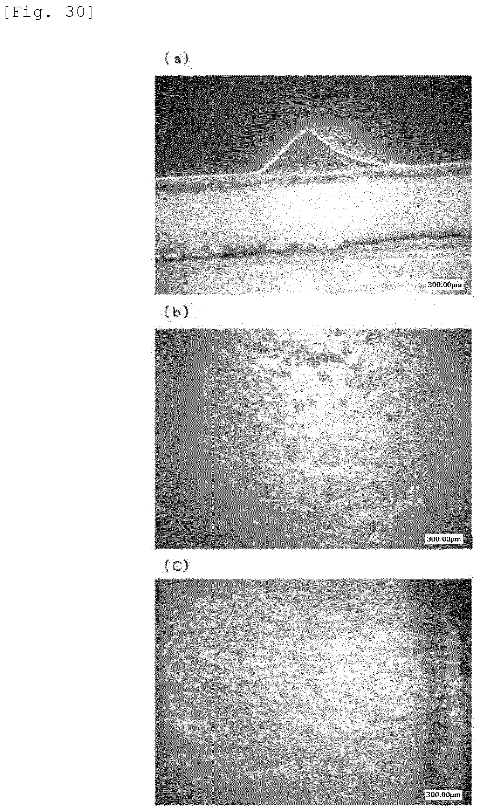

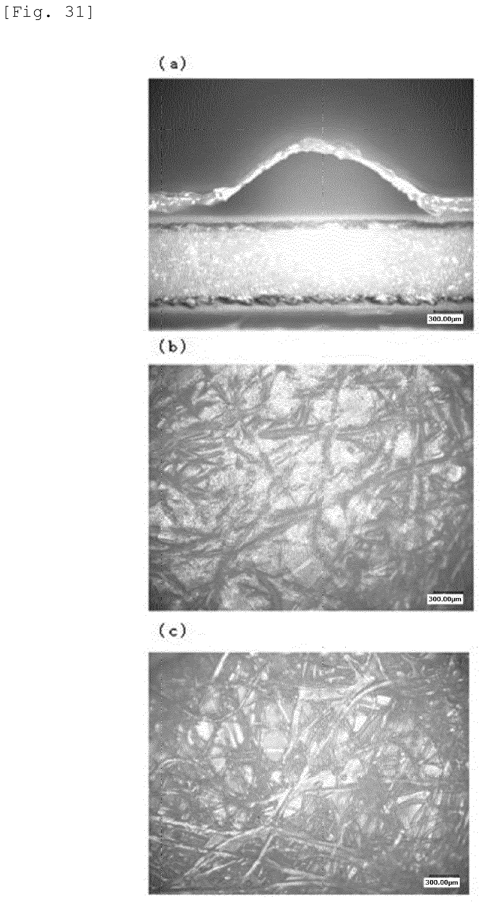

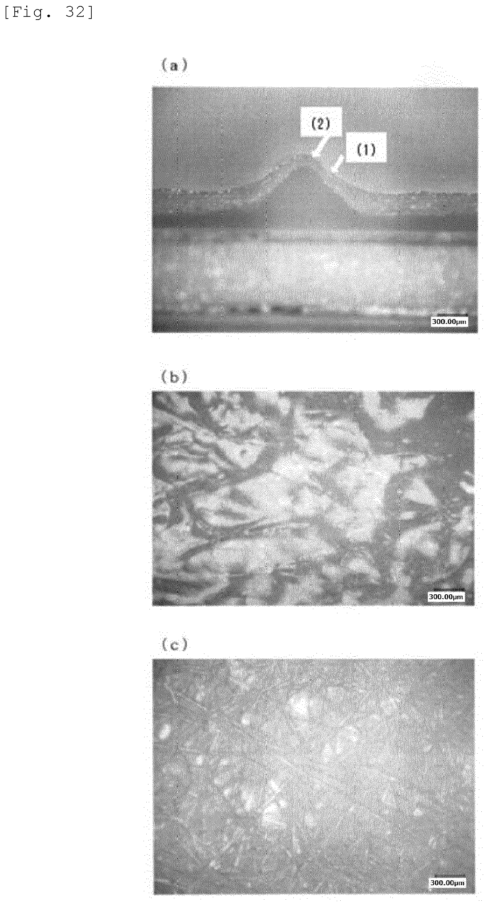

The membranes obtained in Examples 4 to 6 were photographed under an optical microscope (manufactured by Keyence Corp., VHX-1000), and the form of the corrugated structure was observed while the height of a convex part, the width at a lower end of the convex part portion, and the membrane thickness of a flat portion were measured. In this context, Figure 28 shows the measurement positions of the height of a convex part, the width at a lower end of the convex part portion, and the membrane thickness. Figures 29 to 32 show cross-sectional photographs of the membranes. Table 7 shows the height of a convex part, and the width at a lower end of the convex part, and the membrane thickness measured from this photograph. The membrane thickness in Example 5 was the thickness of a concave part (flat portion), and the thickness of a convex part was 81 $\mu$m. The membrane thickness in Example 6 was the thickness of a base material (support), and a 23 $\mu$m charged layer existed thereon. The membrane thickness of the convex part (base material + charged layer) was measured at the sites indicated by (1) and (2) in Figure 32(a) mentioned later as to Example 6. The membrane thickness of the convex part was read from the photograph using a scale. As a result, the membrane thickness was 65 in the neighborhood of the center of the side face of the convex part (Figure 32(a) (1)) and was 40 in the neighborhood of the top of the convex part (Figure 32(a)(2)) when the membrane thickness of the flat portion was defined as 100. The surface and the back of each membrane were also photographed. The photographs are shown in Figures 30 to 32. In this context, the surface refers to a face onto which the polymer was applied. Figure 30(a) is a cross-sectional view of the membrane obtained in Example 4, Figure 30(b) shows the surface of the membrane obtained in Example 4, and Figure 30(c) shows the back of the membrane obtained in Example 4. Figure 31(a) is a cross-sectional view of the membrane obtained in Example 5, Figure 31(b) shows the surface of the membrane obtained in Example 5, and Figure 31(c) shows the back of the membrane obtained in Example 5. Figure 32(a) is a cross-sectional view of the membrane obtained in Example 6, Figure 32(b) shows the surface of the membrane obtained in Example 6, and Figure 32(c) shows the back of the membrane obtained in Example 6. In Example 4, it can be found that the applied charged polymer existed on both the surface and the back. In short, this membrane almost uniformly had the charged polymer on the surface and the back. On the other hand, in Example 6, the surface was evidently smooth and had the polymer layer, whereas the base material (PET base material) was visible on the back. In the cross-sectional photograph as well, the polymer layer (thickness calculated from the image: 23 pm) existed on the base material. Thus, the membrane of Example 6 was an ion exchange membrane having an asymmetric corrugated structure where the charged polymer layer existed on only one side of the membrane. In Example 5, the surface had the charged polymer, and the charged polymer also existed on the back, though the support was visible in some portions. This suggests that, unlike Example 6, the charged polymer was applied using a brush, and therefore penetrated the inside and reached the back.

[Table 7]

| | | Type of membrane | Membrane thickness ($\mu$m) | Height ($\mu$m) | Width of lower end portion ($\mu$m) |
|---|---|---|---|---|---|
| | Example 4 | PVA-PFCEM (impregnated on both sides) | 46 | 485 | 1440 |
| | Example 5 | Aromatic PFCEM (impregnated on both sides) | 196 | 577 | 2240 |
| | Example 6 | PVA-PFCEM (of no interest: one side) | 208 | 392 | 1530 |

(Measurement of membrane potential)

Membrane potentials were measured using the apparatus shown in Figure 33. Each prepared membrane was held in a holder and loaded between two cells. Since the portion of an effective membrane area of this holder was 30φ, a concavo-convex shape was formed so as to fit therein. As an example, the image of Example 5 is shown in Figure 35. In each of Examples 4 to 6, six convex parts as shown in this drawing were formed with a length of 11 to 26 mm at a concave part (convex part) interval of 5 mm which was equal to the distance between the centers of the grooves lying next to each other in the mold. 0.1 M and 0.5 M aqueous NaCl solutions were placed in the two cells, respectively. The measurement temperature was set to 25°C, and the potentials were measured in a potential meter (kaise, KT-2008) using a salt bridge containing 3 M KCl. Table 8 shows theoretical generated potentials under this condition (when the activity coefficient of 0.1 M NaCl was defined as 0.770 and the activity coefficient of 0.5 M NaCl was defined as 0.687). Table 9 shows the membrane potentials of Examples and Comparative Examples.

[Table 8]

| Theoretical generated potential (mV) | |
| --- | --- |
| Noncharged membrane | -7.97 |
| Cation exchange membrane | 38.4 |
| Anion exchange membrane | -38.4 |

[Table 9]

| | Membrane potential (mV) |
| --- | --- |
| Example 4 | 28.1 |
| Example 5 | 35.9 |
| Example 6 | 23.4 |
| Comparative Example 5 | -4.15 |
| Comparative Example 6 | 33.8 |
| Comparative Example 7 | 38.4 |

The membrane potential of Comparative Example 5 exhibited -4.15 mV, which means that the membrane of Comparative Example 5 had few charged groups because the potential of the noncharged membrane under this condition is -7.97 mV. The potential of Comparative Example 6 was 33.8 mV. It can therefore be found that this membrane had sufficient functions as a cation exchange membrane. This indicates that the PVA-based block copolymer synthesized this time had a cation exchange group. Comparative Example 7 exhibited 38.4 mV, and the membrane of Comparative Example 7 prepared from sulfonated polyether sulfone this time was found to have high performance as a cation exchange membrane. On the other hand, the membrane potential of Example 4 was 28.1 mV, which was rarely different from that of Comparative Example 6. The membrane potential of Example 5 was 35.9 mV, which was not largely different from that of Comparative Example 7. Thus, the corrugated structure formation process had no influence on the performance of the cation exchange membrane. Accordingly, since the concavo-convex shape does not inhibit the performance of the ion exchange membrane itself, the characteristic-improving effects based on the concavo-convex shape can be exerted when the membrane is used in an ion exchange membrane cell. The membrane potential of Example 6 was 23.4 mV, which exhibited a value slightly lower than that of Comparative Example 6, though the membrane of Example 6 had the function of a cation exchange membrane. This suggests that since the membrane of Example 6 had an asymmetric structure with a base material as thick as 200 pm, the concentration on the ion exchange membrane surface became lower than the salt concentration of the bulk (0.5 M aqueous NaCl solution this time) due to concentration polarization in the support. Thus, it is considered preferable to use a support that less causes concentration polarization (a support having a thin support layer or a large opening ratio).

[Example 7] and [Comparative Example 8]

[Ion exchange membrane used]

An AEM developed membrane of a polyolefin film base material (AEM-1, ASTOM Corp.) and a CEM developed membrane of a polyolefin film base material (CEM-1, ASTOM Corp.) were used as an anion exchange membrane (AEM) and a cation exchange membrane (CEM) for use in Example 7 and Comparative Example 8. Also, an anion exchange membrane (Neosepta(R) AMX, ASTOM Corp.) and a cation exchange membrane (Neosepta(R) CMX, ASTOM Corp.) were used as end membranes. AEM-1 is an anion exchange membrane obtained by preparing a precursor membrane of a chloromethylstyrene monomer and a divinylbenzene monomer cross-linked to a polyolefin-based support, followed by quaternization. CEM-1 is a cation exchange membrane obtained by preparing a precursor membrane of a styrene monomer and a divinylbenzene monomer cross-linked to a polyolefin-based support, followed by sulfonation.

[Evaluation of basic characteristics of membrane]

(Membrane charge density)

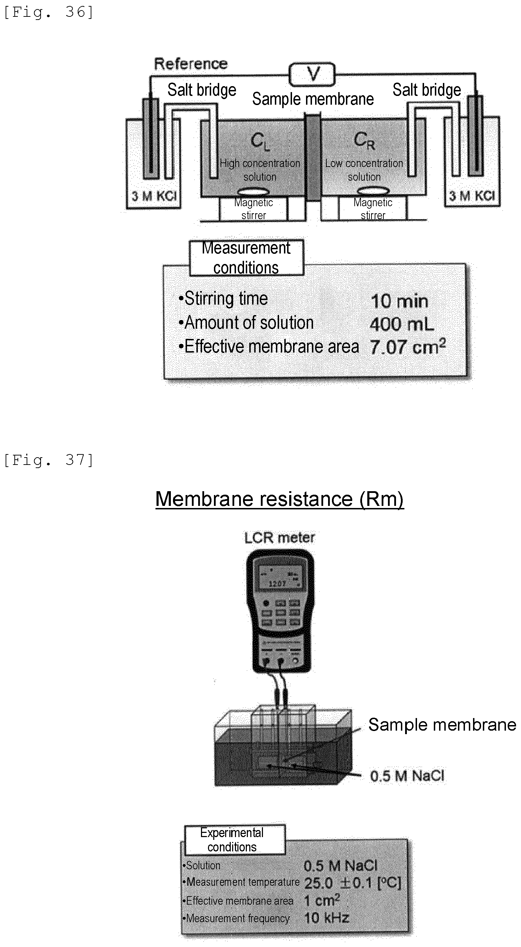

As shown in Figure 36, a sample membrane was sandwiched between self-built acrylic cells, and 400 mL each of concentrated sea water and sewage treatment water was placed on the high concentration solution side and the low concentration side, respectively, and stirred with a magnetic stirrer for 10 minutes. Then, a membrane potential was measured in a voltage meter using an AgCl electrode via a salt bridge prepared with 3 M KCl and agar. In this respect, the potential was based on the high concentration side. According to the Teorell-Meyer and Sievers (TMS) theory, the relationship between a KCl concentration on the low concentration side and a measured membrane potential is represented by the expression (1).

[Expression 1]

$$\Delta\varphi = -\frac{RT}{F}\ln\left( r \frac{\sqrt{C_x^2 + (2C_o)^2}}{\sqrt{C_x^2 + (2rC_o)^2}} \frac{C_x}{C_x} \right) - \frac{RT}{F}W\ln\left( \frac{\sqrt{C_x^2 + (2rC_o)^2}}{\sqrt{C_x^2 + (2C_o)^2}} \frac{C_x W}{C_x W} \right) \qquad (1)$$

$$W = \frac{\omega_c - \omega_a}{\omega_c + \omega_a} \qquad (2)$$

$\Delta\phi$ :     Membrane potential [V]
$C_\chi$ :     Membrane charge density (including the sign of charge group) [mol/m$^3$]
$C_0$ :     Salt concentration in cell on low concentration side [mol/m$^3$]
$\omega_c, \omega_a$ :     Cationic, anionic mobility [mol/m$^2$Js]
$F$ :     Faraday constant [C/mol]
$T$ :     Absolute temperature [K]
$R$ :     Gas constant [J/Kmol]

(Membrane resistance)

Figure 37 shows a measurement apparatus and measurement conditions of membrane resistance. First, a measurement solution was placed in an acrylic cell having a platinum electrode, and solution resistance ($R_o$) was measured at 25°C using a measurement frequency of 10 kHz in an LCR meter. Then, a sample membrane was sandwiched between two cells, and resistance (R) was measured in the same manner as above. Then, membrane resistance ($R_m$) was calculated according to the following expression.

[Expression 2]

$$R_m = R - R_o \qquad (3)$$

$R$ : Measured resistance value [$\Omega$ cm$^2$] $R_o$: Blank resistance value [$\Omega$ cm$^2$] $R_m$ : Membrane resistance value [$\Omega$ cm$^2$]

(Dynamic transference number)

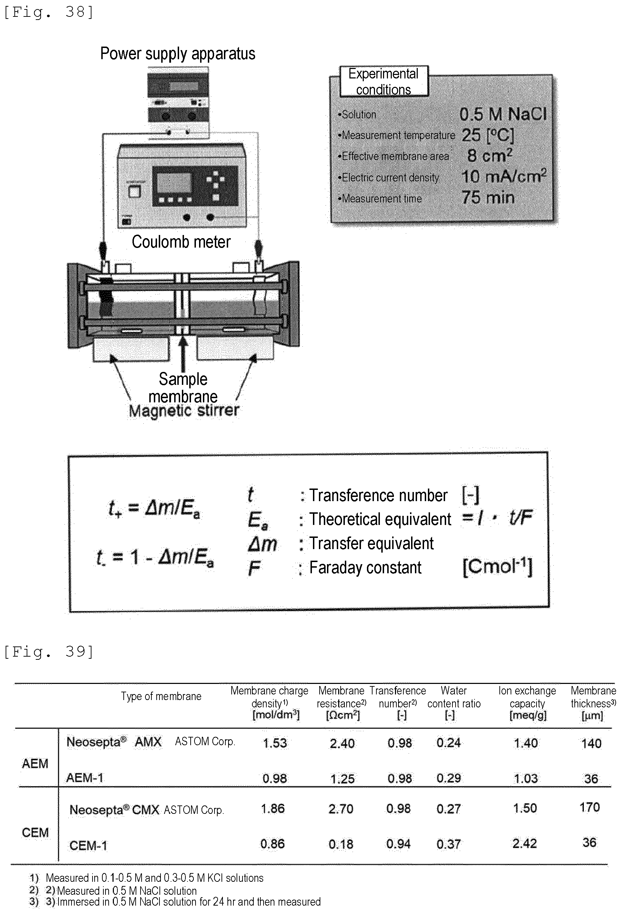

A measurement membrane was held in an apparatus having an effective membrane area of 8.0 cm$^2$ (2.0 cm $\times$ 4.0 cm) as shown in Figure 38, and a 0.5 mol/L NaCl solution was placed in two cells in an atmosphere of 25°C. Electro-dialysis was performed at a current density of 10 mA·cm$^{-2}$ for approximately 75 minutes. Then, the conductivity of the solution was measured in a conductivity meter. The number of moles of NaCl in the solution was calculated from the obtained conductivity, and this value was substituted into the expression (4) for CEM and the expression (5) for AEM to thereby calculate a dynamic transference number.

[Expression 3]

$$t_+ = \frac{\Delta m}{E_a} \qquad\qquad (4)$$

$$t_- = 1 - \frac{\Delta m}{E_a} \qquad\qquad (5)$$

$t_+$ : CEM dynamic transference number
$t_-$ : AM membrane dynamic transference number
$\Delta m$ : Transfer equivalent
$E_a$ : Theoretical equivalent (= $I \times T / F$)
$I$ : Current [A]
$T$ : Electro-dialysis time [s]
$F$ : Faraday constant [C mol $^1$]

(Water content ratio)

In order to calculate the water content ratio of each ion exchange membrane, dry weight $W_1$ of the membrane was measured. Then, the membrane was immersed in 0.5 mol/dm$^3$ of NaCl for 8 hours or longer to measure wet weight $W_2$. Water content ratio W was calculated from the measured dry weight and wet weight after graft polymerization according to the following expression.
[Expression 4]

$$W = \frac{W_2 - W_1}{W_1} \times 100 \qquad\qquad (6)$$

(Ion exchange capacity)

A 5 × 5 [cm$^2$] membrane immersed in deionized water was immersed in 200 [mL] of a 0.1 [mol/L] KCl solution for 24 hours and then immersed in 100 [mL] of a 0.5 [mol/L] NaNO$_3$ solution for 24 hours. This solution was sampled, and a K$^+$ ion concentration for CEM and a Cl$^-$ concentration for AEM were calculated by ion chromatography (column: DIONEX IonPac CQ12A; pump/electric conductivity detector/injector: DIONEX ICS-1500; autosampler: DIONEX AS) (column: DIONEX IonPac AS19; pump/electric conductivity detector/injector: DIONEX ICS-2000; autosampler: DIONEX AS). Then, an ion exchange capacity was calculated according to the expression (7).
[Expression 5]

$$IEC \text{ [meq/g]} - \frac{C_i \text{ [mol/L]}}{W_D \text{ [g]}} \times \frac{100}{1000} \text{ [L]} \qquad\qquad (7)$$

$IEC$: Ion exchange capacity [meq/g]
$C_i$: Ion concentration obtained from ion chromatograph [mol/L]
$W_D$: Dry weight of membrane [g]

(Membrane thickness)

A membrane thickness was measured using a membrane thickness meter (Mitutoyo ABS Digimatic Blade Thickness).

(Measurement results)

Figure 39 shows the membrane charge density, the membrane resistance, the transference number, the water content ratio, the ion exchange capacity, and the membrane thickness measured in prototype membranes and end membranes.

(Formation of concavo-convex shape in membrane)

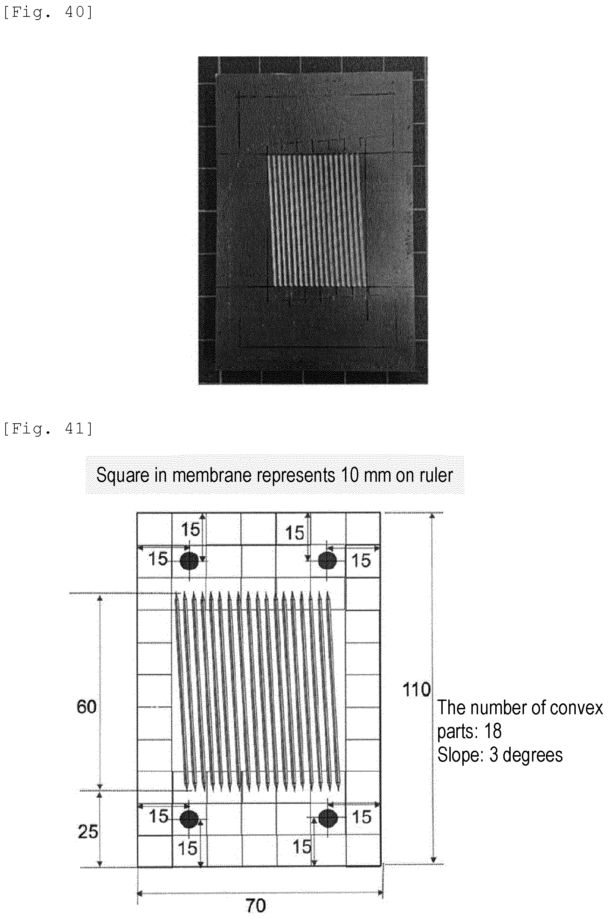

Sample membranes of CEM-1 and AEM-1 were each placed on the aluminum mold shown in Figure 40, and heat-pressed with electric soldering iron set to a predetermined temperature to form a corrugated structure on the membranes. The heat press was performed at 200°C for 30 seconds for AEM-1 and at 100°C for 10 seconds for CEM-1. The heat-pressed AEM-1 and CEM-1 were punched with a Thomson punching mold to obtain an anion exchange membrane having a corrugated structure (PF-A) and a cation exchange membrane having a corrugated structure (PF-C), respectively, of Example 7 with the dimension shown in Figure 41. In Comparative Example 8, CEM-1 and AEM-1 were directly used.

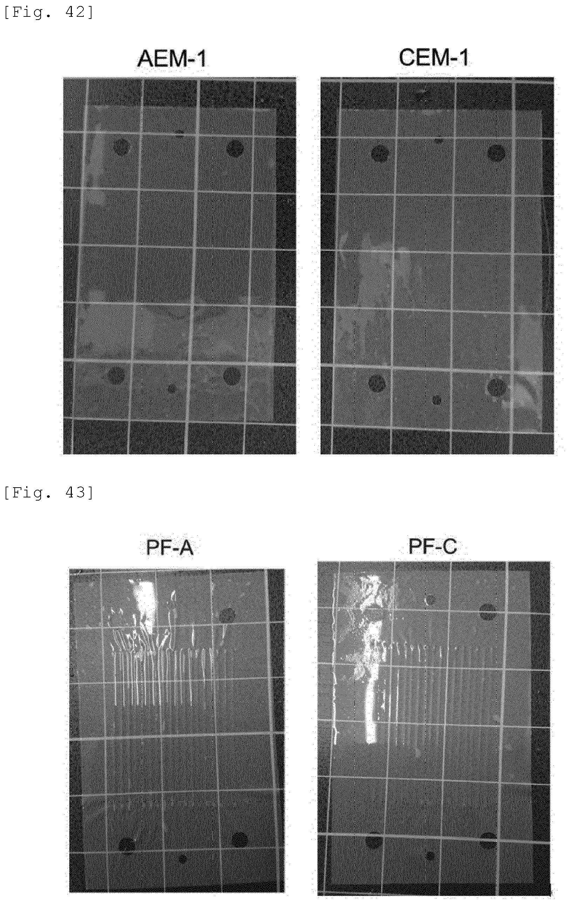

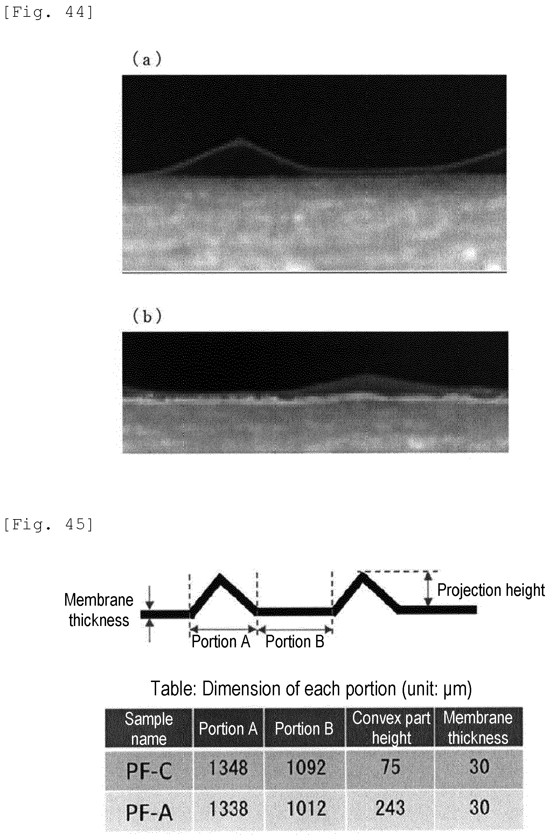

Figure 42 shows one example of photographs of the whole AEM-1 and CEM-1 of Comparative Example. Figure 43 shows one example of photographs of the whole PF-A and PF-C of Example. Figure 44 shows a partial surface photograph of PF-A as one example. The anterior side of the photograph corresponds to convex parts, and the posterior side thereof corresponds to flat portions. In order to show that the convex parts had a concave back side, the photograph was taken in a blistered state. As is evident from this photograph, the convex parts had a concave back side. A convex part (portion A), a flat portion (portion B), a convex part height, and a membrane thickness were measured from this photograph and are shown in Figure 45.

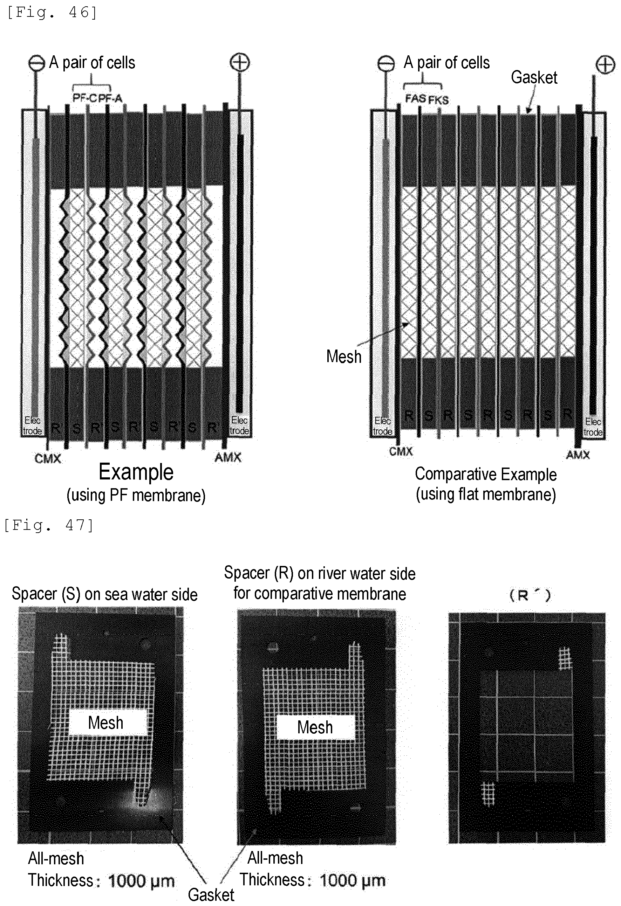

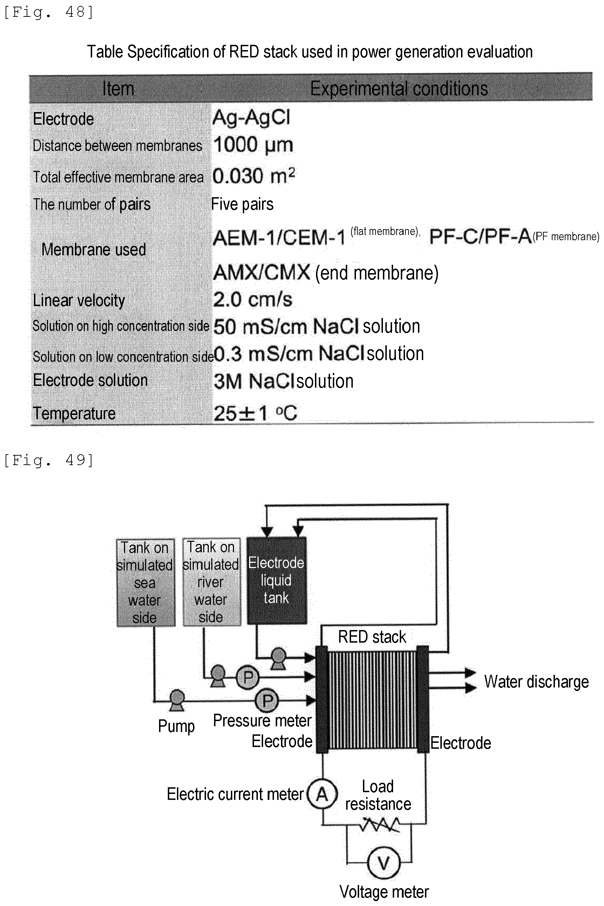

As shown in Figure 46, PF-C and PF-A were alternately located between a 1000 $\mu$m thick spacer (S) on the sea water side and a spacer (R') on the river water side for a PF membrane, and a plurality of pairs of the resultant were sandwiched between an electrode portion having a silver electrode and an electrode portion having silver-silver chloride to prepare a RED stack. In this stack, PF-C and PF-A were opposed to each other such that their crests were tilted toward a direction opposite to the direction of water flow. Since the tilt of their crests with respect to the direction of water flow was set to 3 degrees, an angle formed by each other's crests was 6 degrees. In Comparative Example, a similar stack was prepared by alternately locating a spacer (S) on the sea water side and a spacer (R) on the river water side between FAS and FKS. AMX and CMX having high strength that prevented the membranes from being bent toward the electrode sides were used as end membranes on the positive electrode side and the negative electrode side, respectively. Figure 47 shows the spacer (S) on the sea water side, the spacer (R) on the river water side for Comparative Example, and the spacer (R') on the river water side for Example. In this context, a spacer having a mesh in an effective membrane area portion was used in Comparative Example on the river water side, and a spacer having no mesh in an effective membrane area portion was used in Example on the river water side. The upper ends of the convex parts of PF-C and PF-A computationally had a distance that brought the upper ends into no contact from the heights of the convex parts of both the membranes. Figure 48 describes the specification of this stack and the solution used. The maximum power density was determined by dividing power output by a total effective membrane area. In this context, the total effective area was determined by multiplying the area of the effective membrane area portion by 10 as the number of membranes used in the RED stack, and this area was 0.03 m$^2$.

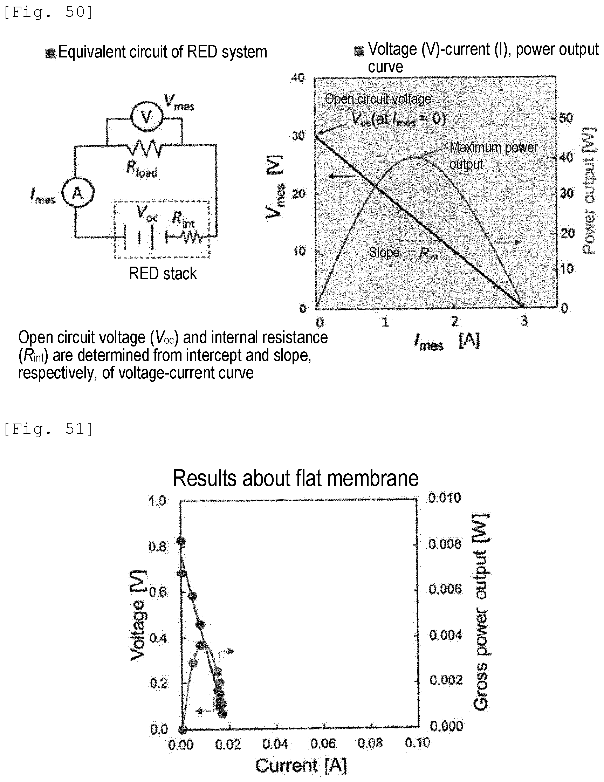

The prepared RED stacks were evaluated for power generation characteristics using the apparatus of Figure 49. Figure 50 shows an equivalent circuit of this apparatus. Voltage and current are measured by changing the value of load resistance of the apparatus while injecting simulated sea water and simulated river water to the stack. The open circuit voltage of the RED stack can thereby be measured when the load resistance is infinite. As the value of resistance is lowered, the value of current is increased and the value of voltage is decreased. The internal resistance of the stack is calculated from the slope of this current-voltage curve.

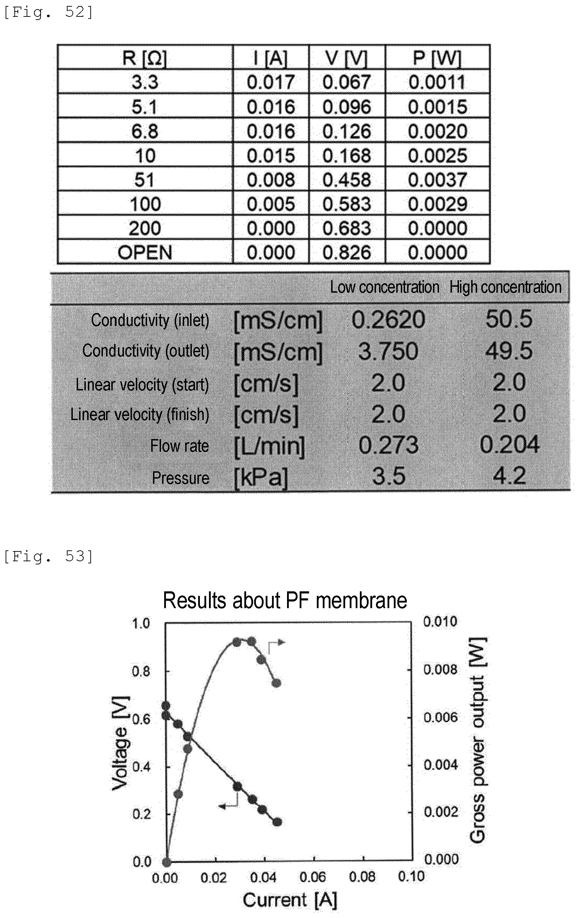

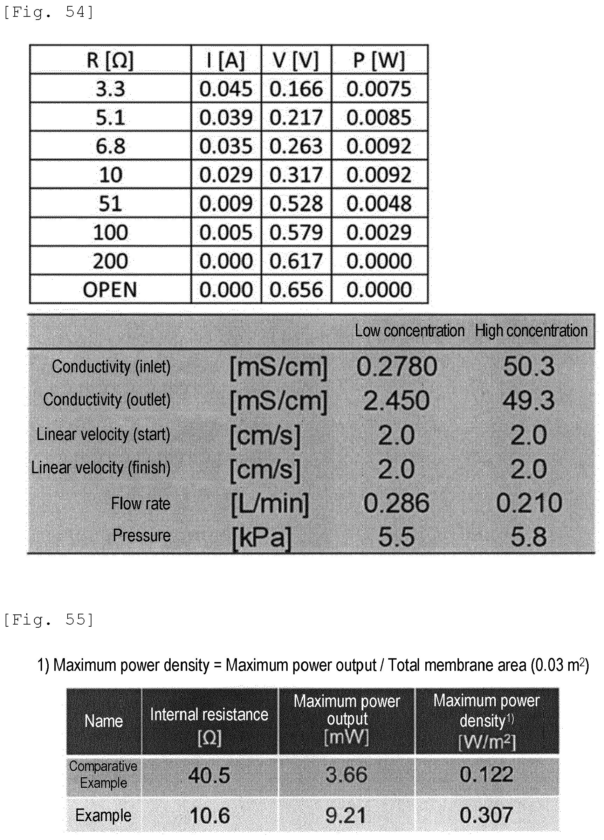

Figures 51 and 52 show the voltage-current curve of Comparative Example 8 and the value of power generation output at each value of current. Figures 53 and 54 show the value of Example 7. The internal resistance and the maximum power density of the stacks of Comparative Example 8 and Example 7 were calculated from the graphs. The results are shown in Figure 55. The internal resistance determined from the voltage-current curves of Example 7 and Comparative Example 8 was 40.5 [$\Omega$] in Comparative Example 8 and by contrast, was 10.6 [$\Omega$] in Example 7. Thus, the internal resistance of Example 7 exhibited a value as very low as 26% of that of Comparative Example 8. The maximum power density was 0.122 [W/m$^2$] in Comparative Example 8 and by contrast, exhibited 0.307 [W/m$^2$] in Example 7, which was higher by 250% or more. On the other hand, pressure loss was higher in Example 7 than in Comparative Example 8 presumably due to the influence of both the membranes that overlapped each other due to a pressure and a small convex part height of PF-C.

[Example 8 and Comparative Example 9]

(Film used)

An ultra-high molecular weight polyethylene film (manufactured by Saxin Corp., product name: Saxin NewLight Film Innovate) with a molecular weight of 1,600,000 and a membrane thickness of 50 μm manufactured by the inflation method was used as a base material.

(Formation of concavo-convex shape in membrane)

For the formation of a concavo-convex shape in a base material, the membrane of interest (the above-described ultra-high molecular weight polyethylene film) was placed on the aluminum mold shown in Figure 27, and heat-pressed with electric soldering iron set to a predetermined temperature to form a concavo-convex shape on the membrane. In the aluminum mold, V-shaped grooves having depths of 0.5 mm, 1.0 mm, 1.5 mm, and 2.0 mm (5 grooves each) were engraved at equal intervals, and 0.5 mm was used this time. Two membranes provided with 14 structures of irregularities per membrane with the dimension shown in Figure 41 were provided and used for a cation exchange membrane and for an anion exchange membrane, respectively. Ion exchange membranes of Example 8 were prepared using the membranes provided with the concavo-convex shape, and ion exchange membranes of Comparative Example 9 were prepared using membranes provided with no concavo-convex shape, according to the following method.

(Electron beam irradiation)

The membrane (film) provided with the concavo-convex shape was inserted into an oxygen-impermeable polyethylene bag. Then, this bag was purged with nitrogen to remove oxygen in the bag. Subsequently, this bag containing the base material was irradiated with electron beam at 30 kGy for cation exchange membrane graft polymerization and at 40 kGy for anion exchange membrane graft polymerization under conditions involving 25°C, an accelerating voltage of 200 keV, and an electron beam current of 32.7 mA.

(Cation exchange membrane graft polymerization)

The irradiated membrane was taken out in atmosphere and transferred to a glass container. Then, a xylene solution containing 50% by mass of styrene from which oxygen gas was removed in advance by bubbling with highly pure nitrogen was filled into the container. After filling, graft polymerization was performed at 30°C for 55 minutes. Then, the membrane was taken out of the glass container, washed with methanol, and dried in air. The graft ratio was 39%, and the membrane resistance was 1.4 $\Omega cm^2$.

(Cation exchange group introduction)

The polymeric base material after graft reaction was immersed in a chlorosulfonic acid solution having a concentration of 5% by mass and containing 1,2-dichloroethane as a solvent at room temperature for 16 hours. Then, the membrane was thoroughly washed with water. Then, the membrane was immersed in an aqueous sodium hydroxide solution having a concentration of 1 N for 24 hours. The cation exchange membrane obtained after neutralization was well washed with water and preserved in a 0.5 N aqueous NaCl solution. The membrane thickness of the synthesized cation exchange membrane was 82 μm in a wet state. This membrane was designated as PF-Cg. In Comparative Example 9, a cation exchange membrane was prepared in the same manner as above from a base material provided with no corrugated structure. This membrane was designated as Flat-C.

(Anion exchange membrane graft polymerization)

The irradiated membrane was taken out in atmosphere and transferred to a glass container. Then, a xylene solution containing 50% by mass of chloromethylstyrene from which oxygen gas was removed in advance by bubbling with highly pure nitrogen was filled into the container. After filling, graft polymerization was performed at 40°C for 120 minutes. Then, the membrane was taken out of the glass container, washed with methanol, and dried in air. The graft ratio was 34%, and the membrane resistance was 1.4 $\Omega cm^2$.

(Introduction of anion exchange group)

The polymeric base material after graft reaction was immersed in an aqueous solution containing 30% by mass of trimethylamine at 25°C for 7 days. Then, the membrane was thoroughly washed with water. Then, the membrane was immersed in an aqueous hydrochloric acid having a concentration of 1 N for 24 hours. The anion exchange membrane obtained after neutralization was well washed with water and preserved in a 0.5 N aqueous NaCl solution. The membrane thickness of the synthesized anion exchange membrane was 80 $\mu$m in a wet state. This membrane was designated as PF-Ag. In Comparative Example 9, an anion exchange membrane was prepared in the same manner as above from a base material provided with no corrugated structure. This membrane was designated as Flat-A.

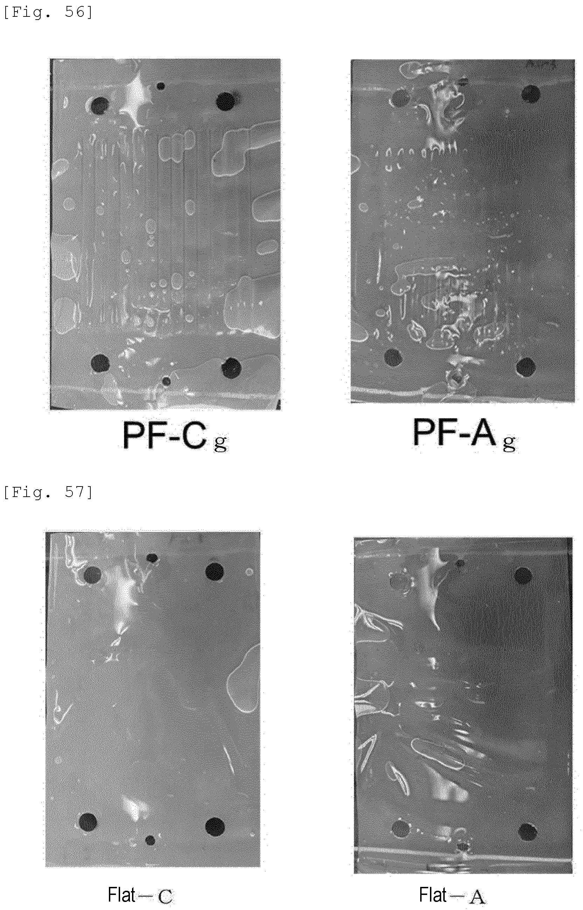

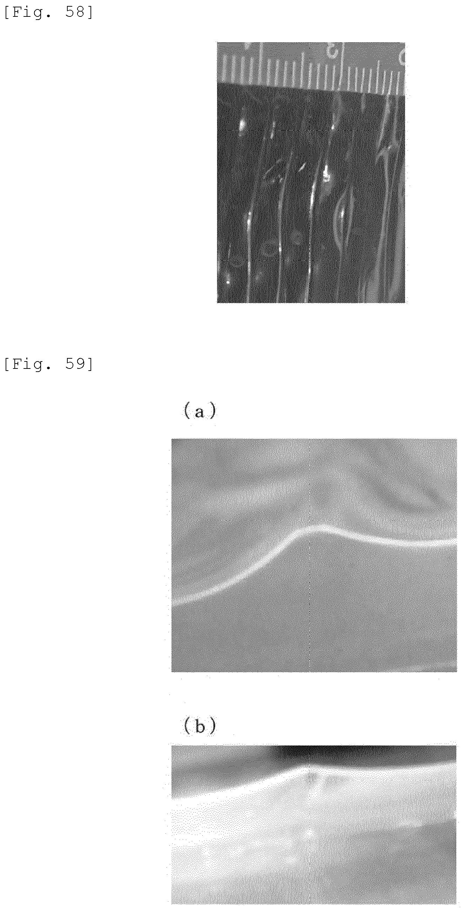

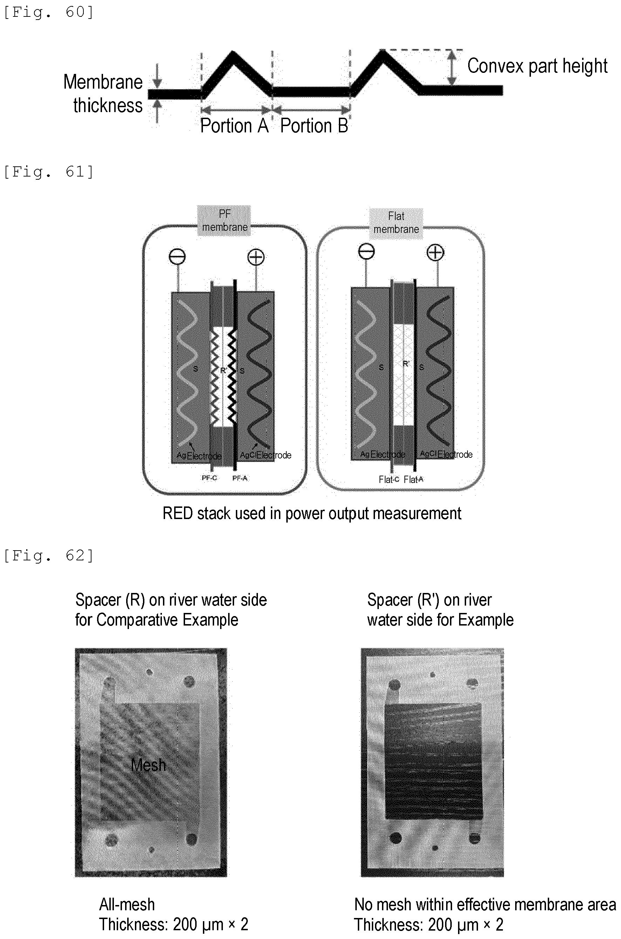

Figure 56 shows photographs of the whole PF-Cg and PF-Ag of Example 8. Figure 57 shows photographs of the whole Flat-C and Flat-A of Comparative Example 9. Figure 58 shows a partial surface photograph of PF-Ag. The convex part (portion A), the flat portion (portion B), the convex part height, and the membrane thickness shown in Figure 60 were measured from this photograph. Likewise, each dimension was also measured as to PF-Cg. The results are shown in Table 10. Since the positions of the lower ends of the convex parts were unclear, the portion A and the portion B were measured by regarding the positions of the lower ends as positions that were in the middle of gradual rising of the rising portions of slopes and had a height higher by 10% than the membrane thickness of the flat portions defined as 100%. Figure 59(a) is a cross-sectional photograph of PF-Cg, and Figure 59(b) is a cross-sectional photograph of PF-Ag.

[Table 10]

| Sample name | Portion A ($\mu$m) | Portion B ($\mu$m) | Convex part height ($\mu$m) | Membrane thickness ($\mu$m) |
|---|---|---|---|---|
| PF-C$_g$ | 1120 | 2880 | 240 | 82 |
| PF-A$_g$ | 2680 | 1320 | 200 | 80 |

As shown in Figure 61, one each of the prepared PF-Cg and PF-Ag was located on both sides of two 200 $\mu$m thick spacers such that each other's convex parts intersected each other. The resultant was sandwiched between an electrode portion having a silver electrode and an electrode portion having silver-silver chloride to prepare a RED stack. In Comparative Example 9, a similar stack was prepared using Flat-C and Flat-A. In this stack, PF-Cg and PF-Ag were opposed to each other such that their crests were tilted toward a direction opposite to the direction of solution flow. Since the tilt of their crests with respect to the direction of solution flow was set to 3° (degrees), an angle formed by each other's crests was 6° (3° $\times$ 2) (degrees). Since the total thickness of the two spacers was 400 $\mu$m, PF-Cg and PF-Ag were located such that upper ends of their convex parts were in contact with each other. Figure 62 shows the spacer for Comparative Example 9 and the spacer for Example 8. In this context, a spacer having a mesh in an effective membrane area portion was used in Comparative Example 9, and a spacer having no mesh in an effective membrane area portion was used in Example 8. Table 11 describes the specification of this stack.

[Table 11]

| Item | Apparatus conditions |
|---|---|
| Effective membrane area | 50 mm$\times$60 mm |
| Spacer width | 200 $\mu$m$\times$2 |
| The number of pairs | One pair (having no end membrane) |
| Electrode | Ag/AgCl |
| Electrode solution | Simulated sea water (0.5 M NaCl) |

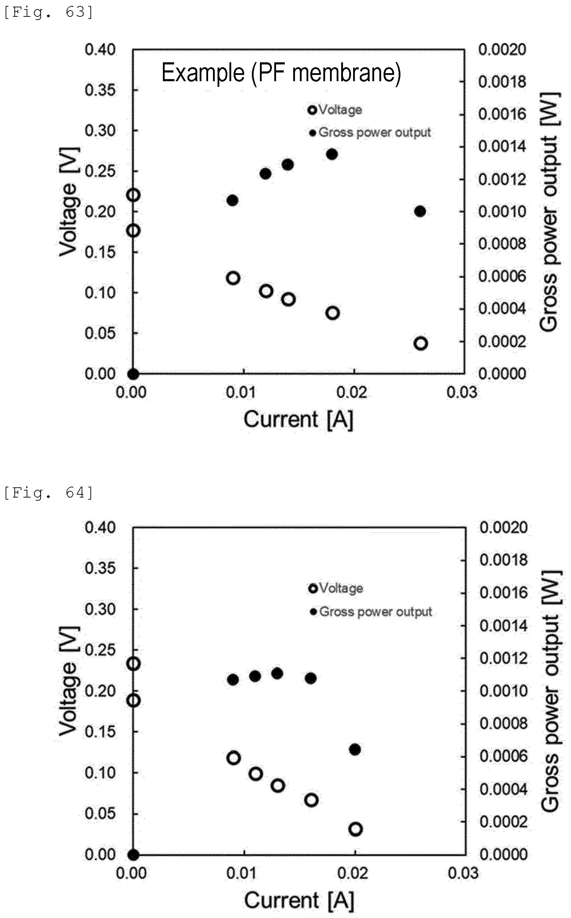

The prepared RED stacks were evaluated for power generation characteristics using the apparatus of Figure 49. Figure 50 shows an equivalent circuit of this apparatus. Voltage and current are measured by changing the value of load resistance of the apparatus while injecting simulated sea water and simulated river water to the stack. The open circuit voltage of the RED stack can thereby be measured when the load resistance is infinite. As the value of resistance is lowered, the value of current is increased and the value of voltage is decreased. The internal resistance of the stack is calculated from the slope of this current-voltage curve. Table 12 shows the salt solutions used in this measurement. Figure 63 shows the voltage-current curve of Example 8 and the value of power generation output at each value of current. Figure 64 shows the value of Comparative Example 9. The resistance and the maximum power density of the stacks of Example 8 and Comparative Example 9 were calculated from the graphs. The results are shown in Table 13. Example 8 exhibited a value of stack resistance lower by approximately 40% and a value of maximum power output higher by approximately 18% than those of Comparative Example 9. The maximum power density was determined by dividing power output by a total effective membrane area. In this context, the total effective area was determined by multiplying the area (30 cm$^2$) of the effective membrane area portion by 2 as the number of membranes used in the RED stack, and this area was 60 cm$^2$.

[Table 12]

| Name | Composition | Initial conductivity (mS/cm) | Supply flow rate (mL/min) |
|---|---|---|---|
| Simulated sea water | 0.5M NaCl | 50 | 86 |
| Simulated river water | 0.017M NaCl | 0.23 | 17 |

[Table 13]

| Name | Stack resistance ($\Omega$) | Maximum power density (W/m$^2$) |
|---|---|---|
| Example | 6.380 | 0.226 |
| Comparative Example | 9.095 | 0.185 |

[Example 9 and Comparative Example 10]

(Ion exchange membrane used)

Flat membranes AT-2 (ASTOM Corp.) and CT-2 (ASTOM Corp.) were used as an anion exchange membrane (AEM) and a cation exchange membrane (CEM), respectively, for use in Example 9 and Comparative Example 10. Respective methods for preparing AT-2 and CT-2 were the same as the methods for preparing AEM-1 and CEM-1 used in Example 7. Table 14 shows basic characteristics of AT-2 and CT-2 measured in the same manner as in [Example 7] and [Comparative Example 8] .

[Table 14]

| | Membrane charge density (mol/dm$^3$) | Transference number (-) | Membrane resistance ($\Omega$ cm$^2$) | Membrane thickness ($\mu$m) |
|---|---|---|---|---|
| CT-2 | 0.43 | 0.94 | 0.21 | 34 |
| AT-2 | 0.7 | 0.99 | 0.28 | 34 |

(Formation of concavo-convex shape in membrane)

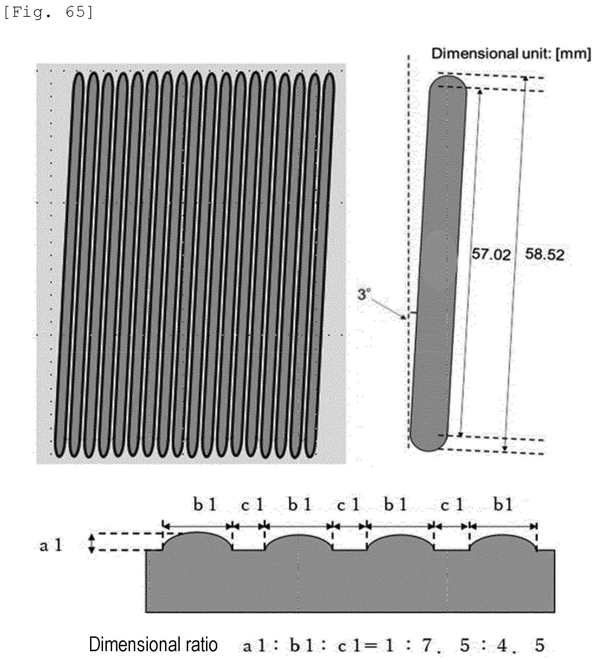

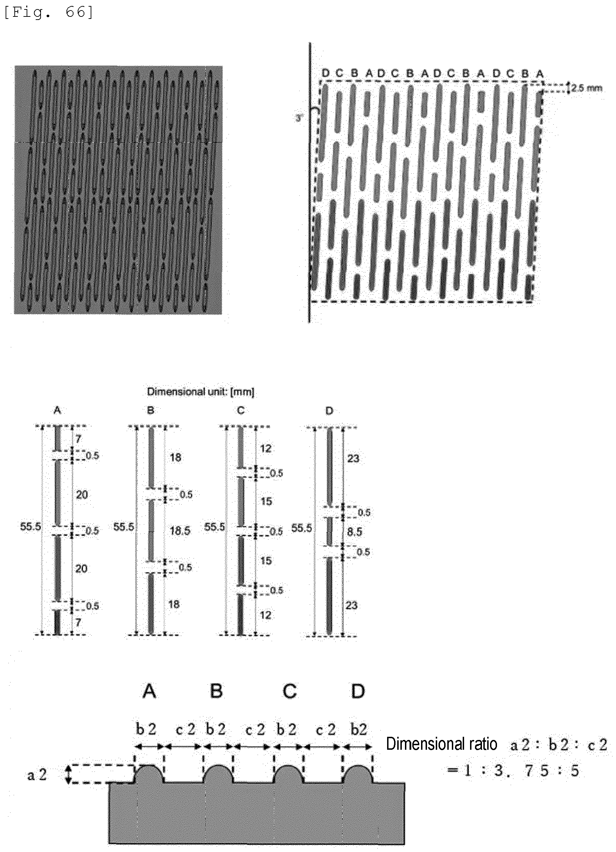

The flat membranes of the AT-2 membrane and the CT-2 membrane were each placed on a die and treated in a high frequency welding apparatus to thereby form irregularities in the AT-2 membrane and the CT-2 membrane. The high frequency welding means that an electric insulator such as a plastic material, a film, or a sheet is subjected to dielectric heating with high frequency, one type of electric wave, so that collision, oscillation, and friction occur at the molecular level inside the material to cause self-heating which allows the film to be fused or welded. The dies on which the flat membrane of the AT-2 membrane or the CT-2 membrane was placed were put on this apparatus, and the flat membranes of the AT-2 membrane and the CT-2 membrane were pressed against the dies to form irregularities. Figures 65 and 66 show schematic views and the dimensions of the dies.

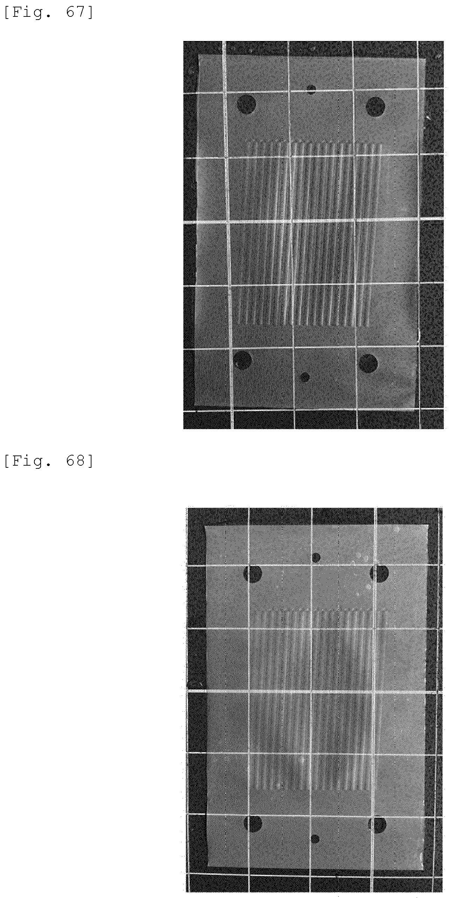

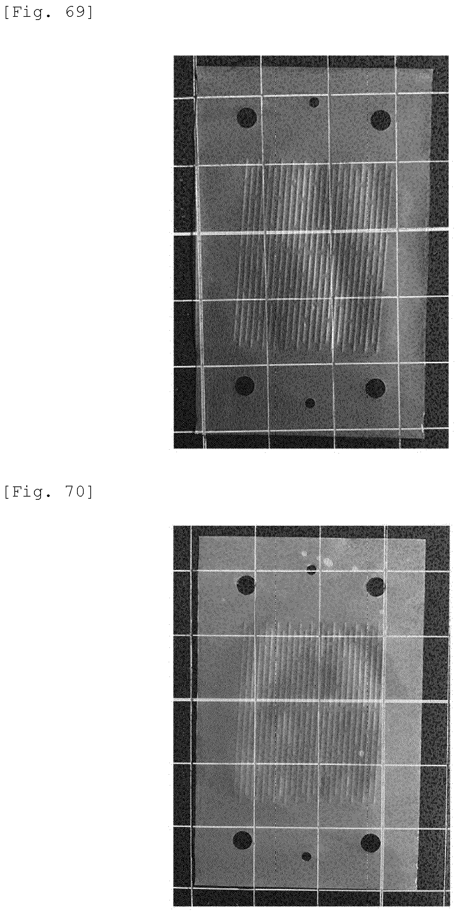

Both the membranes thus heat-pressed by high frequency dielectric heating treatment were subjected to Thomson processing in a hydraulic die cutting machine to punch out an outer frame, flow passage holes, and holes for the insertion of a bamboo skewer for positioning. In this way, an ion exchange membrane of Example 9 was prepared. Figures 67 and 68 show the CT-2 membrane and the AT-2 membrane, respectively, provided with irregularities using the die shown in Figure 65. Figures 69 and 70 show the CT-2 membrane and the AT-2 membrane, respectively, provided with irregularities using the die shown in Figure 66. The concavo-convex shape obtained using the die shown in Figure 65 (Figures 67 and 68) is a shape in which the convex parts continue and extend from the vicinity of one end to the vicinity of the other end of the ion exchange membrane, and has only the first concave parts. The concavo-convex shape obtained using the die shown in Figure 66 (Figures 69 and 70) is a shape in which a plurality of extending convex parts is arranged in the longitudinal direction from the vicinity of one end to the vicinity of the other end of the ion exchange membrane, and has the first concave parts and the second concave parts.

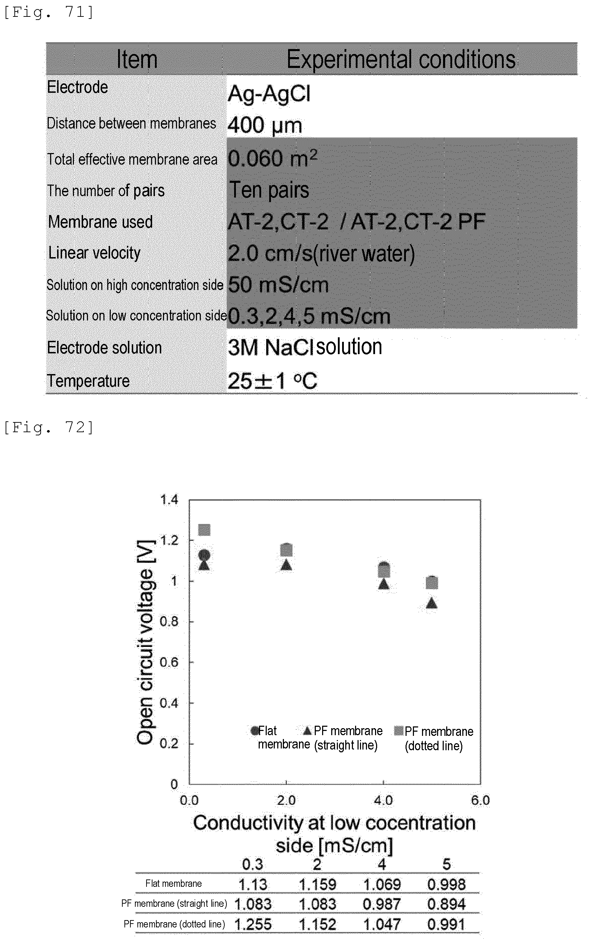

As shown in Figure 46, the CT-2 membrane and the AT-2 membrane of Example 9 provided with irregularities were alternately located between a 400 $\mu$m thick spacer on the sea water side and a spacer on the river water side, and a plurality of pairs of the resultant were sandwiched between an electrode portion having a silver electrode and an electrode portion having silver-silver chloride to prepare a RED stack. In this stack, the CT-2 membrane and the AT-2 membrane were opposed to each other such that their crests were tilted toward a direction opposite to the direction of water flow. Since the tilt of their crests with respect to the direction of water flow was set to 3 degrees, an angle formed by each other's crests was 6 degrees. The upper ends of the convex parts of the CT-2 membrane and the AT-2 membrane computationally had a distance that brought the upper ends into no contact from the heights of the convex parts of both the membranes. In Comparative Example 10, a similar stack was prepared by alternately locating the flat membranes of the CT-2 membrane and the AT-2 membrane. In this context, the spacer (R) having a mesh in an effective membrane area portion shown in Figure 62 was used on the river water side of Comparative Example 10, and the spacer (R') having no mesh in an effective membrane area portion shown in Figure 62 was used on the river water side of Example 9. Figure 71 describes the specification of this stack and the solution used. The maximum power density was determined by dividing power output by a total effective membrane area. In this context, the total effective area was determined by multiplying the area of the effective membrane area portion by 20 (10 pairs) as the number of membranes used in the RED stack, and this area was 0.060 m$^2$.

The prepared RED stacks were evaluated for power generation characteristics using the apparatus of Figure 49. Figure 50 shows an equivalent circuit of this apparatus. Voltage and current are measured by changing the value of load resistance of the apparatus while injecting simulated sea water and simulated river water to the stack. The open circuit voltage of the RED stack can thereby be measured when the load resistance is infinite. As the value of resistance is lowered, the value of current is increased and the value of voltage is decreased. The internal resistance of the stack is calculated from the slope of this current-voltage curve.

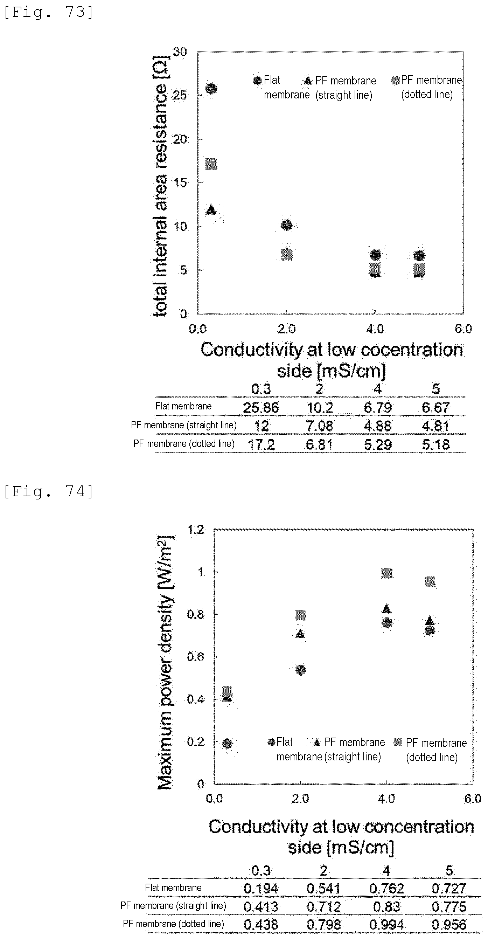

The results of evaluating the power generation characteristics are shown in Figures 72 to 74. Figure 72 is a diagram showing the relationship between the electric conductivity of a solution on the low concentration side and open circuit voltage. Figure 73 is a diagram showing the relationship between the electric conductivity of a solution on the low concentration side and RED internal resistance when maximum power output was obtained at each conductivity. Figure 74 is a diagram showing the relationship between the electric conductivity of a solution on the low concentration side and a total power density at each conductivity. Since electric conductivity is elevated with elevation in concentration of a solution, change in electric conductivity of the solution on the low concentration side indicates change in concentration of the solution on the low concentration side.

In Figures 72 to 74, the term "Flat membrane" represents the results of Comparative Example 10, the term "PF membrane (straight line)" represents the results obtained by forming irregularities using the die shown in Figure 65 in Example 9, and the term "PF membrane (dotted line)" represents the results obtained by forming irregularities using the die shown in Figure 66 in Example 9. As shown in Figure 73, the RED internal resistance at any electric conductivity of the solution on the low concentration side was lower in the examples using the ion exchange membrane provided with irregularities (PF membrane (straight line) and PF membrane (dotted line)) than in the example using the flat membrane as the ion exchange membrane. As shown in Figure 74, power output higher by 10% than that for the flat membrane was obtained in the example using the ion exchange membrane provided with irregularities using the die shown in Figure 65 (PF membrane (straight line)), and power output higher by 30% than that for the flat membrane was obtained in the example using the ion exchange membrane provided with irregularities using the die shown in Figure 66 (PF membrane (dotted line)). This presumably resulted from the open circuit voltage of the PF membrane (dotted line) that exhibited a higher value than that of the PF membrane (straight line), as shown in Figure 72. The PF membrane (straight line) has a shape in which the convex parts continue and extend from the vicinity of one end to the vicinity of the other end of the ion exchange membrane. Therefore, the supplied solution was biased under this measurement conditions (a linear velocity of 2.0 cm/s). By contrast, the PF membrane (dotted line) has a shape in which a plurality of extending convex parts is arranged in the longitudinal direction from the vicinity of one end to the vicinity of the other end of the ion exchange membrane, and the second concave parts between the convex parts adjacent to each other in the extending direction are gaped. Therefore, the solution flowed more uniformly in the convex parts and the concave parts and was therefore less biased. Thus, the open circuit voltage presumably exhibited the same value as in the case of the flat membrane having a spacer mesh. This suggests that even a low linear velocity gives high power output by providing more uniform solution flow through the PF membrane (dotted line).

**Industrial Applicability**

The ion exchange membrane and the ion exchange membrane cell of the present invention can increase the surface area of a membrane effective for ion permeation, properly decrease the electric resistance of a flow passage between membranes and the attachment of an adhering substance thereto, and further, can enhance the mechanical strength of the membrane itself. Also, the ion exchange membrane and the ion exchange membrane cell of the present invention can properly decrease electric resistance and the attachment of an adhering substance in a solution flow passage between a cation exchange membrane and an anion exchange membrane opposed to each other. The ion exchange membrane and the ion exchange membrane cell of the present invention are less deformed or damaged due to swelling over a wide range of salt concentrations and even in the case where there is a large difference in salt concentration between two solutions contacted with the membrane, and thus has high physical strength. Hence, the ion exchange membrane and the ion exchange membrane cell of the present invention can be suitably used in various fields exploiting ion exchange membranes, and can be suitably used in, particularly, electro-dialysis (ED), reverse electro-dialysis (RED) power generation, hydrogen manufacturing by RED power generation and water electrolysis in combination, and the like. ED or RED employs high concentration salt-containing water having an electric conductivity of 10 to 200 mS/cm, such as sea water, brine (natural brine or artificial brine), Na salt-containing industrial wastewater, high concentration drainage from a desalination plant, or hot spring water, and low concentration salt-containing water having an electric conductivity of 0.05 to 50 mS/cm, such as fresh water, river water, sewage treatment water, industrial water, or hot spring water, and therefore has a large difference in concentration of the salt-containing water used. Nonetheless, the ion exchange membrane and the ion exchange membrane cell of the present invention can be suitably used therein.

**Explanation of Letters or Numerals**

IEM: ion exchange membrane
IE: ion exchange layer
IEM1, IEM1': convex part (convex curve)
IEM2, IEM2': concave part (concave curve)
S: support
A, B, C, D: curve

**Claims**

1. An ion exchange membrane having a concavo-convex shape, wherein the ion exchange membrane has a flat portion in the vicinity of ends, and a convex curve and a concave curve resulting from curvatures of the ion exchange membrane itself form a convex part and a concave part, respectively, in the concavo-convex shape of the ion exchange membrane, wherein

   the convex part extends linearly or curvedly,
   the concave part between the convex parts is flat, and the concave part includes a first concave part adjacent to the convex part in the lateral direction of the convex part, along the longitudinal direction of the convex part, the convex part has an apex and a side face in the longitudinal direction, and the side face is inclined from the apex toward the first concave part.

2. The ion exchange membrane according to claim 1, wherein an end face in the longitudinal direction of the convex part adjacent to the vicinity of ends form a face inclined from the apex toward the flat portion in the vicinity of the ends adjacent thereto.

3. The ion exchange membrane according to claim 1 or 2, wherein the concave part further includes a second concave part between an end face in the longitudinal direction of a convex part and an end face in the longitudinal direction of another opposite convex part, and the convex part and the second concave part are alternately arranged side by side in the longitudinal direction from the vicinity of one end to the vicinity of the other end of the ion exchange membrane.

4. The ion exchange membrane according to claim 3, wherein the end face in the longitudinal direction of the convex part forms a face inclined from the apex toward the second concave part.

5. The ion exchange membrane according to claim 3, wherein the concavo-convex shape is formed such that as between the neighboring convex parts in the lateral direction of the convex parts, an end portion of one of the convex parts is not arranged in the lateral direction of at least one end portion in the longitudinal direction of the other convex part.

6. The ion exchange membrane according to any one of claims 1 to 5, wherein a membrane thickness of the flat portion in the vicinity of ends or the concave part is different from at least a partial membrane thickness of the convex part.

7. The ion exchange membrane according to any one of claims 1 to 6, wherein the ion exchange membrane is constituted by at least a support and an ion exchange layer disposed on both sides or on one side of the support, and is an ion exchange membrane in which a convex part and a concave part of the ion exchange membrane are formed in convex curves and concave curves, respectively, resulting from a curvature of the support itself.

8. The ion exchange membrane according to any one of claims 1 to 6, wherein the ion exchange membrane is a graft polymer.

9. An ion exchange membrane cell comprising a cation exchange membrane and an anion exchange membrane located in a manner opposed to each other, at least one of the cation exchange membrane and the anion exchange membrane being an ion exchange membrane having a concavo-convex shape, wherein the ion exchange membrane having a concavo-convex shape has a flat portion in the vicinity of ends, and convex curves and concave curves resulting from a curvature of the ion exchange membrane itself form a convex part and a concave part, respectively, in the concavo-convex shape of the ion exchange membrane, wherein the convex part extends linearly or curvedly, the concave part between the convex parts is flat, the concave part include a first concave part adjacent to the convex part in the lateral direction of the convex part, along the longitudinal direction of the convex part, the convex part has an apex and a side face in the longitudinal direction, the side face is inclined from the apex toward the first concave part, and the convex part is located so as to be opposite to the other ion exchange membrane.

10. The ion exchange membrane cell according to claim 9, wherein both the cation exchange membrane and the anion exchange membrane are ion exchange membranes having a concavo-convex shape, and the convex part of one of the ion exchange membranes is located in no contact with the other ion exchange membrane.

11. The ion exchange membrane cell according to claim 9 or 10, wherein the ion exchange membrane cell is of integrated type in which the cation exchange membrane and the anion exchange membrane are joined to a gasket so as to sandwich the gasket.

12. The ion exchange membrane cell according to claim 9 to 11, wherein each of the ion exchange membranes is a graft polymer.

13. A method for manufacturing the ion exchange membrane having a concavo-convex shape according to any one of claims 1 to 6, the method comprising any one of the following steps (i) to (iii):

(i) curving a membrane of a plastic polymer having a charged group by pressing against a mold provided with irregularities with a concave portion being flat to thereby form irregularities in the membrane;
(ii) curving a membrane of a plastic polymer having a charged group by pressing against a mold provided with irregularities with a concave portion being flat to thereby form irregularities in the membrane, followed by cross-linking of the polymer; and
(iii) curving a membrane of a plastic polymer having no charged group by pressing against a mold provided with irregularities with a concave portion being flat to thereby form irregularities in the membrane, followed by introduction of a charged group.

14. A method for manufacturing the ion exchange membrane having a concavo-convex shape according to claim 7, the method comprising any one of the following steps (A) to (D):

(A) disposing a polymer layer having no charged group on both sides or on one side of a plastic support, introducing a charged group to the polymer layer to thereby form a plastic support in which a plastic polymer layer having the charged group is disposed on both sides or on one side, and curving the support by pressing against a mold provided with irregularities with a concave portion being flat to thereby form irregularities in the support;
(B) curving a plastic support by pressing against a mold provided with irregularities with a concave portion being flat to thereby form irregularities in the support, disposing a polymer layer having no charged group on both sides or on one side of the support thus provided with the irregularities, and introducing a charged group to the polymer layer to thereby dispose the polymer layer having the charged group on both sides or on one side of the support;

(C) curving a plastic support in which a plastic polymer layer having a charged group is disposed on both sides or on one side by pressing against a mold provided with irregularities with a concave portion being flat to thereby form irregularities in the support; or curving a plastic support in which a plastic polymer layer having no charged group is disposed on both sides or on one side by pressing against a mold provided with irregularities to thereby form irregularities in the support, followed by introduction of a charged group; and

(D) curving a plastic support by pressing against a mold provided with irregularities with a concave portion being flat to thereby form irregularities in the support, and disposing a polymer layer having a charged group on both sides or on one side of the support thus provided with the irregularities; or disposing a plastic polymer layer having no charged group on one side or on both sides of a plastic support, introducing a charged group, followed by formation of irregularities; or disposing a plastic polymer layer having no charged group on one side or on both sides of a plastic support, and forming irregularities, followed by introduction of a charged group.

15. A method for manufacturing the ion exchange membrane according to claim 7, comprising disposing a plastic polymer layer having a charged group on both sides or on one side of a plastic support, while cross-linking the polymer layer, and then curving the support by pressing against a mold provided with irregularities with flat concave parts to thereby form irregularities in the support.

16. A method for manufacturing the ion exchange membrane having a concavo-convex shape according to claim 8, comprising curving a polymeric film by pressing against a mold form provided with irregularities to thereby form irregularities in the polymeric film, followed by graft polymerization to thereby convert the polymeric film into an ion exchange membrane.

17. A method for manufacturing the ion exchange membrane having a concavo-convex shape according to claim 8, comprising graft-polymerizing a polymeric film, and then curving the polymeric film by pressing against a mold form provided with irregularities to thereby convert the polymeric film into an ion exchange membrane.

[Fig. 1]

Sea water

Direct current power

Electric power → ED stack

High concentration salt solution: DS

Common salt

Low concentration salt solution: FS

Drinking water

Sea water

Fresh water

Concentrated salt water

: CEM    : Cation (Na⁺)

: AEM    : Anion (Cl⁻)

[Fig. 2]

Fresh water

High concentration salt solution: DS

Low concentration salt solution: FS

RED stack → Electric power

Sea water

Drainage

Electrode: convert ion current to electric current

Technique of directly converting SGE into electric power through ion exchange membrane

Drainage    : CEM    : Cation (Na⁺)

: AEM    : Anion (Cl⁻)

[Fig. 3]

CEM: Cation exchange membrane
AEM: Anion exchange membrane
⊕ : Cation (Na+, etc.)
● : Anion (Cl-, etc.)

Electrode liquid

Electrode

Water discharge outlet

Electrode liquid

Electrode

Sea water (DS) inlet

Fresh water (FS) inlet

Several hundreds to several thousands of cells (several tens to several hundreds of V)

[Fig. 4]

Spacer mesh    Gasket

CEM    AEM    CEM

Water with low salt concentration (exit)

Water with high salt concentration (exit)

Water with low salt concentration (enter)

Water with high salt concentration (enter)

Flow passage spacer on high salt concentration side

Flow passage spacer on low salt concentration side

1 cell

Cation exchange membrane    +    Gasket + spacer mesh    +    Anion exchange membrane

[Fig. 5]

High concentration water

Flow passage on high concentration side

CEM

↓ Cation diffusion

↑ Anion diffusion

Low concentration water

Flow passage on low concentration side

AEM

Spacer mesh

Contaminating substance

High concentration water

Flow passage on high concentration side

[Fig. 6]

↓ Cation diffusion

↑ Anion diffusion

CEM

Low concentration water

Conductive spacer (cationic)

Flow passage on low concentration side

Contaminating substance

AEM

Conductive spacer (anionic)

[Fig. 7]

Salt water flows in direction perpendicular to plane of paper of the drawing so as to pass through the plane of paper

AEM

↓ Cation diffusion

↑ Anion diffusion

Contaminating substance

Profiled CEM

low passage on low concentration side

No ion flows in portion indicated by

[Fig. 8]

Ion exchange layer

Support mesh

AEM in flat membrane form

Profiled CEM

(i) Convex part has low strength

(ii) Contaminant attaches to root of Convex part

(iii) No ion flows in contact portion

A portion of profiled cell (semi-cell)

(iv) Membrane thickness increases in Convex part

Flow passage on fresh water side (solution flows in direction perpendicular to plane of paper of the drawing)

(v) Cross-sectional area of flow passage decreases

[Fig. 9]

(A)

(B)

[Fig. 10]

(a)

(b)

Water feed port

(c)

(d)

Lateral view of
this portion

[Fig. 11]

[Fig. 12]

[Fig. 13]

[Fig. 14]

[Fig. 15]

[Fig. 16]

[Fig. 17]

[Fig. 18]

[Fig. 19]

[Fig. 20]

PF semi-cell of integrated type in which
CEM and AEM are in no contact with
each other

[Fig. 21]

Blue line represents top of convex part

Flow distribution portion also keeps interval through corrugated structure

CEM

Gasket

AEM

Top lines of convex parts in CEM and AEM have clockwise and counterclockwise angles against each other with respect to direction of solution

[Fig. 22]

Interval is kept by placing mesh spacer in flow distribution portion of gasket

Flow distribution portion has no concavo-convex structure

Cation exchange membrane

Gasket

Anion exchange membrane

[Fig. 23]

[Fig. 24]

Spacer mesh

Flow passage on high concentration side

↓ Cation diffusion

Flow passage on low concentration side

↑ Anion diffusion

● Contaminating substance

Spacer mesh

Flow passage on high concentration side

[Fig. 25]

[Fig. 26]

[Fig. 27]

[Fig. 28]

[Fig. 29]

[Fig. 30]

(a)

(b)

(c)

[Fig. 31]

(a)

(b)

(c)

[Fig. 32]

(a)

(b)

(c)

[Fig. 33]

[Fig. 34]

[Fig. 35]

[Fig. 36]

[Fig. 37]

# Membrane resistance (Rm)

[Fig. 38]

Power supply apparatus

Experimental conditions

| | |
|---|---|
| •Solution | 0.5 M NaCl |
| •Measurement temperature | 25 [°C] |
| •Effective membrane area | 8 cm$^2$ |
| •Electric current density | 10 mA/cm$^2$ |
| •Measurement time | 75 min |

Coulomb meter

Sample membrane

Magnetic stirrer

$$t_+ = \Delta m / E_a$$

$$t_- = 1 - \Delta m / E_a$$

| | | |
|---|---|---|
| $t$ | : Transference number | [-] |
| $E_a$ | : Theoretical equivalent | $= I \cdot t / F$ |
| $\Delta m$ | : Transfer equivalent | |
| $F$ | : Faraday constant | [Cmol$^{-1}$] |

[Fig. 39]

| | Type of membrane | | Membrane charge density[1] [mol/dm$^3$] | Membrane resistance[2] [Ωcm$^2$] | Transference number[2] [-] | Water content ratio [-] | Ion exchange capacity [meq/g] | Membrane thickness[3] [μm] |
|---|---|---|---|---|---|---|---|---|
| AEM | Neosepta® AMX | ASTOM Corp. | 1.53 | 2.40 | 0.98 | 0.24 | 1.40 | 140 |
| | AEM-1 | | 0.98 | 1.25 | 0.98 | 0.29 | 1.03 | 36 |
| CEM | Neosepta® CMX | ASTOM Corp. | 1.86 | 2.70 | 0.98 | 0.27 | 1.50 | 170 |
| | CEM-1 | | 0.86 | 0.18 | 0.94 | 0.37 | 2.42 | 36 |

1) Measured in 0.1-0.5 M and 0.3-0.5 M KCl solutions
2) 2)Measured in 0.5 M NaCl solution
3) 3)Immersed in 0.5 M NaCl solution for 24 hr and then measured

[Fig. 40]

[Fig. 41]

Square in membrane represents 10 mm on ruler

The number of convex
parts: 18
Slope: 3 degrees

[Fig. 42]

AEM-1          CEM-1

[Fig. 43]

PF-A           PF-C

[Fig. 44]

(a)

(b)

[Fig. 45]

Membrane thickness

Projection height

Portion A  Portion B

Table: Dimension of each portion (unit: μm)

| Sample name | Portion A | Portion B | Convex part height | Membrane thickness |
|---|---|---|---|---|
| PF-C | 1348 | 1092 | 75 | 30 |
| PF-A | 1338 | 1012 | 243 | 30 |

[Fig. 46]

Example
(using PF membrane)

Comparative Example
(using flat membrane)

[Fig. 47]

Spacer (S) on sea water side

Spacer (R) on river water side
for comparative membrane

(R´)

All-mesh
Thickness: 1000 μm

All-mesh
Thickness: 1000 μm

Gasket

[Fig. 48]

Table Specification of RED stack used in power generation evaluation

| Item | Experimental conditions |
|---|---|
| Electrode | Ag-AgCl |
| Distance between membranes | 1000 μm |
| Total effective membrane area | 0.030 m² |
| The number of pairs | Five pairs |
| Membrane used | AEM-1/CEM-1 (flat membrane), PF-C/PF-A (PF membrane) AMX/CMX (end membrane) |
| Linear velocity | 2.0 cm/s |
| Solution on high concentration side | 50 mS/cm NaCl solution |
| Solution on low concentration side | 0.3 mS/cm NaCl solution |
| Electrode solution | 3M NaCl solution |
| Temperature | 25±1 °C |

[Fig. 49]

[Fig. 50]

■ Equivalent circuit of RED system

RED stack

Open circuit voltage ($V_{oc}$) and internal resistance ($R_{int}$) are determined from intercept and slope, respectively, of voltage-current curve

■ Voltage (V)-current (I), power output curve

[Fig. 51]

Results about flat membrane

[Fig. 52]

| R [Ω] | I [A] | V [V] | P [W] |
|---|---|---|---|
| 3.3 | 0.017 | 0.067 | 0.0011 |
| 5.1 | 0.016 | 0.096 | 0.0015 |
| 6.8 | 0.016 | 0.126 | 0.0020 |
| 10 | 0.015 | 0.168 | 0.0025 |
| 51 | 0.008 | 0.458 | 0.0037 |
| 100 | 0.005 | 0.583 | 0.0029 |
| 200 | 0.000 | 0.683 | 0.0000 |
| OPEN | 0.000 | 0.826 | 0.0000 |

| | | Low concentration | High concentration |
|---|---|---|---|
| Conductivity (inlet) | [mS/cm] | 0.2620 | 50.5 |
| Conductivity (outlet) | [mS/cm] | 3.750 | 49.5 |
| Linear velocity (start) | [cm/s] | 2.0 | 2.0 |
| Linear velocity (finish) | [cm/s] | 2.0 | 2.0 |
| Flow rate | [L/min] | 0.273 | 0.204 |
| Pressure | [kPa] | 3.5 | 4.2 |

[Fig. 53]

Results about PF membrane

[Fig. 54]

| R [Ω] | I [A] | V [V] | P [W] |
|---|---|---|---|
| 3.3 | 0.045 | 0.166 | 0.0075 |
| 5.1 | 0.039 | 0.217 | 0.0085 |
| 6.8 | 0.035 | 0.263 | 0.0092 |
| 10 | 0.029 | 0.317 | 0.0092 |
| 51 | 0.009 | 0.528 | 0.0048 |
| 100 | 0.005 | 0.579 | 0.0029 |
| 200 | 0.000 | 0.617 | 0.0000 |
| OPEN | 0.000 | 0.656 | 0.0000 |

| | | Low concentration | High concentration |
|---|---|---|---|
| Conductivity (inlet) | [mS/cm] | 0.2780 | 50.3 |
| Conductivity (outlet) | [mS/cm] | 2.450 | 49.3 |
| Linear velocity (start) | [cm/s] | 2.0 | 2.0 |
| Linear velocity (finish) | [cm/s] | 2.0 | 2.0 |
| Flow rate | [L/min] | 0.286 | 0.210 |
| Pressure | [kPa] | 5.5 | 5.8 |

[Fig. 55]

1) Maximum power density = Maximum power output / Total membrane area (0.03 $m^2$)

| Name | Internal resistance [Ω] | Maximum power output [mW] | Maximum power density[1) [W/m^2] |
|---|---|---|---|
| Comparative Example | 40.5 | 3.66 | 0.122 |
| Example | 10.6 | 9.21 | 0.307 |

[Fig. 56]

PF-C$_g$       PF-A$_g$

[Fig. 57]

Flat－C       Flat－A

[Fig. 58]

[Fig. 59]

(a)

(b)

[Fig. 60]

[Fig. 61]

RED stack used in power output measurement

[Fig. 62]

Spacer (R) on river water side
for Comparative Example

Spacer (R') on river
water side for Example

All-mesh
Thickness: 200 μm × 2

No mesh within effective membrane area
Thickness: 200 μm × 2

[Fig. 63]

[Fig. 64]

[Fig. 65]

Dimensional ratio   a1 : b1 : c1 = 1 : 7.5 : 4.5

[Fig. 66]

Dimensional unit: [mm]

Dimensional ratio a2 : b2 : c2
= 1 : 3.75 : 5

[Fig. 67]

[Fig. 68]

[Fig. 69]

[Fig. 70]

[Fig. 71]

| Item | Experimental conditions |
|---|---|
| Electrode | Ag-AgCl |
| Distance between membranes | 400 μm |
| Total effective membrane area | $0.060\ m^2$ |
| The number of pairs | Ten pairs |
| Membrane used | AT-2,CT-2 / AT-2,CT-2 PF |
| Linear velocity | 2.0 cm/s(river water) |
| Solution on high concentration side | 50 mS/cm |
| Solution on low concentration side | 0.3,2,4,5 mS/cm |
| Electrode solution | 3M NaCl solution |
| Temperature | 25±1 °C |

[Fig. 72]

| | 0.3 | 2 | 4 | 5 |
|---|---|---|---|---|
| Flat membrane | 1.13 | 1.159 | 1.069 | 0.998 |
| PF membrane (straight line) | 1.083 | 1.083 | 0.987 | 0.894 |
| PF membrane (dotted line) | 1.255 | 1.152 | 1.047 | 0.991 |

[Fig. 73]

| | 0.3 | 2 | 4 | 5 |
|---|---|---|---|---|
| Flat membrane | 25.86 | 10.2 | 6.79 | 6.67 |
| PF membrane (straight line) | 12 | 7.08 | 4.88 | 4.81 |
| PF membrane (dotted line) | 17.2 | 6.81 | 5.29 | 5.18 |

[Fig. 74]

| | 0.3 | 2 | 4 | 5 |
|---|---|---|---|---|
| Flat membrane | 0.194 | 0.541 | 0.762 | 0.727 |
| PF membrane (straight line) | 0.413 | 0.712 | 0.83 | 0.775 |
| PF membrane (dotted line) | 0.438 | 0.798 | 0.994 | 0.956 |

| INTERNATIONAL SEARCH REPORT | International application No. |
|---|---|
| | **PCT/JP2022/019415** |

**A.    CLASSIFICATION OF SUBJECT MATTER**

*B01D 61/46*(2006.01)i; *C08J 5/22*(2006.01)i; *B01J 39/04*(2017.01)i; *B01J 39/05*(2017.01)i; *B01J 39/19*(2017.01)i; *B01J 39/20*(2006.01)i; *B01J 41/04*(2017.01)i; *B01J 41/05*(2017.01)i; *B01J 41/13*(2017.01)i; *B01J 41/14*(2006.01)i; *B01J 47/12*(2017.01)i; *C25B 13/02*(2006.01)i; *C25B 13/08*(2006.01)i

FI:    B01J47/12; B01D61/46 500; B01J39/04; B01J39/05; B01J39/19; B01J41/04; B01J41/13; B01J41/05; B01J39/20; B01J41/14; C25B13/02 301; C25B13/08 301; C08J5/22 CEX

According to International Patent Classification (IPC) or to both national classification and IPC

**B.    FIELDS SEARCHED**

Minimum documentation searched (classification system followed by classification symbols)

C02F1/42; B01J47/12; B01D61/00; B01J39/00; B01J41/00; C08J5/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| P, X | WO 2021/090919 A1 (YAMAGUCHI UNIVERSITY) 14 May 2021 (2021-05-14) <br> claims 1-10, fig. 1-43 | 1-17 |
| A | WO 2005/009596 A1 (UNIVERSITAT STUTTGART) 03 February 2005 (2005-02-03) <br> claim 1, fig. 3-6 | 1-17 |
| A | JP 2004-507342 A (IONIX INC.) 11 March 2004 (2004-03-11) <br> paragraph [0063], fig. 9A, 9B | 1-17 |
| A | CN 2561499 Y (OUMEI ENVIRONMENT ENGINEERING CO., LTD., ZHEJIANG PROV.) <br> 23 July 2003 (2003-07-23) <br> fig. 3, 4 | 1-17 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 June 2022** | **12 July 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

### INTERNATIONAL SEARCH REPORT
**Information on patent family members**

| International application No. |
| --- |
| **PCT/JP2022/019415** |

| Patent document cited in search report | | | Publication date (day/month/year) | Patent family member(s) | | | Publication date (day/month/year) |
| --- | --- | --- | --- | --- | --- | --- | --- |
| WO | 2021/090919 | A1 | 14 May 2021 | (Family: none) | | | |
| WO | 2005/009596 | A1 | 03 February 2005 | DE | 10332789 | A | |
| JP | 2004-507342 | A | 11 March 2004 | US | 2004/0060823 | A1 | |
| | | | | paragraph [0102], fig. 9A, 9B | | | |
| | | | | WO | 2002/014224 | A1 | |
| | | | | EP | 1307406 | A | |
| CN | 2561499 | Y | 23 July 2003 | (Family: none) | | | |

Form PCT/ISA/210 (patent family annex) (January 2015)

**EP 4 331 710 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014014776 A

- JP 2006175408 A

**Non-patent literature cited in the description**

- **VERMAAS et al.** *J. Membr. Sci,* 2011, vol. 385-386, 234-242
- **PAWLOWSKI et al.** *J. Membr. Sci.,* 2017, vol. 531, 111-121

- **PAWLOWSKI et al.** *Int. J. Mol. Sci,* 2019, vol. 20, 165